# EUROPEAN PATENT APPLICATION

(11) **EP 4 697 829 A1**
(43) Date of publication of application: **18.02.2026**
(21) Application number: 24806426.3
(22) Date of filing: 08.05.2024
(51) Int. Cl.: H04W 72/0446

(54) **COMMUNICATION METHOD AND RELATED APPARATUS**

(30) Priority: 12.05.2023 CN 202310539736
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LONG, Yi, Shenzhen, Guangdong 518129 (CN); XIE, Xinqian, Shenzhen, Guangdong 518129 (CN)
(74) Representative: MERH-IP Matias Erny Reichl Hoffmann Patentanwälte PartG mbB
(86) International application number: PCT/CN2024/091714
(87) International publication number: WO 2024/235074

(57) **Abstract**

A communication method and a related apparatus are provided. In the method, an SSB-RO group association pattern period (namely, a first time period) in a PRACH repetition sending scenario is defined. To be specific, the first time period is shortest duration in all duration that satisfies that mapping between N SSBs and M RO groups is performed at least once and that the mapping between the N SSBs and the M RO groups is the same in each of K consecutive first time periods. The first time period may be determined based on an SSB configuration period and/or a PRACH configuration period. The method in this application helps reduce implementation complexity.

## Description

This application claims priority to Chinese Patent Application No. 202310539736.5, filed with the China National Intellectual Property Administration on May 12, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Random access is a process of establishing a radio link between a terminal device and an access network device. In a contention-based random access procedure, the terminal device randomly selects, based on received system information sent by the access network device and an index of a selected synchronization signal and PBCH block (synchronization signal and PBCH block, SSB), one of random access occasions (RACH occasions, ROs) associated with the index of the SSB, to send a physical random access channel (physical random access channel, PRACH) to the access network device, where the PRACH carries a preamble (preamble). One SSB index may be associated with one or more ROs, or a plurality of SSB indexes may be associated with one RO. Further, there is a mapping relationship between an SSB and an RO. The mapping relationship between the SSB and the RO is the same in association pattern periods (association pattern periods).

It should be noted that, because beam propagation suffers from a high loss and is vulnerable to an environment, when the terminal device is far away from the access network device or an ambient environment is unfavorable for beam transmission, PRACH sending performed once on one RO may cause the terminal device to fail to reliably access a network. Therefore, to increase an uplink coverage capability of the PRACH, PRACH repetition sending is proposed in a related technology. It may be understood that a quantity of needed ROs is equal to a quantity of times of PRACH repetition sending. Therefore, how to determine an SSB-to-RO group (SSB-RO group for short) association pattern period in a PRACH repetition sending scenario is an urgent problem to be resolved.

### SUMMARY

This application provides a communication method and a related apparatus, to determine an SSB-RO group association pattern period in a PRACH repetition sending scenario, so that implementation complexity can be reduced.

According to a first aspect, this application provides a communication method, performed by a communication apparatus. The communication apparatus may be a terminal device, or may be a module in the terminal device. In the method, the terminal device receives a system information block SIB1 from an access network device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period. This is performed by the terminal device. In the method, the terminal device determines a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In this application, an SSB-RO group association pattern period (namely, the first time period) in a PRACH repetition sending scenario is defined. To be specific, the first time period is shortest duration in all duration that satisfies that mapping between the N SSBs and the M RO groups is performed at least once and that the mapping between the N SSBs and the M RO groups is the same in each of the K consecutive first time periods. This can ensure that a pattern periodically appears, and helps reduce implementation complexity. For example, the first time period may be determined based on the SSB configuration period and/or the PRACH configuration period.

In a possible implementation, the determining the first time period based on the SSB configuration period and/or the PRACH configuration period includes:
determining a second time period based on the SSB configuration period and/or the PRACH configuration period, where
the first time period includes one or more second time periods, and mapping between the N SSBs and the M RO groups is performed at least once in the second time period.

In this implementation, the second time period is first determined, and then the first time period is determined. This can ensure that the finally determined first time period is periodic.

In a possible implementation, the first time period or the second time period is Z1 times the PRACH configuration period, Z1 is a value in a first value set, and steps between values included in the first value set are the same, where Z1 is a positive integer.

In this implementation, the steps between the values in the first value set are the same. This can ensure that a granularity of the first time period is constant, reduces the granularity of the first time period, and helps increase a quantity of valid ROs.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In this implementation, the value of the first value set can be X (X is the integer greater than or equal to 16) at most. When more than 160 ms is needed to complete the mapping between the N SSBs and the RO groups once, a value of the first time period can be ensured, to avoid a case in which the value of the first time period cannot be defined.

In a possible implementation, if a time domain resource for SSB transmission and a time domain resource for PRACH transmission overlap, and the SSB configuration period is less than or equal to the PRACH configuration period, Z1 is the value in the first value set.

In this implementation, when the time domain resource for SSB transmission and the time domain resource for PRACH transmission overlap, and the SSB configuration period is less than or equal to the PRACH configuration period, Z1 is determined in the first value set. This can ensure, in a shorter time period, that an RO group pattern repeatedly appears, and reduces a quantity of invalid ROs.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In this implementation, when the time domain resource for SSB transmission and the time domain resource for PRACH transmission overlap, and the SSB configuration period is greater than the PRACH configuration period, Z1 is determined in a first value set. This can ensure that the selected value of Z1 can satisfy a requirement for defining an accurate first time period, facilitates forward compatibility of a protocol, and has high applicability.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In this implementation, a maximum value of the first time period is increased, to ensure that, in the PRACH repetition sending scenario, when the more than 160 ms is needed to complete the mapping between the N SSBs and the RO groups once, the value of the first time period can be ensured, to avoid the case in which the value of the first time period cannot be defined.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In this implementation, shortest duration in all duration that satisfies that mapping between the N SSBs and the M RO groups is performed at least once is used as a value of the second time period. This can ensure, in the shorter time period, that the RO group pattern repeatedly appears, reduces the quantity of invalid ROs, and improves resource utilization.

In a possible implementation, the first time period is Z2 times a least common multiple of the SSB configuration period and the PRACH configuration period, where Z2 is a positive integer.

In this implementation, a value of the first time period may be Z2 times the least common multiple of the SSB configuration period and the PRACH configuration period. This can also ensure, in a shorter time period, that an RO group pattern repeatedly appears, reduces a quantity of invalid ROs, and improves resource utilization.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In this implementation, the shortest duration in all the duration that satisfies that mapping between the N SSBs and the M RO groups is performed at least once and that the mapping between the N SSBs and the M RO groups is the same in each of the K consecutive first time periods is used as the value of the first time period. This can ensure, in the shorter time period, that the RO group pattern repeatedly appears, reduces the quantity of invalid ROs, and improves the resource utilization.

In a possible implementation, an RO at an earliest time domain position in the RO group is a first RO, an RO other than the first RO is a second RO, and a sum of distances between time domain positions of second ROs and the time domain position of the first RO is the smallest.

In this implementation, a feature of the ROs in the RO group in time domain is defined. To be specific, a distance in time domain is the shortest. This helps complete preamble repetition sending in a shorter time period, and reduces a delay of completing the preamble repetition sending once.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In this implementation, a feature of the ROs in the RO group in frequency domain is defined. To be specific, the ROs have the same frequency domain ranking in frequency domain. This reduces the implementation complexity. In addition, in some cases, for example, when an RO quantity configured in frequency domain is equal to 8 (that is, msg1-FDM=8), the quantity N of configured SSBs is equal to 2, and one RO is associated with one SSB, each RO group is located at a same frequency position. Therefore, this helps improve coherent combining detection performance.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In this implementation, the index of the RO group is defined. Operability is high, and implementation is easy.

In a possible implementation, the M RO groups include a first RO group and a second RO group, and the method further includes:
when a frequency domain position of a third RO in a first RO set is the same as a frequency domain position of at least one fourth RO in the first RO set, determining the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In this implementation, when there are two RO sets that satisfy the conditions, frequency domain positions of ROs that are in the two RO sets and that satisfy a frequency hopping condition are exchanged, to generate two corresponding RO groups. It should be noted that, through frequency hopping processing, frequency positions of ROs included in the RO groups may be different. This helps increase a frequency diversity gain during the preamble repetition sending, that is, reduce a probability that all channels used for preamble sending are in deep fading when a preamble is sent a plurality of times.

In a possible implementation, the method further includes:
when a frequency domain position of a third RO in a first RO set is the same as a frequency domain position of at least one fourth RO in the first RO set, performing a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1. Optionally, this implementation may be alternatively described as follows:

In a possible implementation, the method further includes:
when a frequency domain position of a third RO in a first RO set is the same as a frequency domain position of at least one fourth RO in the first RO set, determining (V+1) RO groups, where the M RO groups include the (V+1) RO groups, where
there are V RO sets, where V is an integer greater than 1; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set;
when i is a positive integer greater than or equal to 1 and less than or equal to V, an i^{th} RO set in (V+1) RO sets is an RO set whose appearance ranking in the V RO sets in frequency domain is i;
when i is 0, the i^{th} RO set in the (V+1) RO sets is the first RO set, and the first RO set is an RO set whose appearance ranking is before or after the V RO sets in frequency domain; and
ROs in an i^{th} RO group in the (V+1) RO groups include an RO in the i^{th} RO set in the (V+1) RO sets other than at least one sixth RO, and further include at least one fifth RO in an ((i+p) mod (V+1))^{th} RO set in the (V+1) RO sets, where
p is a positive integer, the at least one fifth RO has a same time domain position as the at least one fourth RO, and the at least one sixth RO has the same time domain position as the at least one fourth RO.

It should be noted that p may be understood as a step of a cyclic shift, and i may be understood as the frequency domain ranking.

In this implementation, when there are three or more RO sets that satisfy the conditions, the cyclic shift in frequency domain is performed on ROs that are in the three RO sets and that satisfy a frequency hopping condition, to generate corresponding RO groups. Such frequency hopping processing also helps improve a frequency diversity gain.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In this implementation, a plurality of frequency hopping solutions can be implemented, and RO group diversity is enriched.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO. Optionally, the time domain position of the third RO may alternatively be later than the time domain position of the at least one fourth RO.

In this implementation, ROs at later time domain positions in ROs are swapped, which complies with a linear timing operation, is easy to operate, and is easy to understand. ROs whose positions are swapped are ROs at earlier time domain positions, so that more frequency hopping solutions can be implemented, and the RO group diversity is enriched.

According to a second aspect, this application provides a communication method, performed by a communication apparatus. The communication apparatus may be an access network device, or may be a module in the access network device. In the method, the access network device sends a system information block SIB1 to a terminal device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period.

The access network device determines a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In a possible implementation, the determining the first time period based on the SSB configuration period and/or the PRACH configuration period includes:
determining a second time period based on the SSB configuration period and/or the PRACH configuration period, where
the first time period includes one or more second time periods, and mapping between the N SSBs and the M RO groups is performed at least once in the second time period.

In a possible implementation, the first time period or the second time period is Z1 times the PRACH configuration period, Z1 is a value in a first value set, and steps between values included in the first value set are the same, where Z1 is a positive integer.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In a possible implementation, if a time domain resource for SSB transmission and a time domain resource for PRACH transmission overlap, and the SSB configuration period is less than or equal to the PRACH configuration period, Z1 is the value in the first value set.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In a possible implementation, the first time period is Z2 times a least common multiple of the SSB configuration period and the PRACH configuration period, where Z2 is a positive integer.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In a possible implementation, an RO at an earliest time domain position in the RO group is a first RO, an RO other than the first RO is a second RO, and a sum of distances between time domain positions of second ROs and the time domain position of the first RO is the smallest.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In a possible implementation, the M RO groups include a first RO group and a second RO group, and the method further includes:
when a frequency domain position of a third RO in a first RO set is the same as a frequency domain position of at least one fourth RO in the first RO set, determining the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In a possible implementation, the method further includes:
when a frequency domain position of a third RO in a first RO set is the same as a frequency domain position of at least one fourth RO in the first RO set, performing a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1. Optionally, this implementation may be alternatively described as follows:

In a possible implementation, the method further includes:
when a frequency domain position of a third RO in a first RO set is the same as a frequency domain position of at least one fourth RO in the first RO set, determining (V+1) RO groups, where the M RO groups include the (V+1) RO groups, where
there are V RO sets, where V is an integer greater than 1; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set;
when i is a positive integer greater than or equal to 1 and less than or equal to V, an i^{th} RO set in (V+1) RO sets is an RO set whose appearance ranking in the V RO sets in frequency domain is i;
when i is 0, the i^{th} RO set in the (V+1) RO sets is the first RO set, and the first RO set is an RO set whose appearance ranking is before or after the V RO sets in frequency domain; and
ROs in an i^{th} RO group in the (V+1) RO groups include an RO in the i^{th} RO set in the (V+1) RO sets other than at least one sixth RO, and further include at least one fifth RO in an ((i+p) mod (V+1))^{th} RO set in the (V+1) RO sets, where
p is a positive integer, the at least one fifth RO has a same time domain position as the at least one fourth RO, and the at least one sixth RO has the same time domain position as the at least one fourth RO.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO.

According to a third aspect, this application provides a communication apparatus. The communication apparatus may be a terminal device, or may be a module in the terminal device. The apparatus includes:
a transceiver unit, configured to receive a system information block SIB1 from an access network device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period; and
a processing unit, configured to determine a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In a possible implementation, when determining the first time period based on the SSB configuration period and/or the PRACH configuration period, the processing unit is configured to:
determine a second time period based on the SSB configuration period and/or the PRACH configuration period, where
the first time period includes one or more second time periods, and mapping between the N SSBs and the M RO groups is performed at least once in the second time period.

In a possible implementation, the first time period or the second time period is Z1 times the PRACH configuration period, Z1 is a value in a first value set, and steps between values included in the first value set are the same, where Z1 is a positive integer.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In a possible implementation, if a time domain resource for SSB transmission and a time domain resource for PRACH transmission overlap, and the SSB configuration period is less than or equal to the PRACH configuration period, Z1 is the value in the first value set.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In a possible implementation, the first time period is Z2 times a least common multiple of the SSB configuration period and the PRACH configuration period, where Z2 is a positive integer.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In a possible implementation, an RO at an earliest time domain position in the RO group is a first RO, an RO other than the first RO is a second RO, and a sum of distances between time domain positions of second ROs and the time domain position of the first RO is the smallest.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In a possible implementation, the M RO groups include a first RO group and a second RO group, and the processing unit is further configured to:
when a frequency domain position of a third RO in a first RO set is the same as a frequency domain position of at least one fourth RO in the first RO set, determine the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In a possible implementation, the processing unit is further configured to:
when a frequency domain position of a third RO in a first RO set is the same as a frequency domain position of at least one fourth RO in the first RO set, perform a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO.

According to a fourth aspect, this application provides a communication apparatus. The communication apparatus may be a terminal device, or may be a module in the terminal device. The apparatus includes:
a transceiver unit, configured to send a system information block SIB1 to a terminal device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period; and
a processing unit, configured to determine a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In a possible implementation, when determining the first time period based on the SSB configuration period and/or the PRACH configuration period, the processing unit is configured to:
determine a second time period based on the SSB configuration period and/or the PRACH configuration period, where
the first time period includes one or more second time periods, and mapping between the N SSBs and the M RO groups is performed at least once in the second time period.

In a possible implementation, the first time period or the second time period is Z1 times the PRACH configuration period, Z1 is a value in a first value set, and steps between values included in the first value set are the same, where Z1 is a positive integer.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In a possible implementation, if a time domain resource for SSB transmission and a time domain resource for PRACH transmission overlap, and the SSB configuration period is less than or equal to the PRACH configuration period, Z1 is the value in the first value set.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In a possible implementation, the first time period is Z2 times a least common multiple of the SSB configuration period and the PRACH configuration period, where Z2 is a positive integer.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In a possible implementation, an RO at an earliest time domain position in the RO group is a first RO, an RO other than the first RO is a second RO, and a sum of distances between time domain positions of second ROs and the time domain position of the first RO is the smallest.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In a possible implementation, the M RO groups include a first RO group and a second RO group, and the processing unit is further configured to:
when a frequency domain position of a third RO in a first RO set is the same as a frequency domain position of at least one fourth RO in the first RO set, determine the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In a possible implementation, the processing unit is further configured to:
when a frequency domain position of a third RO in a first RO set is the same as a frequency domain position of at least one fourth RO in the first RO set, perform a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO.

According to a fifth aspect, this application provides a communication apparatus. The communication apparatus includes a processor, and the processor is configured to execute a computer program, so that the communication apparatus performs the method according to any one of the first aspect or the second aspect.

In a possible design, the communication apparatus may be a chip implementing the method in the first aspect or the second aspect or a device including the chip.

In a possible design, the communication apparatus further includes a transceiver. The processor is coupled to the transceiver.

In a possible design, the communication apparatus further includes a memory. The processor is coupled to the memory, the memory stores the computer program, and the processor is further configured to invoke the computer program in the memory.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to the communication apparatus other than the communication apparatus. The processor is configured to implement the method according to any one of the first aspect or the second aspect by using a logic circuit or by executing code instructions.

According to a seventh aspect, this application provides a computer-readable storage medium. The storage medium stores a computer program or instructions. When the computer program or the instructions are executed by a computer, the method according to any one of the first aspect or the second aspect is implemented.

According to an eighth aspect, this application provides a computer program product. When a computer reads and executes the computer program product, the computer is enabled to perform the method according to any one of the first aspect or the second aspect.

According to a ninth aspect, this application provides a communication system. The communication system includes a terminal device and an access network device. The terminal device may be configured to implement the method according to any implementation of the first aspect, and the access network device is configured to implement the method according to any implementation of the second aspect.

For beneficial effects of the second aspect to the ninth aspect, refer to the beneficial effects of the first aspect. Details are not described herein again.

### BRIEF DESCRIPTION OF DRAWINGS

FIG. 1 is a diagram of an architecture of a communication system to which an embodiment of this application is applied;
FIG. 2 is a schematic flowchart of a contention-based random access procedure;
FIG. 3 is a diagram of an association relationship between an RO and an SSB;
FIG. 4 is a diagram of a mapping relationship between an RO and an SSB;
FIG. 5 is a diagram of an SSB-RO association period;
FIG. 6 is a schematic flowchart of a communication method according to an embodiment of this application;
FIG. 7 is a diagram of consecutive first time periods according to an embodiment of this application;
FIG. 8 is a diagram of an RO group according to an embodiment of this application;
FIG. 9(a) and FIG. 9(b) are a diagram of a scenario of determining a first time period according to an embodiment of this application;
FIG. 10(a) and FIG. 10(b) are a diagram of another scenario of determining a first time period according to an embodiment of this application;
FIG. 11 is a diagram of a frequency domain ranking according to an embodiment of this application;
FIG. 12 is a diagram of an RO group according to an embodiment of this application;
FIG. 13 is another diagram of an RO group according to an embodiment of this application;
FIG. 14 is still another diagram of an RO group according to an embodiment of this application;
FIG. 15 is still another diagram of an RO group according to an embodiment of this application;
FIG. 16 is still another diagram of an RO group according to an embodiment of this application;
FIG. 17A and FIG. 17B are still another diagram of an RO group according to an embodiment of this application;
FIG. 18A and FIG. 18B are still another diagram of an RO group according to an embodiment of this application;
FIG. 19A and FIG. 19B are still another diagram of an RO group according to an embodiment of this application;
FIG. 20A and FIG. 20B are still another diagram of an RO group according to an embodiment of this application;
FIG. 21A and FIG. 21B are still another diagram of an RO group according to an embodiment of this application;
FIG. 22A and FIG. 22B are still another diagram of an RO group according to an embodiment of this application;
FIG. 23A and FIG. 23B are still another diagram of an RO group according to an embodiment of this application;
FIG. 24A and FIG. 24B are still another diagram of an RO group according to an embodiment of this application;
FIG. 25A and FIG. 25B are still another diagram of an RO group according to an embodiment of this application;
FIG. 26A and FIG. 26B are still another diagram of an RO group according to an embodiment of this application;
FIG. 27A and FIG. 27B are still another diagram of an RO group according to an embodiment of this application;
FIG. 28A and FIG. 28B are still another diagram of an RO group according to an embodiment of this application;
FIG. 29A and FIG. 29B are still another diagram of an RO group according to an embodiment of this application;
FIG. 30A and FIG. 30B are still another diagram of an RO group according to an embodiment of this application;
FIG. 31 is a diagram of a cyclic shift manner according to an embodiment of this application;
FIG. 32A and FIG. 32B are still another diagram of an RO group according to an embodiment of this application;
FIG. 33A and FIG. 33B are still another diagram of an RO group according to an embodiment of this application;
FIG. 34 is a diagram of a possible structure of a communication apparatus according to an embodiment of this application; and
FIG. 35 is a diagram of a possible structure of a communication apparatus according to an embodiment of this application.

### DESCRIPTION OF EMBODIMENTS

The following further describes specific embodiments of this application in detail with reference to accompanying drawings.

In the specification, claims, and accompanying drawings of this application, terms "first", "second", and the like are intended to distinguish between different objects but do not indicate a particular order. In addition, the terms "include" and "have" and any variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown at various positions in the specification may not necessarily refer to a same embodiment, and is not an independent or alternative embodiment exclusive from another embodiment. It is explicitly and implicitly understood by a person skilled in the art that embodiments described in the specification may be combined with another embodiment.

In this application, "at least one" means one or more, "a plurality of" means two or more, "at least two" means two or three or more. "And/or" is for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following" or a similar expression thereof indicates any combination of these items, including a single item or any combination of plural items. For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

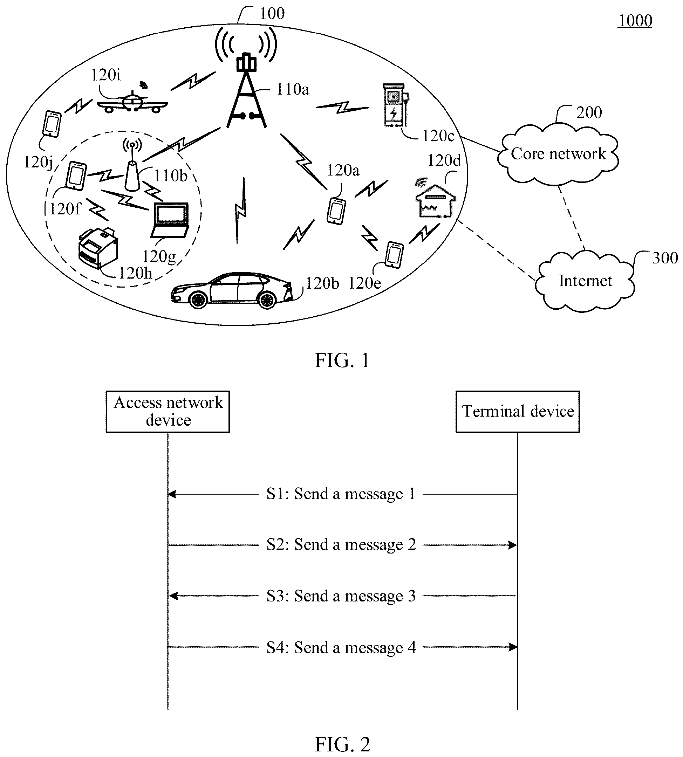

FIG. 1 is a diagram of an architecture of a communication system to which an embodiment of this application is applied. As shown in FIG. 1, the communication system 1000 includes a radio access network (radio access network, RAN) 100 and a core network (core network, CN) 200. Optionally, the communication system 1000 may further include the Internet 300. The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open radio access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and constitutes a part of the communication system, to help the terminal implement radio access. The plurality of RAN nodes 110 in the communication system 1000 may be a same type of nodes, or may be different types of nodes. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes both referred to as communication apparatuses. For example, the base stations 110a and 110b in FIG. 1 may be understood as communication apparatuses having a base station function, and the terminals 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

The terminal may also be referred to as a terminal device, user equipment (user equipment, UE), a mobile station, a mobile terminal, mobile equipment (mobile equipment, ME), or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The core network may include one or more function entities (which is also referred to as a core network element, a network element, an entity, or the like), for example, a network slice selection function (network slice selection function, NSSF), a network exposure function (network exposure function, NEF), a network repository function (network repository function, NRF), a policy control function (policy control function, PCF), a unified data management (unified data management, UDM), an access and mobility management function (access and mobility management function, AMF), an authentication server function (authentication server function, AUSF), and a session management function (session management function, SMF).

It should be noted that the foregoing function entities are merely names, and the names do not constitute a limitation on the entities. For example, the session management function may alternatively be replaced with a "session management function entity" or another name. In addition, the session management function entity may alternatively correspond to an entity that includes another function in addition to the session management function. A user plane function may alternatively be replaced with a "user plane function entity" or another name. In addition, the user plane function entity may alternatively correspond to an entity that includes another function in addition to the user plane function. Unified descriptions are provided herein. Details are not described below.

It should be noted that names of messages between network elements, names of parameters in the messages, or the like in the following embodiments of this application are merely examples, and there may alternatively be other names during specific implementation. This is not specifically limited in embodiments of this application.

In this application, "sending information to ... (the terminal)" may be understood as that a destination end of the information is the terminal, and may include directly or indirectly sending the information to the terminal. "Receiving information from ... (the terminal)" may be understood as that a source end of the information is the terminal, and may include directly or indirectly receiving the information from the terminal. Information may undergo necessary processing, for example, a format change, between the information sending source end and destination end. However, the destination end may understand valid information from the source end. A similar expression in this application may be understood similarly. Details are not described herein again.

It should be understood that the terminal device in embodiments of this application may be any one of the foregoing devices or a chip. This is not specifically limited herein. Regardless of being used as the device or the chip, the terminal device may be manufactured, sold, or used as an independent product. In this embodiment and subsequent embodiments, only the terminal device is used as an example for description.

It should be understood that, in embodiments of this application, an apparatus configured to implement a function of the access network device may be the access network device, or may be an apparatus that can support the access network device in implementing the function, for example, a chip system, or a combined device or component that can implement the function of the access network device. The apparatus may be installed in the access network device. In this embodiment of this application, the chip system may include a chip, or may include the chip and another discrete device. In this embodiment and subsequent embodiments, only the access network device is used as an example for description.

The following explains and describes related technical features in embodiments of this application. It should be noted that these explanations are intended to make embodiments of this application easier to understand, but should not be construed as a limitation on the protection scope claimed in this application.

### 1. Random access channel occasion (RACH occasion, RO)

The RO may be understood as a time-frequency resource used by a terminal device for random access. The RO may be configured by an access network device based on a PRACH configuration index.

In time domain, a PRACH configuration period may be 10 ms, 20 ms, 40 ms, 80 ms, or 160 ms. In frequency domain, the access network device may configure a quantity of ROs in frequency domain based on msg1-FDM. Generally, the RO quantity configured in frequency domain may be 1, 2, 4, or 8. FDM represents frequency division multiplexing (frequency division multiplexing).

ROs may be classified into a valid RO (valid RO) and an invalid RO (invalid RO). Unless otherwise stated, all ROs in embodiments of this application are valid ROs.

### 2. Synchronization signal block (synchronization signal block, SSB)

The SSB may also be referred to as a synchronization signal and PBCH block (synchronization signal and PBCH block), and is configured by using a bitmap (a short bitmap, a medium bitmap, or a long bitmap). A 1^{st} bit in the bitmap corresponds to an SS/PBCH block index 0, a 2^{nd} bit corresponds to an SS/PBCH block index 1, and so on. When a bit in the bitmap is equal to 0, it indicates that a corresponding SS/PBCH block index is not sent. When a bit in the bitmap is equal to 1, it indicates that a corresponding SS/PBCH block index is sent. A quantity of SSBs actually sent by the access network device is determined by using the bitmap.

The SSB mainly includes a primary synchronization sequence (primary synchronization signal, PSS), a secondary synchronization sequence (secondary synchronization signal, SSS), a broadcast channel (physical broadcast channel, PBCH), and a demodulation reference signal for PBCH (DMRS for PBCH). Information mainly carried on the PBCH is referred to as a master information block (master information block, MIB), and main information included is classified into a system frame number, a cell barring identifier, a system information block (system information block, SIB) parameter set, and the like. The terminal device needs to obtain, based on the information, other system information broadcast by a network.

### 3. Random access procedure

In a communication system, the terminal device needs to obtain uplink synchronization by using the random access procedure, to access the network for communication. The random access includes contention-based random access and non-contention-based random access. The non-contention-based random access is usually for a case in which the terminal device already can successfully receive radio resource control (radio resource control, RRC) signaling. The following mainly describes the random access procedure by using a contention-based random access procedure as an example. FIG. 2 is a schematic flowchart of a contention-based random access procedure. As shown in FIG. 2, a detailed procedure of contention-based random access is described as follows:
S1: A terminal device sends a message 1 (Msg1) to an access network device: The terminal randomly selects, based on received system information sent by the access network device and an index of a selected SSB (each SSB corresponds to one beam, the terminal selects an SSB with a largest received power from received SSBs, and an index of the SSB is referred to as the index of the SSB selected by the terminal), one of ROs (the ROs may be understood as time-frequency resources used by the terminal device for the random access, and the access network device preconfigures an association relationship between the ROs and the index of the SSB) associated with the index of the SSB, to send a preamble (preamble, namely, Msg1). After determining a time-frequency resource, namely, the RO, the terminal device randomly selects one preamble sequence from the selected RO (simultaneous transmission of a maximum of 64 preambles can be performed on one RO, and the terminal device selects one of the 64 preamble sequences) for sending. Then, the terminal sends the preamble sequence to the access network device, and the preamble sequence is carried on a physical random access channel (physical random access channel, PRACH).
S2: The access network device sends a message 2 (Msg2) to the terminal device: After receiving the preamble, the access network device allocates a time-frequency domain resource of Msg2, scheduling information of Msg3, and the like to the terminal. Msg2 is also referred to as random access response (Random access response, RAR) information. A RAR includes the scheduling information of Msg3, namely, RAR UL grant information.
S3: The terminal device sends the message 3 (Msg3) to the access network device: Msg3 is sent on the time-frequency resource specified in Msg2, and is carried on a physical uplink shared channel (physical downlink shared channel, PUSCH).
S4: The access network device sends a message 4 (Msg4) to the terminal device. Msg4 is mainly for conflict resolution. When a plurality of terminals simultaneously perform access, a terminal selected for the access in the current random access needs to be determined.

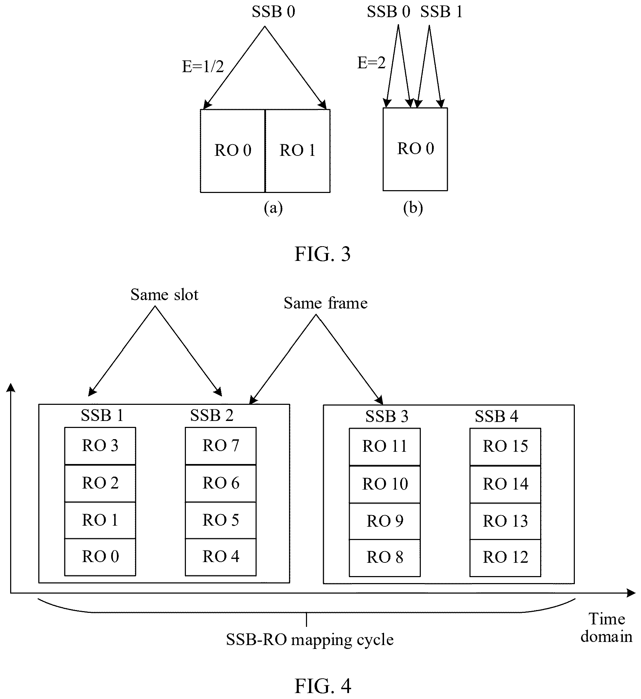

As described above, in a Msg1 transmission process, the terminal device selects the RO based on the index of the SSB, to perform preamble sequence transmission. Therefore, in an existing NR standard, in addition to specifying a position of the PRACH, an SSB-RO mapping relationship further needs to be specified (one SSB index may be associated with one or more ROs, or a plurality of SSB indexes are associated with one RO). Specifically, the access network device may configure, based on a higher layer parameter ssb-perRACH-OccasionAndCB-PreamblesPerSSB, a relationship of mapping from E SSBs and one RO. When E is less than 1, one SSB is associated with 1/E ROs. When E is greater than 1, E SSBs are associated with one RO (one SSB is associated with 1/E ROs). For example, FIG. 3 is a diagram of an association relationship between an RO and an SSB. As shown in (a) in FIG. 3, when E=1/2, one SSB is associated with two ROs. As shown in (b) in FIG. 3, when E=2, one RO is associated with two SSBs. Therefore, when one SSB index is associated with a plurality of ROs, the terminal device selects one of the plurality of ROs, and selects a preamble sequence whose transmission is performed on the RO. After the association relationship between the RO and the SSB is determined, SSB-RO mapping may be started based on the following order:
① In one RO, mapping is performed in ascending order of preamble indexes.
② Mapping is performed in ascending order of frequencies.
③ In one PRACH slot, mapping is performed in chronological order.
④ Mapping is performed in ascending order of PRACH slot indexes. That is, mapping is performed in chronological order.

In other words, mapping is first performed based on preambles in the RO, and then mapping is performed in an order of frequency first and then time (that is, in an order of first frequency domain and then time domain: first a same slot, then a same frame, and finally different frames). For example, FIG. 4 is a diagram of a mapping relationship between an RO and an SSB. As shown in FIG. 4, a horizontal direction represents a time domain, and a vertical direction represents a frequency domain. It is assumed that an SSB set configured by an access network device is {SSB 1, SSB 2, SSB 3, SSB 4}, msg1-FDM=4, and E=1/4. That is, one SSB is associated with four ROs. Therefore, 16 ROs (namely, an RO 0 to an RO 15) may be for completing one complete SSB-RO mapping cycle. A specific SSB-RO mapping order is that arrangement is started from a frequency domain corresponding to an RO time domain position. To be specific, the RO 0 to the RO 3 that correspond to the SSB 1 occupy four RO frequency domain positions corresponding to a 1^{st} RO time domain position in a start PRACH slot in a same frame, the RO 4 to the RO 7 that correspond to the SSB 2 occupy four RO frequency domain positions corresponding to a 2^{nd} RO time domain position in the start PRACH slot, the RO 8 to the RO 11 that correspond to the SSB 3 occupy the four RO frequency domain positions corresponding to the 2^{nd} RO time domain position in the start PRACH slot in the same frame, and the RO 12 to the RO 15 that correspond to the SSB 4 occupy four RO frequency domain positions corresponding to a 1^{st} RO time domain position in a 2^{nd} PRACH slot in the same frame.

### 4. SSB-RO mapping cycle

A minimum time interval for completing mapping of all SSBs to ROs is referred to as the SSB-RO mapping cycle. In other words, mapping of all sent SSBs are completed once, which is referred to as one SSB-RO mapping cycle (mapping cycle), as shown in FIG. 4.

### 5. SSB-RO association period (association period)

The SSB-RO association period is an integer multiple of the PRACH configuration period (as shown in Table 1 below), and is 160 ms at most. As shown in Table 1, when the PRACH configuration period is equal to 10 ms, the SSB-RO association period may be 10 ms, 20 ms, 40 ms, 80 ms, or 160 ms. When the PRACH configuration period is equal to 20 ms, the SSB-RO association period may be 20 ms, 40 ms, 80 ms, or 160 ms. When the PRACH configuration period is equal to 40 ms, the SSB-RO association period may be 40 ms, 80 ms, or 160 ms. When the PRACH configuration period is equal to 80 ms, the SSB-RO association period may be 80 ms or 160 ms. When the PRACH configuration period is equal to 160 ms, the SSB-RO association period may be 160 ms. A specific value is a smallest value in these values, and needs to enable all the sent SSBs are mapped at least once.

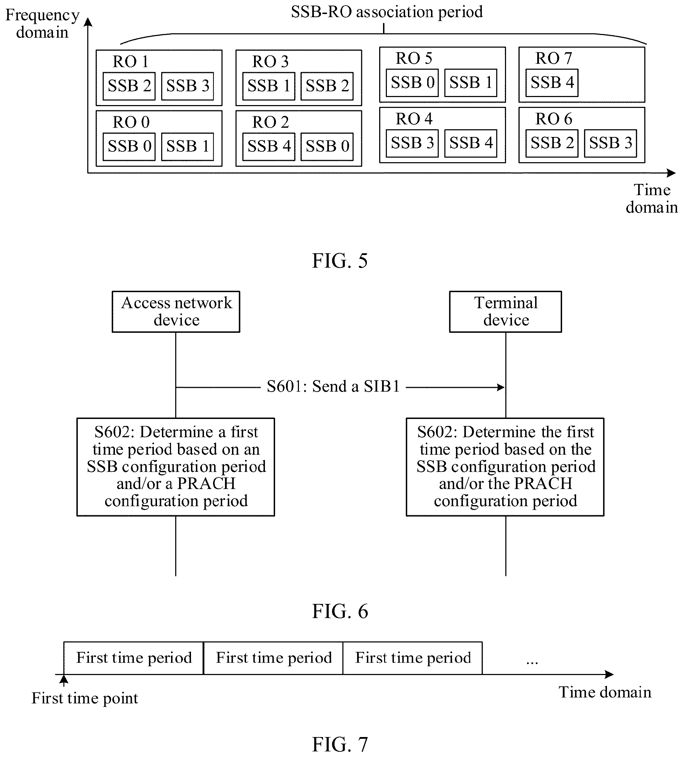

For example, FIG. 5 is a diagram of an SSB-RO association period. As shown in FIG. 5, assuming that a 1^{st} PRACH configuration period includes only an RO 0 and an RO 1, the PRACH configuration period cannot be for mapping all SSBs once. Therefore, a 2^{nd} PRACH configuration period is needed. Assuming that the 2^{nd} PRACH configuration period includes an RO 2, an RO 3, an RO 4, an RO 5, an RO 6, and an RO 7, the two PRACH configuration periods may be for mapping all the SSBs at least once. Therefore, one SSB-RO association period may include the two PRACH configuration periods. In the SSB-RO association period, after the SSBs are mapped once, there are some remaining ROs (the ROs are the RO 3 to the RO 7, and a position of one SSB remains on the RO 2). On the remaining ROs, the SSBs may further be mapped twice. Therefore, the SSBs are mapped three times in total. It may alternatively be understood as that three rounds of mapping are performed, and there are three mapping cycles. In this case, if there are remaining ROs, and not all the SSBs can be mapped to the remaining ROs once, the SSBs are not mapped. If there are some remaining preamble indexes that are on the remaining ROs and to which the SSBs are not mapped, the SSBs are not mapped either. For example, only one SSB is mapped to the RO 7 in FIG. 5, and a position of one SSB remains. Because not all the SSBs can be mapped to the remaining ROs once, the SSBs are not mapped.

**Table 1**

| PRACH configuration period (millisecond) | Association period (quantity of PRACH configuration periods) |
|---|---|
| 10 | {1, 2, 4, 8, 16} |
| 20 | {1, 2, 4, 8} |
| 40 | {1, 2, 4} |
| 80 | {1,2} |
| 160 | {1} |

It should be noted that steps between values in a 2^{nd} column of Table 1 are different. For example, steps between adjacent values in {1, 2, 4, 8, 16} are 1, 2, 4, and 8.

### 6. SSB-RO association pattern period (association pattern period)

The SSB-RO association pattern period includes one or more SSB-RO association periods, and is 160 ms at most. Mapping between an SSB and an RO is completely the same, that is, repeated, in association pattern periods.

### 7. RO group (RO group)

To increase uplink coverage of the PRACH, a PRACH repetition is now being discussed. A quantity of times of repetition sending (which is also referred to as a repetition quantity, a repetition level, or the like) may be 2, 4, or 8. For example, if the repetition quantity is equal to 2, and two ROs are needed, two ROs corresponding to a same SSB index are combined into one group referred to as the RO group. For example, an RO A and an RO B are in a group, and the RO A and the RO B are associated with a same SSB index. In the random access procedure, the terminal device sends a preamble on the RO A and the RO B, and then receives Msg2. If sending on both the RO A and the RO B fails, it is referred to as a RACH attempt (RACH attempt) failure.

### 8. RO group pattern (RO group pattern) in an SSB-RO group association pattern period

In one SSB-RO group association pattern period, RO groups corresponding to all SSBs and all repetition quantities appear at least once. Optionally, a mapping relationship between the RO groups (the RO groups that correspond to all the SSBs and all the repetition quantities) that appear in the SSB-RO group association pattern period and the SSBs is the RO group pattern. For example, assuming that there are two SSBs and three repetition levels, namely, 2, 4, and 8, there are 2×3=6 types of RO groups. In the SSB-RO group association pattern period, the six types of RO groups appear at least once. Optionally, a mapping relationship between the six types of RO groups that appear in the SSB-RO group association pattern period and the SSBs is the RO group pattern in the SSB-RO group association pattern period.

As described above, the RO group is currently defined for PRACH repetition sending. To reduce implementation complexity of the PRACH repetition sending, the inventor considers that a group of ROs for the PRACH repetition sending should be periodically arranged. That is, a mapping relationship between the SSBs and the group of ROs for the repetition sending should be completely the same in the association pattern periods. Therefore, how to define a length of an association pattern period in a PRACH repetition sending scenario is an urgent problem to be resolved.

It should be noted that a first time period described in the following embodiments of this application may be understood as the SSB-RO group association pattern period in the PRACH repetition sending scenario, and a second time period may be an SSB-RO group association period in the PRACH repetition sending scenario.

The following describes in detail a communication method and communication apparatuses provided in this application.

FIG. 6 is a schematic flowchart of a communication method according to an embodiment of this application. As shown in FIG. 6, the communication method includes the following steps S601 and S602. The method shown in FIG. 6 may be performed by a communication apparatus or a chip in the communication apparatus. Herein, the communication apparatus may be specifically an access network device or a terminal device, where the access network device may be specifically an AMF. It should be noted that FIG. 6 is a schematic flowchart of a method embodiment of this application, and shows detailed communication steps or operations of the method. However, these steps or operations are merely examples. Other operations or variants of various operations in FIG. 6 may alternatively be performed in embodiments of this application. In addition, the steps in FIG. 6 may be performed in an order different from an order shown in FIG. 6, and it is possible that not all operations in FIG. 6 need to be performed.

S601: The access network device sends a SIB1 to the terminal device. Accordingly, the terminal device receives the SIB1 from the access network device.

The SIB1 includes SSB configuration information and PRACH configuration information. The SSB configuration information indicates a quantity N of configured SSBs and an SSB configuration period, and the PRACH configuration information indicates a PRACH configuration period.

Optionally, the SSB configuration information may further indicate an index (index) of an active SSB, a time-frequency position of the SSB, and the like. This is not limited herein. For how the SSB configuration information specifically indicates the foregoing various information, refer to the protocol 38331. Details are not described herein again. Optionally, the PRACH configuration information may further indicate a time-frequency position of a PRACH. For how the PRACH configuration information specifically indicates the foregoing various information, refer to the protocol 38331. Details are not described herein again.

S602: The terminal device/access network device determines a first time period based on the SSB configuration period and/or the PRACH configuration period.

It should be understood that the terminal device/access network device may determine the first time period based on the SSB configuration period and/or the PRACH configuration period. Optionally, in addition to the SSB configuration period and/or the PRACH configuration period, the terminal device/access network device may further determine the first time period based on information such as the time-frequency positions of the SSB and the PRACH, an SSB-RO association relationship, an SSB-RO mapping order, and/or a time-frequency position of an RO group. Mapping is performed between the N SSBs and M random access occasion RO groups at least once in the first time period, and the mapping between the N SSBs and the M RO groups is the same in each of K consecutive first time periods, where N and M are integers greater than 0 (to be specific, N>0, M>0, and N and M are integers). Herein, the K consecutive first time periods are K consecutive first time periods starting from a first time point, where K is an integer greater than 1 (to be specific, K>1, and K is an integer). For example, the first time point may be a start time point of a 0^{th} frame. The K consecutive first time periods do not overlap. In other words, an end time point of a current first time period is a start time point of a next first time period. For example, FIG. 7 is a diagram of consecutive first time periods according to an embodiment of this application.

One RO group includes at least two ROs, all ROs in the RO group are located at different time domain positions, and all the ROs in the RO group are associated with at least one same SSB. It may be understood that one RO may be associated with at least one SSB. Herein, that all the ROs in the RO group are associated with the at least one same SSB may include the following four cases:
Case 1: All SSBs associated with one RO in the RO group are the same as all SSBs associated with another RO in the RO group.
Case 2: All SSBs associated with one RO in the RO group are the same as all SSBs associated with another RO in the RO group, and all the ROs in the RO group have a same mapping order of the associated SSBs. It should be noted that, that all the ROs in the RO group have the same mapping order of the associated SSBs means that preamble sets corresponding to the same SSBs associated with the ROs in the RO group are the same.
Case 3: All the ROs in the RO group are further associated with different SSBs in addition to the at least one same SSB. Optionally, in the case 3, quantities of SSBs associated with the ROs in the RO group may be different, or may be different.
Case 4: Quantities of SSBs associated with the ROs in the RO group are different, and all the ROs are associated with the at least one same SSB. Optionally, in the case 4, all the ROs in the RO group may further be associated with different SSBs in addition to the at least one same SSB.

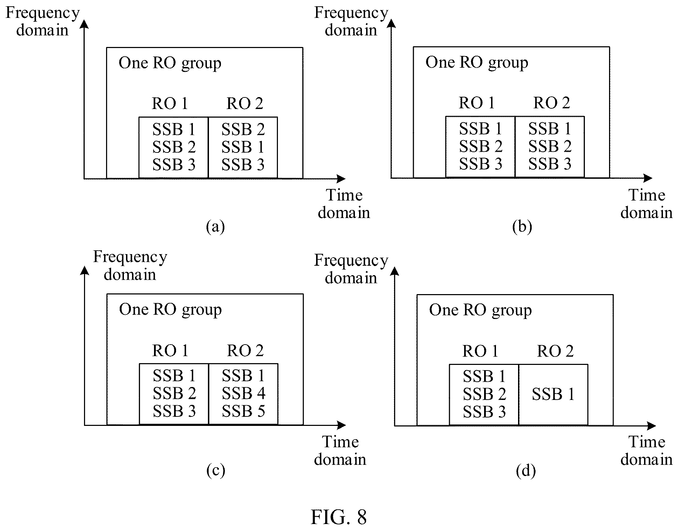

For example, FIG. 8 is a diagram of an RO group according to an embodiment of this application. For example, (a) in FIG. 8 shows the case 1. The RO group includes an RO 1 and an RO 2. The RO 1 and the RO 2 have different time domain positions. The RO 1 is associated with three SSBs: an SSB 1, an SSB 2, and an SSB 3, and a mapping order is sequentially the SSB 3, the SSB 2, and the SSB 1 (the mapping order is from a low frequency to a high frequency). The RO 2 is associated with three SSBs: the SSB 1, the SSB 2, and the SSB 3, and a mapping order is sequentially the SSB 3, the SSB 1, and the SSB 2. It can be learned that the RO 1 and the RO 2 are associated with three same SSBs: the SSB 1, the SSB 2, and the SSB 3.

For another example, (b) in FIG. 8 shows the case 2. The RO group includes an RO 1 and an RO 2. The RO 1 and the RO 2 have different time domain positions. The RO 1 is associated with three SSBs: an SSB 1, an SSB 2, and an SSB 3, and a mapping order is sequentially the SSB 3, the SSB 2, and the SSB 1. The RO 2 is associated with three SSBs: the SSB 1, the SSB 2, and the SSB 3, and a mapping order is sequentially the SSB 3, the SSB 2, and the SSB 1. Therefore, the RO 1 and the RO 2 are associated with three same SSBs: the SSB 1, the SSB 2, and the SSB 3, and the mapping orders are the same.

For another example, (c) in FIG. 8 shows the case 3. The RO group includes an RO 1 and an RO 2. The RO 1 and the RO 2 have different time domain positions. The RO 1 is associated with three SSBs: an SSB 1, an SSB 2, and an SSB 3. The RO 2 is associated with three SSBs: the SSB 1, an SSB 4, and an SSB 5. Therefore, the RO 1 and the RO 2 are associated with a same SSB: the SSB 1.

For another example, (d) in FIG. 8 shows the case 4. The RO group includes an RO 1 and an RO 2. The RO 1 and the RO 2 have different time domain positions. The RO 1 is associated with three SSBs: an SSB 1, an SSB 2, and an SSB 3. The RO 2 is associated with one SSB: the SSB 1. Therefore, the RO 1 and the RO 2 are associated with a same SSB: the SSB 1.

In some feasible implementations, that the terminal device/access network device determines the first time period based on the SSB configuration period and/or the PRACH configuration period may be understood as: The terminal device/access network device determines a second time period based on the SSB configuration period and/or the PRACH configuration period. The first time period includes one or more second time periods, and mapping between the N SSBs and the M RO groups is performed at least once in the second time period. In other words, a length of the first time period is greater than or equal to a length of the second time period. The length of the second time period is shortest duration in all duration that satisfies that mapping between the N SSBs and the M RO groups is performed at least once. For example, when the PRACH configuration period is 10 ms, assuming that all the duration that satisfies that mapping between the N SSBs and the M RO groups is performed at least once includes 20 ms and 40 ms, the second time period is 20 ms.

It may be understood that the length of the first time period is shortest duration in all duration that satisfies that mapping between the N SSBs and the M RO groups is performed at least once and that the mapping between the N SSBs and the M RO groups is the same in each of the K consecutive first time periods. For example, when the PRACH configuration period is 10 ms, assuming that all the duration that satisfies that mapping between the N SSBs and the M RO groups is performed at least once and that the mapping between the N SSBs and the M RO groups is the same in each of the K consecutive first time periods includes 80 ms and 160 ms, the first time period is 80 ms.

It should be understood that, when the first time period includes a plurality of second time periods, the first time period and the second time periods may satisfy the following relationship: T1=△T+T₂₁+T₂₂+T₂₃ ... +T₂ₐ, a={1, 2, ...}, where Ti represents the first time period, and T₂ₐ represents the second time period. In an implementation, values of T₂₁, T₂₂, T₂₃, ..., and T₂ₐ may be different, △T is remaining time obtained by subtracting the plurality of second time periods from the first time period.

It should be noted that the first time period or the second time period is Z1 times the PRACH configuration period, Z1 is a value in a first value set, and steps between values included in the first value set are the same, where Z1 is a positive integer. Herein, the steps between the values included in the first value set are steps between adjacent values. The step may be 1, 2, another value, or the like. This is not limited herein. In this embodiment of this application, descriptions are mainly provided by using the step of 1. For example, the first value set is 1, 2, 3, 4, 5, and 6. The steps between the values in the first value set are 1. It should be understood that the values included in the first value set vary with the PRACH configuration period.

Optionally, the first time period or the second time period is Z1 times the PRACH configuration period, Z1 is a value in a first value set, and a value in the first value set is one or more of positive integers less than or equal to X, where X is an integer greater than or equal to 16 (to be specific, X≥16, and X is an integer). In other words, the value in the first value set is one or more of the positive integers less than or equal to X. For example, X may be 24, 32, 40, 48, 56, 64, 72, 80, or 96. This is not limited herein. For ease of understanding, in this application, an example in which X is 48 is mainly used for description. It should be understood that the value included in the first value set varies with the PRACH configuration period.

For example, X=48 is used as an example. Values included in the first value set may be all positive integers less than or equal to 48. That is, the first value set includes 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, and 48.

Optionally, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16 (to be specific, X≥16, and X is an integer), and y is an integer greater than or equal to 0 and less than or equal to 4 (to be specific, 0 ≤ y ≤ 4, and y is an integer). In other words, the value in the first value set is one or more of positive integers other than one or more numbers in 1, 2, 4, 8, and 16 and less than or equal to X. For example, X may be 24, 32, 40, 48, 56, 64, 72, 80, or 96. This is not limited herein. It should be understood that the value included in the first value set varies with the PRACH configuration period.

For example, X=48 is used as an example. Values included in the first value set may be all positive integers other than one or more numbers in 1, 2, 4, 8, and 16 and less than or equal to 48. That is, the first value set includes 3, 5, 6, 7, 9, 10, 11, 12, 13, 14, 15, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, and 48.

Specifically, in an implementation, if a time domain resource for SSB transmission and a time domain resource for PRACH transmission overlap, and the SSB configuration period is less than or equal to the PRACH configuration period, Z1 is the value in the first value set. Herein, that the time domain resource for SSB transmission and the time domain resource for PRACH transmission overlap may be understood as that the time domain resource for SSB transmission affects the time domain resource for PRACH transmission, may be understood as that there is no gap (gap) greater than or equal to predefined duration in time domain between the time domain resource for SSB transmission and the time domain resource for PRACH transmission, may be understood as that a time-frequency resource for SSB transmission invalidates an RO for PRACH transmission, may be understood as that the SSB transmission affects the RO and results in an invalid RO, or may be understood as that the time domain resource for SSB transmission and the time domain resource for PRACH transmission are located at a same time point in time domain.

For example, X=48 is used as an example, as shown in Table 2 below:
When the PRACH configuration period is equal to 10 ms, the first value set={1, 2, 3, 4, 5, 6, 7, ..., 15, 16, 17, 18, ..., 32, ..., 48}. In other words, a value of the second time period may be 10 ms, 20 ms, 30 ms, 40 ms, 50 ms, 60 ms, 70 ms, ..., 150 ms, 160 ms, 170 ms, 180 ms, ..., 320 ms, ..., or 480 ms; and a value of the first time period may be 10 ms, 20 ms, 30 ms, 40 ms, 50 ms, 60 ms, 70 ms, ..., 150 ms, 160 ms, 170 ms, 180 ms, ..., 320 ms, ..., or 480 ms.
When the PRACH configuration period is equal to 20 ms, the first value set={1, 2, 3, 4, 5, 6, 7, 8, 9, ..., 16, ..., 24}. In other words, a value of the second time period may be 20 ms, 40 ms, 60 ms, 80 ms, 100 ms, 120 ms, 140 ms, 160 ms, 180 ms, ..., 320 ms, ..., or 480 ms; and a value of the first time period may be 20 ms, 40 ms, 60 ms, 80 ms, 100 ms, 120 ms, 140 ms, 160 ms, 180 ms, ..., 320 ms, ..., or 480 ms.
When the PRACH configuration period is equal to 40 ms, the first value set={1, 2, 3, 4, 5, 6, 7, 8, 9, 10, 11, 12}. In other words, a value of the second time period may be 40 ms, 80 ms, 120 ms, 160 ms, 200 ms, 240 ms, 280 ms, 320 ms, 360 ms, 400 ms, 440 ms, or 480 ms; and a value of the first time period may be 40 ms, 80 ms, 120 ms, 160 ms, 200 ms, 240 ms, 280 ms, 320 ms, 360 ms, 400 ms, 440 ms, or 480 ms.
When the PRACH configuration period is equal to 80 ms, the first value set={1, 2, 3, 4, 5, 6}. In other words, a value of the second time period may be 80 ms, 160 ms, 240 ms, 320 ms, 400 ms, or 480 ms; and a value of the first time period may be 80 ms, 160 ms, 240 ms, 320 ms, 400 ms, or 480 ms.
When the PRACH configuration period is equal to 160 ms, the first value set={1, 2, 3}. In other words, a value of the second time period may be 160 ms, 320 ms, or 480 ms; and a value of the first time period may be 160 ms, 320 ms, or 480 ms.

**Table 2**

| PRACH configuration period (millisecond) | Second time period (quantity of PRACH configuration periods/multiple of the PRACH configuration period) | First time period (quantity of PRACH configuration periods/multiple of the PRACH configuration period) |
|---|---|---|
| 10 | {1, 2, 3, 4, 5, 6, 7, 8, 9, 10, 11, 12, 13, 14, 15, 16, 17, 18, ..., 32, ..., 48} | {1, 2, 3, 4, 5, 6, 7, 8, 9, 10, 11, 12, 13, 14, 15, 16, 17, 18, ..., 32, ..., 48} |
| 20 | {1, 2, 3, 4, 5, 6, 7, 8, 9, 10, 11, 12, 13, 14, 15, 16, ..., 24} | {1, 2, 3, 4, 5, 6, 7, 8, 9, 10, 11, 12, 13, 14, 15, 16, ..., 24} |
| 40 | {1, 2, 3, 4, 5, 6, 7, 8, 9, 10, 11, 12} | {1, 2, 3, 4, 5, 6, 7, 8, 9, 10, 11, 12} |
| 80 | {1, 2, 3, 4, 5, 6} | {1, 2, 3, 4, 5, 6} |
| 160 | {1, 2, 3} | {1,2,3} |

It is not difficult to learn that, compared with Table 1, a mapping granularity in Table 2 is different. The mapping granularity in Table 2 is finer than that in Table 1 (that is, the values in the table are fined). This helps improve resource utilization, and can reduce a quantity of invalid ROs per unit time (or described as reducing a proportion of invalid ROs per unit time). Proportion of invalid ROs per unit time=Quantity of invalid ROs per unit time/(Quantity of invalid ROs per unit time+Quantity of valid ROs per unit time). Optionally, based on the method in this application, a repetition sending delay may further be reduced.

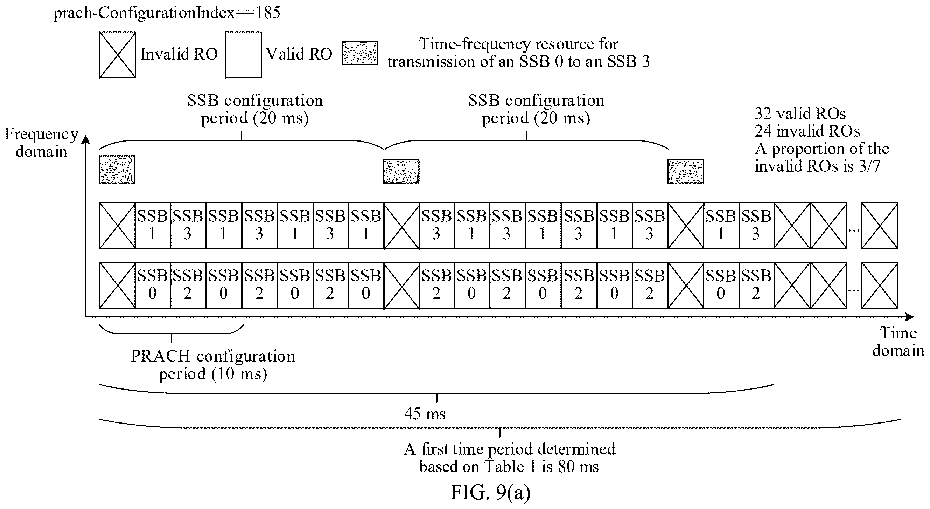

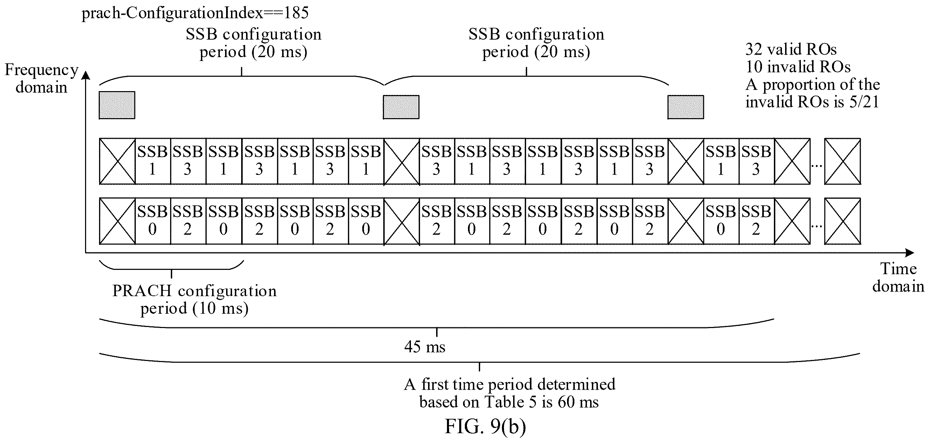

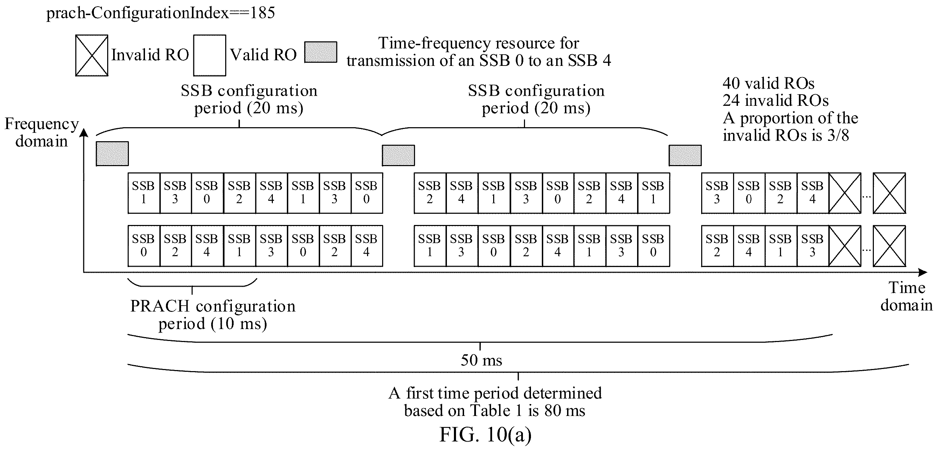

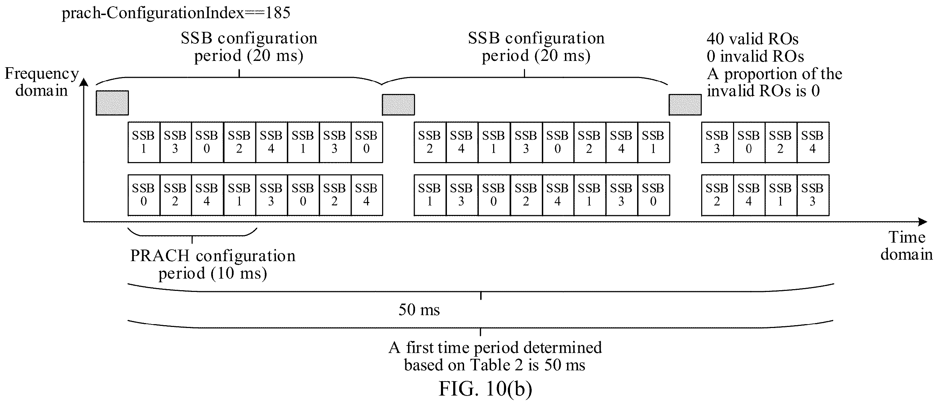

For example, FIG. 9(a) and FIG. 9(b) are a diagram of a scenario of determining a first time period according to an embodiment of this application. The scenario shown in FIG. 9(a) and FIG. 9(b) is a scenario in which a time domain resource for SSB transmission and a time domain resource for PRACH transmission overlap, namely, a scenario in which the SSB transmission affects an RO. As shown in FIG. 9(a) and FIG. 9(b), prach-ConfigurationIndex=185, a quantity N of configured SSBs is equal to 4, the SSBs are an SSB 0, an SSB 1, an SSB 2, and an SSB 3, a quantity of times of repetition sending (which is also referred to as a repetition level) is 8 (that is, each RO group includes eight ROs), an RO quantity configured in frequency domain is equal to 2 (that is, msg1-FDM=2), and a PRACH configuration period is 10 ms. FIG. 9(a) and FIG. 9(b) show a case in which one RO is associated with one SSB. An SSB index in each grid in FIG. 9(a) and FIG. 9(b) represents the SSB mapped to the RO. An RO-SSB mapping rule in FIG. 9(a) and FIG. 9(b) is frequency domain first and then time domain. When prach-ConfigurationIndex=185, actual duration for completing mapping between the four SSBs and the eight ROs in the RO group once is 45 ms. As shown in FIG. 9(a), a first time period determined based on Table 1 is 80 ms, where 32 valid ROs and 24 invalid ROs are included, and a proportion of the invalid ROs is 3/7. As shown in FIG. 9(b), a first time period determined based on Table 5 is 60 ms, where 32 valid ROs and 10 invalid ROs are included, and a proportion of the invalid ROs is 5/21. It can be learned that, based on the method provided in this application, a proportion of invalid ROs can be reduced. In addition, an RO group including eight ROs associated with the SSB 2 is used as an example. In a scenario in FIG. 9(a), a delay for successful sending with one RACH attempt is 40 ms, a delay for successful sending with two RACH attempts is 80 ms+40 ms=120 ms, and a delay for successful sending only with three RACH attempts is 80 ms+80 ms+40 ms=200 ms. Likewise, an RO group including eight ROs associated with the SSB 2 is used as an example. In a scenario in FIG. 10(b), a delay for successful sending with one RACH attempt is 40 ms, a delay for successful sending with two RACH attempts is 60 ms+40 ms=100 ms, and a delay for successful sending only with three RACH attempts is 60 ms+60 ms+40 ms=140 ms. Because there is a failure probability for an RACH, if access is successful with one RACH attempt, there is no delay difference between a 1^{st} RACH attempt and a successful RACH attempt. If access is successful only with a 2^{nd} RACH attempt or more RACH attempts, there is a delay difference between a 1^{st} RACH attempt and a successful RACH attempt. That is, a repetition transmission delay can further be reduced based on the method in this application.

For another example, FIG. 10(a) and FIG. 10(b) are a diagram of another scenario of determining a first time period according to an embodiment of this application. The scenario shown in FIG. 10(a) and FIG. 10(b) is a scenario in which a time domain resource for SSB transmission and a time domain resource for PRACH transmission do not overlap, namely, a scenario in which the SSB transmission does not affect an RO. As shown in FIG. 10(a) and FIG. 10(b), prach-ConfigurationIndex=185, a quantity N of configured SSBs is equal to 4, the SSBs are an SSB 0, an SSB 1, an SSB 2, and an SSB 3, a quantity of times of repetition sending (which is also referred to as a repetition level) is 8 (that is, each RO group includes eight ROs), an RO quantity configured in frequency domain is equal to 2 (that is, msg1-FDM=2), and a PRACH configuration period is 10 ms. FIG. 10(a) and FIG. 10(b) show a case in which one RO is associated with one SSB. An SSB index in each grid in FIG. 10(a) and FIG. 10(b) represents the SSB mapped to the RO. An RO-SSB mapping rule in FIG. 10(a) and FIG. 10(b) is frequency domain first and then time domain. When prach-ConfigurationIndex=185, duration for completing mapping between the four SSBs and the eight ROs in the RO group once is 50 ms. As shown in FIG. 10(a), a first time period determined based on Table 1 is 80 ms, where 40 valid ROs and 24 invalid ROs are included, and a proportion of the invalid ROs is 3/8. As shown in FIG. 10(b), a first time period determined based on Table 2 is 50 ms, where 40 valid ROs and 0 invalid ROs are included, and a proportion of the invalid ROs is 0. It can be learned that, based on the method provided in this application, a proportion of invalid ROs can be reduced. In addition, an RO group including eight ROs associated with the SSB 2 is used as an example. In a scenario in FIG. 10(a), a delay for successful sending with one RACH attempt is 45 ms, a delay for successful sending with two RACH attempts is 80 ms+45 ms=125 ms, and a delay for successful sending only with three RACH attempts is 80 ms+80 ms+45 ms=205 ms. Likewise, an RO group including eight ROs associated with the SSB 2 is used as an example. In a scenario in FIG. 10(b), a delay for successful sending with one RACH attempt is 45 ms, a delay for successful sending with two RACH attempts is 50 ms+45 ms=95 ms, and a delay for successful sending only with three RACH attempts is 50 ms+50 ms+45 ms=145 ms. Because there is a failure probability for an RACH, if access is successful with one RACH attempt, there is no delay difference between a 1^{st} RACH attempt and a successful RACH attempt. If access is successful only with a 2^{nd} RACH attempt or more RACH attempts, there is a delay difference between a 1^{st} RACH attempt and a successful RACH attempt. That is, a repetition transmission delay can further be reduced based on the method in this application.

It should be noted that the repetition transmission delay in this application is total duration spent from a repetition sending failure in a current first time period followed by sending in a next first time period until sending succeeds (the delay is defined as a time length from sending a preamble by the terminal device to completing RACH access by the terminal device). Because the mapping granularity defined in this application is small, the value of the first time period is also small. Therefore, when access is successful only with a plurality of attempts, the repetition sending delay can be reduced.

For another example, when the value in the first value set is one or more of the positive integers other than the one or more numbers in 1, 2, 4, 8, and 16 and less than or equal to X, X=48 is used as an example, as shown in Table 3:
When the PRACH configuration period is equal to 10 ms, the first value set={3, 5, 6, 7, 9, 10, 11, 12, 13, 14, 15, 17, 18, ..., 32, ...48}. In other words, a value of the second time period may be 30 ms, 50 ms, 60 ms, 70 ms, 90 ms, 100 ms, 110 ms, 120 ms, 130 ms, 140 ms, 150 ms, 170 ms, 180 ms, ..., 320 ms, ..., or 480 ms; and a value of the first time period may be 30 ms, 50 ms, 60 ms, 70 ms, 90 ms, 100 ms, 110 ms, 120 ms, 130 ms, 140 ms, 150 ms, 170 ms, 180 ms, ..., 320 ms, ..., or 480 ms.
When the PRACH configuration period is equal to 20 ms, the first value set={3, 5, 6, 7, 9, 10, 11, 12, 13, 14, 15, 16, ..., 24}. In other words, a value of the second time period may be 60 ms, 100 ms, 120 ms, 140 ms, 180 ms, 200 ms, 220 ms, 240 ms, 260 ms, 280 ms, 300 ms, 320 ms, ..., or 480 ms; and a value of the first time period may be 60 ms, 100 ms, 120 ms, 140 ms, 180 ms, 200 ms, 220 ms, 240 ms, 260 ms, 280 ms, 300 ms, 320 ms, ..., or 480 ms.
When the PRACH configuration period is equal to 40 ms, the first value set={3, 5, 6, 7, 8, 9, 10, 11, 12}. In other words, a value of the second time period may be 120 ms, 200 ms, 240 ms, 280 ms, 320 ms, 360 ms, 400 ms, 440 ms, or 480 ms; and a value of the first time period may be 120 ms, 200 ms, 240 ms, 280 ms, 320 ms, 360 ms, 400 ms, 440 ms, or 480 ms.
When the PRACH configuration period is equal to 80 ms, the first value set={3, 5, 6}. In other words, a value of the second time period may be 240 ms, 400 ms, or 480 ms; and a value of the first time period may be 240 ms, 400 ms, or 480 ms.
When the PRACH configuration period is equal to 160 ms, the first value set={2, 3}. In other words, a value of the second time period may be 320 ms or 480 ms; and a value of the first time period may be 320 ms or 480 ms.

**Table 3**

| PRACH configuration period (millisecond) | Second time period (quantity of PRACH configuration periods/multiple of the PRACH configuration period) | First time period (quantity of PRACH configuration periods/multiple of the PRACH configuration period) |
|---|---|---|
| 10 | {3, 5, 6, 7, 9, 10, 11, 12, 13, 14, 15, 17, 18, ..., 32, ..., 48} | {3, 5, 6, 7, 9, 10, 11, 12, 13, 14, 15, 17, 18, ..., 32, ..., 48} |
| 20 | {3, 5, 6, 7, 9, 10, 11, 12, 13, 14, 15, 16, ..., 24} | {3, 5, 6, 7, 9, 10, 11, 12, 13, 14, 15, 16, ..., 24} |
| 40 | {3, 5, 6, 7, 8, 9, 10, 11, 12} | {3, 5, 6, 7, 8, 9, 10, 11, 12} |
| 80 | {3, 5, 6} | {3, 5, 6} |
| 160 | {2, 3} | {2, 3} |

It is not difficult to learn that, compared with Table 1, a mapping granularity in Table 3 is also different. The mapping granularity in Table 3 is finer than that in Table 1. This helps improve resource utilization, and reduces a quantity of invalid ROs per unit time (or described as reducing a proportion of invalid ROs per unit time). Optionally, based on the method in this application, a repetition sending delay may further be reduced.

In another implementation, if a time domain resource for SSB transmission and a time domain resource for PRACH transmission overlap, and the SSB configuration period is greater than the PRACH configuration period, Z1 is a value in a second value set, and a value in the second value set is one or more positive integers in 2^{y}, where y is an integer greater than or equal to 0 and less than or equal to 4 (to be specific, 0≤y≤4, and y is an integer). It should be understood that the value included in the second value set varies with the PRACH configuration period.

For example, as shown in Table 4:
When the PRACH configuration period is equal to 10 ms, the second value set={1, 2, 4, 8, 16}. In other words, a value of the second time period may be 10 ms, 20 ms, 40 ms, 80 ms, or 160 ms.
When the PRACH configuration period is equal to 20 ms, the second value set={1, 2, 4, 8}. In other words, a value of the second time period may be 20 ms, 40 ms, 80 ms, or 160 ms.
When the PRACH configuration period is equal to 40 ms, the second value set={1, 2, 4}. In other words, a value of the second time period may be 40 ms, 80 ms, or 160 ms.
When the PRACH configuration period is equal to 80 ms, the second value set={1, 2}. In other words, a value of the second time period may be 80 ms or 160 ms.
When the PRACH configuration period is equal to 160 ms, the second value set={1}. In other words, a value of the second time period may be 160 ms.

**Table 4**

| PRACH configuration period (millisecond) | Second time period (quantity of PRACH configuration periods/multiple of the PRACH configuration period) |
|---|---|
| 10 | {1, 2, 4, 8, 16} |
| 20 | {1, 2, 4, 8} |
| 40 | {1, 2, 4} |
| 80 | {1,2} |
| 160 | {1} |

In still another implementation, when a time domain resource for SSB transmission and a time domain resource for PRACH transmission do not overlap, Z1 is the value in the first value set. It should be understood that the value included in the first value set varies with the PRACH configuration period, as shown in Table 2 or Table 3. Herein, that the time domain resource for SSB transmission and the time domain resource for PRACH transmission do not overlap may be understood as that the time domain resource for SSB transmission does not affect the time domain resource for PRACH transmission, may be understood as that there is a gap greater than or equal to predefined duration in time domain between the time domain resource for SSB transmission and the time domain resource for PRACH transmission, may be understood as that a time-frequency resource for SSB transmission does not invalidate an RO for PRACH transmission, or may be understood as that the SSB transmission does not affect the RO and does not result in an invalid RO.

In some other feasible implementations, the first time period is Z2 times a least common multiple of the SSB configuration period and the PRACH configuration period, where Z2 is a positive integer. It should be noted that Z2 is a value in a third value set, and steps between values included in the third value set are the same. Optionally, in this implementation, a time domain resource for SSB transmission and a time domain resource for PRACH transmission overlap.

Optionally, Z2 is the value in the third value set, and a value in the third value set is one or more of positive integers less than or equal to X, where X is an integer greater than or equal to 16 (to be specific, X≥16, and X is an integer). In other words, the value in the third value set is one or more of the positive integers less than or equal to X. For example, X may be 24, 32, 40, 48, 56, 64, 72, 80, or 96. This is not limited herein. For ease of understanding, in this application, an example in which X is 48 is mainly used for description. It should be understood that the value included in the third value set varies with the least common multiple of the SSB configuration period and the PRACH configuration period.

Optionally, the first time period is Z2 times the least common multiple of the SSB configuration period and the PRACH configuration period, Z2 is the value in the third value set, a value in the third value set is one or more of positive integers other than 2^{y} and less than or equal to X, where X is an integer greater than or equal to 16 (to be specific, X≥16, and X is an integer), and y is an integer greater than or equal to 0 and less than or equal to 4 (to be specific, 0 ≤ y ≤ 4, and y is an integer). In other words, the value in the third value set is one or more of positive integers other than 1, 2, 4, 8, and 16 and less than or equal to X. For example, X may be 24, 32, 40, 48, 56, 64, 72, 80, or 96. This is not limited herein. It should be understood that the value included in the third value set varies with the least common multiple of the SSB configuration period and the PRACH configuration period.

For example, X=48 is used as an example, as shown in Table 5 below:
When the least common multiple of the SSB configuration period and the PRACH configuration period is equal to 10 ms, the third value set={1, 2, 3, 4, 5, 6, 7, ..., 15, 16, 17, 18, ..., 32, ..., 48}. In other words, a value of the first time period may be 10 ms, 20 ms, 30 ms, 40 ms, 50 ms, 60 ms, 70 ms, ..., 150 ms, 160 ms, 170 ms, 180 ms, ..., 320 ms, ..., or 480 ms.
When the least common multiple of the SSB configuration period and the PRACH configuration period is equal to 20 ms, the third value set={1, 2, 3, 4, 5, 6, 7, 8, 9, ..., 16, ..., 24}. In other words, a value of the first time period may be 20 ms, 40 ms, 60 ms, 80 ms, 100 ms, 120 ms, 140 ms, 160 ms, 180 ms, ..., 320 ms, ..., or 480 ms.
When the least common multiple of the SSB configuration period and the PRACH configuration period is equal to 40 ms, the third value set={1, 2, 3, 4, 5, 6, 7, 8, 9, 10, 11, 12}. In other words, a value of the first time period may be 40 ms, 80 ms, 120 ms, 160 ms, 200 ms, 240 ms, 280 ms, 320 ms, 360 ms, 400 ms, 440 ms, or 480 ms.
When the least common multiple of the SSB configuration period and the PRACH configuration period is equal to 80 ms, the third value set={1, 2, 3, 4, 5, 6}. In other words, a value of the first time period may be 80 ms, 160 ms, 240 ms, 320 ms, 400 ms, or 480 ms.
When the least common multiple of the SSB configuration period and the PRACH configuration period is equal to 160 ms, the third value set={1, 2, 3}. In other words, a value of the first time period may be 160 ms, 320 ms, or 480 ms.

**Table 5**

| Minimum common multiple (millisecond) of the SSB configuration period and PRACH configuration period | First time period (quantity of PRACH configuration periods/multiple of the PRACH configuration period) |
|---|---|
| 10 | {1, 2, 3, 4, 5, 6, 7, 8, 9, 10, 11, 12, 13, 14, 15, 16, 17, 18, ..., 32, ..., 48} |
| 20 | {1, 2, 3, 4, 5, 6, 7, 8, 9, 10, 11, 12, 13, 14, 15, 16, ..., 24} |
| 40 | {1, 2, 3, 4, 5, 6, 7, 8, 9, 10, 11, 12} |
| 80 | {1, 2, 3, 4, 5, 6} |
| 160 | {1, 2, 3} |

For another example, when the value in the third value set is one or more of positive integers other than one or more numbers in 1, 2, 4, 8, and 16 and less than or equal to X, X=48 is used as an example. As shown in Table 6, when the least common multiple of the SSB configuration period and the PRACH configuration period is equal to 10 ms, the third value set={3, 5, 6, 7, 9, 10, 11, 12, 13, 14, 15, 17, 18, ..., 32, ..., 48}. In other words, a value of the first time period may be 30 ms, 50 ms, 60 ms, 70 ms, 90 ms, 100 ms, 110 ms, 120 ms, 130 ms, 140 ms, 150 ms, 170 ms, 180 ms, ..., 320 ms, ..., or 480 ms.

When the least common multiple of the SSB configuration period and the PRACH configuration period is equal to 20 ms, the third value set={3, 5, 6, 7, 9, 10, 11, 12, 13, 14, 15, 16, ..., 24}. In other words, a value of the first time period may be 60 ms, 100 ms, 120 ms, 140 ms, 180 ms, 200 ms, 220 ms, 240 ms, 260 ms, 280 ms, 300 ms, 320 ms, ..., or 480 ms.

When the least common multiple of the SSB configuration period and the PRACH configuration period is equal to 40 ms, the third value set={3, 5, 6, 7, 8, 9, 10, 11, 12}. In other words, a value of the first time period may be 120 ms, 200 ms, 240 ms, 280 ms, 320 ms, 360 ms, 400 ms, 440 ms, or 480 ms.

When the least common multiple of the SSB configuration period and the PRACH configuration period is equal to 80 ms, the third value set={3, 5, 6}. In other words, a value of the first time period may be 240 ms, 400 ms, or 480 ms.

When the least common multiple of the SSB configuration period and the PRACH configuration period is equal to 160 ms, the third value set={2, 3}. In other words, a value of the first time period may be 320 ms or 480 ms.

**Table 6**

| Minimum common multiple (millisecond) of the SSB configuration period and PRACH configuration period | First time period (quantity of PRACH configuration periods/multiple of the PRACH configuration period) |
|---|---|
| 10 | {3, 5, 6, 7, 9, 10, 11, 12, 13, 14, 15, 17, 18, ..., 32, ..., 48} |
| 20 | {3, 5, 6, 7, 9, 10, 11, 12, 13, 14, 15, 16, ..., 24} |
| 40 | {3, 5, 6, 7, 8, 9, 10, 11, 12} |
| 80 | {3, 5, 6} |
| 160 | {2, 3} |

During specific implementation, the terminal device/access network device may determine, based on the PRACH configuration period, a row in a corresponding table (for example, a table in Table 2 to Table 6), and then select, from the row as the second time period, the shortest duration in all the duration that satisfies that mapping between the N SSBs and the M RO groups is performed at least once.

It should be understood that, in this application, a product of the PRACH configuration period and a largest value in the first value set is maximum duration of the first time period. Generally, the maximum duration of the first time period is greater than 160 ms, and the maximum duration of the first time period is an integer multiple of 80 ms or 160 ms. For example, the maximum duration of the first time period may be 240 ms, 320 ms, 400 ms, 480 ms, 560 ms, 640 ms, 720 ms, 800 ms, or 960 ms. In other words, the largest value in the first value set may be 24, 32, 40, 48, 56, 64, 72, 80, 96, or the like. For ease of description, in all of Table 2 to Table 6, descriptions are provided by using an example in which the maximum duration of the first time period is 480 ms, that is, X=48.

In this application, an SSB-RO group association pattern period (namely, the first time period) in a PRACH repetition sending scenario is defined, so that implementation complexity can be reduced. Specifically, the first time period is the shortest duration in all the duration that satisfies that mapping between the N SSBs and the M RO groups is performed at least once and that the mapping between the N SSBs and the M RO groups is the same in each of the K consecutive first time periods. In addition, because more ROs are involved in the PRACH repetition sending scenario, the first time period may exceed a maximum value (namely, 160 ms) of an SSB-RO association pattern period defined in an existing protocol. Based on this, more values of the maximum duration of the first time period are further configured in this application, for example, 240 ms, 320 ms, 400 ms, 480 ms, 560 ms, 640 ms, 720 ms, 800 ms, or 960 ms, to avoid a case in which the value of the first time period cannot be defined. Optionally, based on the method in this application, the repetition sending delay may further be reduced.

It should be noted that, for the terminal device, the foregoing step S602 is performed after step S601. For the access network device, the foregoing step S602 may be performed after step S601, or the foregoing step S602 may be performed before step S601. This is not limited herein.

Optionally, the following further describes the RO group in this application.

### (1) Definition of the RO group:

In some feasible implementations, an RO at an earliest time domain position in the RO group is a first RO, an RO other than the first RO is a second RO, and a sum of distances between time domain positions of second ROs and the time domain position of the first RO is the smallest. In other words, ROs in the RO group are characterized by a shortest distance in time domain.

Optionally, all ROs in the RO group have a same frequency domain ranking, where the frequency domain ranking of an RO is an appearance ranking/position of the RO in one or more ROs in frequency domain, the one or more ROs have a same time domain position as the RO, and the one or more ROs are associated with a same SSB as the RO. In other words, in frequency domain, ROs in a same RO group are characterized by a same frequency domain ranking in frequency domain. Based on this, the RO group may conform to any one of the foregoing case 1, case 2, case 3, and case 4.

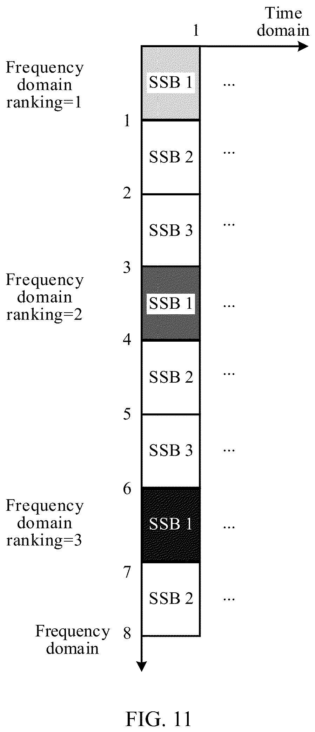

For example, FIG. 11 is a diagram of a frequency domain ranking according to an embodiment of this application. As shown in FIG. 11, a quantity N of configured SSBs is equal to 3, the SSBs are an SSB 1, an SSB 2, and an SSB 3, an RO quantity configured in frequency domain is equal to 8 (that is, msg1-FDM=8). FIG. 11 shows a case in which one RO is associated with one SSB. An SSB index in each grid in FIG. 11 represents the SSB mapped to the RO. An RO-SSB mapping rule in FIG. 11 is frequency domain first and then time domain. An RO position is defined as (t, f), where t represents a coordinate position in time domain, and f represents a coordinate position in frequency domain. ROs corresponding to the SSB 1 are used as an example. ROs having a same time domain position are ROs whose RO positions are (1, 1), (1, 4), and (1, 7). From a perspective of the frequency domain, an appearance position of the RO whose RO position is (1, 1) in the three ROs is 1 (that is, the RO whose RO position is (1, 1) is a 1^{st} RO that appears in the three ROs), an appearance position of the RO whose RO position is (1, 4) in the three ROs is 2 (that is, the RO whose RO position is (1, 4) is a 2^{nd} RO that appears in the three ROs), and an appearance position of the RO whose RO position is (1, 7) in the three ROs is 3 (that is, the RO whose RO position is (1, 7) is a 3^{rd} RO that appears in the three ROs). Therefore, a frequency domain ranking of the RO whose RO position is (1, 1) is 1, a frequency domain ranking of the RO whose RO position is (1, 4) is 2, and a frequency domain ranking of the RO whose RO position is (1, 7) is 3.

It should be noted that, in this application, arrow directions on all frequency domain coordinate axes indicate an ascending order of frequencies, and arrow directions on all time domain coordinate axes indicate a chronological order.

Optionally, all ROs in the RO group have a same frequency domain ranking, where a frequency domain ranking of any RO is an appearance ranking of the any RO in one or more ROs in frequency domain, the one or more ROs have a same time domain position as the any RO, and all SSBs associated with the one or more ROs are the same as all SSBs associated with the any RO (that is, the RO group conforms to the foregoing case 1).

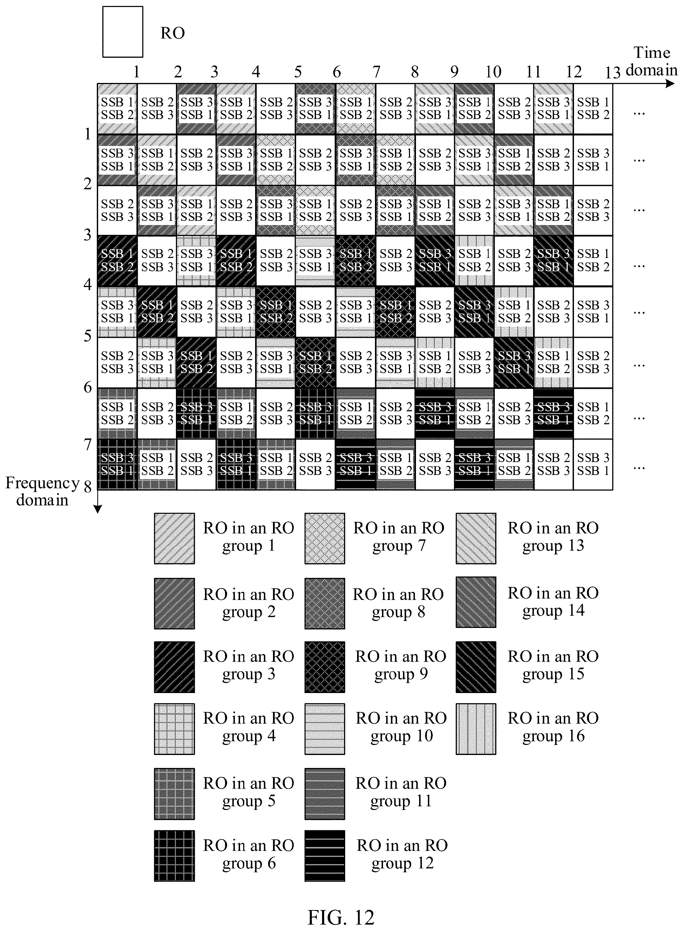

Optionally, all ROs in the RO group have a same frequency domain ranking, where a frequency domain ranking of any RO is an appearance ranking of the any RO in one or more ROs in frequency domain, the one or more ROs have a same time domain position as the any RO, all SSBs associated with the one or more ROs are the same as all SSBs associated with the any RO, and all the ROs in the RO group have a same mapping order of associated SSBs (that is, the RO group conforms to the foregoing case 2). For example, FIG. 12 is a diagram of an RO group according to an embodiment of this application. As shown in FIG. 12, a quantity N of configured SSBs is equal to 3, the SSBs are an SSB 1, an SSB 2, and an SSB 3, a quantity of times of repetition sending (which is also referred to as a repetition level) is 4 (that is, the RO group includes four ROs), and an RO quantity configured in frequency domain is equal to 8 (that is, msg1-FDM=8). FIG. 12 shows a case in which one RO is associated with two SSBs. An SSB index in each grid in FIG. 12 represents the SSBs mapped to the RO (as shown in FIG. 12, two SSBs are mapped to each RO). An RO-SSB mapping rule in FIG. 12 is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO group 1 are ROs whose RO positions are (1, 1), (2, 2), (3, 3), and (4, 1).

Four ROs included in an RO group 2 are ROs whose RO positions are (1, 2), (2, 3), (3, 1), and (4, 2).

Four ROs included in an RO group 3 are ROs whose RO positions are (1, 4), (2, 5), (3, 6), and (4, 4).

Four ROs included in an RO group 4 are ROs whose RO positions are (1, 5), (2, 6), (3, 4), and (4, 5).

Four ROs included in an RO group 5 are ROs whose RO positions are (1, 7), (2, 8), (4, 7), and (5, 8).

Four ROs included in an RO group 6 are ROs whose RO positions are (1, 8), (3, 7), (4, 8), and (6, 7).

Four ROs included in an RO group 7 are ROs whose RO positions are (5, 2), (6, 3), (7, 1), and (8, 2).

Four ROs included in an RO group 8 are ROs whose RO positions are (5, 3), (6, 1), (7, 2), and (8, 3).

Four ROs included in an RO group 9 are ROs whose RO positions are (5, 5), (6, 6), (7, 4), and (8, 5).

Four ROs included in an RO group 10 are ROs whose RO positions are (5, 6), (6, 4), (7, 5), and (8, 6).

Four ROs included in an RO group 11 are ROs whose RO positions are (7, 7), (8, 8), (10, 7), and (11, 8).

Two ROs included in an RO group 12 are ROs whose RO positions are (7, 8), (9, 7), (10, 8), and (12, 7).

Two ROs included in an RO group 13 are ROs whose RO positions are (9, 1), (10, 2), (11, 3), and (12, 1).

Two ROs included in an RO group 14 are ROs whose RO positions are (9, 3), (10, 1), (11, 2), and (12, 3).

Two ROs included in an RO group 15 are ROs whose RO positions are (9, 4), (10, 5), (11, 6), and (12, 4).

Two ROs included in an RO group 16 are ROs whose RO positions are (9, 6), (10, 4), (11, 5), and (12, 6).

It can be learned from FIG. 12 that all the ROs in the RO group have the same mapping order of the associated SSBs, for example, the SSB 1 and the SSB 2 in the RO group 1, for another example, the SSB 3 and the SSB 1 in the RO group 2.

Optionally, the following defines an index of the RO group:
An index of one of M RO groups is determined in an order of frequency domain first and then time domain in positions of the M RO groups based on a position of the RO group, and the position of the RO group is determined based on a position of at least one RO in the RO group. For example, the position of the RO group may be determined by a position of a 1^{st} RO in the RO group in time domain, a position of a last RO in the RO group in time domain, a position of an RO in the RO group, or an average value of positions of ROs in the RO group. The index of the RO group may be for marking the RO group.

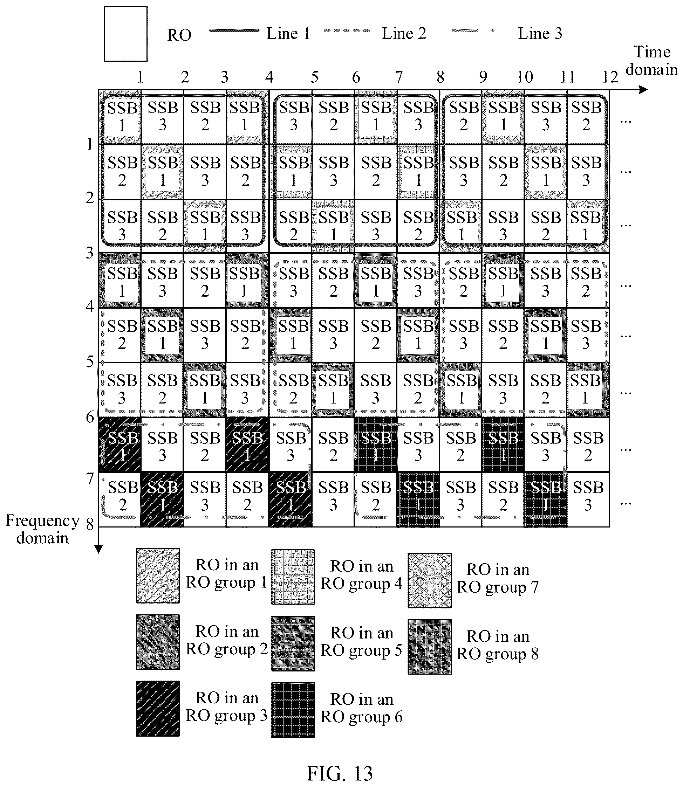

For example, FIG. 13 is another diagram of an RO group according to an embodiment of this application. As shown in FIG. 13, a quantity N of configured SSBs is equal to 3, the SSBs are an SSB 1, an SSB 2, and an SSB 3, a quantity of times of repetition sending (which is also referred to as a repetition level) is 4 (that is, each RO group includes four ROs), and an RO quantity configured in frequency domain is equal to 8 (that is, msg1-FDM=8). FIG. 13 shows a case in which one RO is associated with one SSB. An SSB index in each grid in FIG. 13 represents the SSB mapped to the RO. An RO-SSB mapping rule in FIG. 13 is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO group 1 are ROs whose RO positions are (1, 1), (2, 2), (3, 3), and (4, 1).

Four ROs included in an RO group 2 are ROs whose RO positions are (1, 4), (2, 5), (3, 6), and (4, 4).

Four ROs included in an RO group 3 are ROs whose RO positions are (1, 7), (2, 8), (4, 7), and (5, 8).

Four ROs included in an RO group 4 are ROs whose RO positions are (5, 2), (6, 3), (7, 1), and (8, 2).

Four ROs included in an RO group 5 are ROs whose RO positions are (5, 5), (6, 6), (7, 4), and (8, 5).

Four ROs included in an RO group 6 are ROs whose RO positions are (7, 7), (8, 8), (10, 7), and (11, 8).

Four ROs included in an RO group 7 are ROs whose RO positions are (9, 3), (10, 1), (11, 2), and (12, 3).

Four ROs included in an RO group 8 are ROs whose RO positions are (9, 6), (10, 4), (11, 5), and (12, 6).

As shown in FIG. 13, a time domain distance between ROs in each RO group (namely, the RO group 1, the RO group 4, and the RO group 7) framed by a line 1 is the shortest, and frequency domain rankings are the same (all are 1). A time domain distance between ROs in each RO group (namely, the RO group 2, the RO group 5, and the RO group 8) framed by a line 2 is the shortest, and frequency domain rankings are the same (all are 2). A time domain distance between ROs in each RO group (namely, the RO group 3 and the RO group 6) framed by a line 3 is the shortest, and frequency domain rankings are the same (all are 3).

In an implementation, an example in which a position of each RO group is a position of a 1^{st} RO in the RO group in time domain is used, as shown in FIG. 13:
A position of a 1^{st} RO in the RO group 1 is (1, 1).
A position of a 1^{st} RO in the RO group 2 is (1, 4).
A position of a 1^{st} RO in the RO group 3 is (1, 7).
A position of a 1^{st} RO in the RO group 4 is (5, 2).
A position of a 1^{st} RO in the RO group 5 is (5, 5).
A position of a 1^{st} RO in the RO group 6 is (7, 7).
A position of a 1^{st} RO in the RO group 7 is (9, 3).
A position of a 1^{st} RO in the RO group 8 is (9, 6).

Therefore, the following may be determined: A position of the RO group 1 is (1, 1), a position of the RO group 2 is (1, 4), a position of the RO group 3 is (1, 7), a position of the RO group 4 is (5, 2), a position of the RO group 5 is (5, 5), a position of the RO group 6 is (7, 7), a position of the RO group 7 is (9, 3), and a position of the RO group 8 is (9, 6).

When the index of the RO group is determined in the order of frequency domain first and then time domain in the positions of the M RO groups based on the position of the RO group, the following may be determined: An index of the RO group whose RO group position is (1, 1) is 1, an index of the RO group whose RO group position is (1, 4) is 2, an index of the RO group whose RO group position is (1, 7) is 3, an index of the RO group whose RO group position is (5, 2) is 4, an index of the RO group whose RO group position is (5, 5) is 5, an index of the RO group whose RO group position is (7, 7) is 6, an index of the RO group whose RO group position is (9, 3) is 7, and an index of the RO group whose RO group position is (9, 6) is 8.

In another implementation, an example in which a position of each RO group is a position of a last RO in the RO group in time domain is used, as shown in FIG. 13:
A position of a last RO in the RO group 1 is (4, 1).
A position of a last RO in the RO group 2 is (4, 4).
A position of a last RO in the RO group 3 is (5, 8).
A position of a last RO in the RO group 4 is (8, 2).
A position of a last RO in the RO group 5 is (8, 5).
A position of a last RO in the RO group 6 is (11, 8).
A position of a last RO in the RO group 7 is (12, 3).
A position of a last RO in the RO group 8 is (12, 6).

Therefore, the following may be determined: A position of the RO group 1 is (4, 1), a position of the RO group 2 is (4, 4), a position of the RO group 3 is (5, 8), a position of the RO group 4 is (8, 2), a position of the RO group 5 is (8, 5), a position of the RO group 6 is (11, 8), a position of the RO group 7 is (12, 3), and a position of the RO group 8 is (12, 6).

When the index of the RO group is determined in the order of frequency domain first and then time domain in the positions of the M RO groups based on the position of the RO group, the following may be determined: An index of the RO group whose RO group position is (4, 1) is 1, an index of the RO group whose RO group position is (4, 4) is 2, an index of the RO group whose RO group position is (5, 8) is 3, an index of the RO group whose RO group position is (8, 2) is 4, an index of the RO group whose RO group position is (8, 5) is 5, an index of the RO group whose RO group position is (11, 8) is 6, an index of the RO group whose RO group position is (12, 3) is 7, and an index of the RO group whose RO group position is (12, 6) is 8.

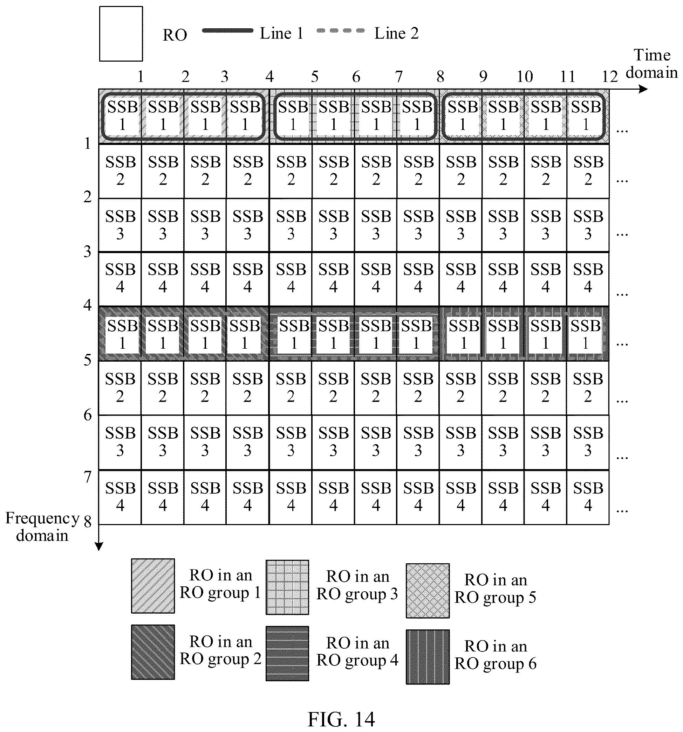

For another example, FIG. 14 is still another diagram of an RO group according to an embodiment of this application. As shown in FIG. 14, a quantity N of configured SSBs is equal to 4, the SSBs are an SSB 1, an SSB 2, an SSB 3, and an SSB 4, a quantity of times of repetition sending (which is also referred to as a repetition level) is 4 (that is, each RO group includes four ROs), and an RO quantity configured in frequency domain is equal to 8 (that is, msg1-FDM=8). FIG. 14 shows a case in which one RO is associated with one SSB. An SSB index in each grid in FIG. 14 represents the SSB mapped to the RO. An RO-SSB mapping rule in FIG. 14 is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO group 1 are ROs whose RO positions are (1, 1), (2, 1), (3, 1), and (4, 1).

Four ROs included in an RO group 2 are ROs whose RO positions are (1, 5), (2, 5), (3, 5), and (4, 5).

Four ROs included in an RO group 3 are ROs whose RO positions are (5, 1), (6, 1), (7, 1), and (8, 1).

Four ROs included in an RO group 4 are ROs whose RO positions are (5, 5), (6, 5), (7, 5), and (8, 5).

Four ROs included in an RO group 5 are ROs whose RO positions are (9, 1), (10, 1), (11, 1), and (12, 1).

Four ROs included in an RO group 6 are ROs whose RO positions are (9, 5), (10, 5), (11, 5), and (12, 5).

As shown in FIG. 14, a time domain distance between ROs in each RO group (namely, the RO group 1, the RO group 3, and the RO group 5) framed by a line 1 is the shortest, and frequency domain rankings are the same (all are 1). A time domain distance between ROs in each RO group (namely, the RO group 2, the RO group 4, and the RO group 6) framed by a line 2 is the shortest, and frequency domain rankings are the same (all are 2).

In an implementation, an example in which a position of each RO group is a position of a 1^{st} RO in the RO group in time domain is used, as shown in FIG. 14:
A position of a 1^{st} RO in the RO group 1 is (1, 1).
A position of a 1^{st} RO in the RO group 2 is (1, 5).
A position of a 1^{st} RO in the RO group 3 is (5, 1).
A position of a 1^{st} RO in the RO group 4 is (5, 5).
A position of a 1^{st} RO in the RO group 5 is (9, 1).
A position of a 1^{st} RO in the RO group 6 is (9, 5).

Therefore, the following may be determined: A position of the RO group 1 is (1, 1), a position of the RO group 2 is (1, 5), a position of the RO group 3 is (5, 1), a position of the RO group 4 is (5, 5), a position of the RO group 5 is (9, 1), and a position of the RO group 6 is (9, 5).

When the index of the RO group is determined in the order of frequency domain first and then time domain in the positions of the M RO groups based on the position of the RO group, the following may be determined: An index of the RO group whose RO group position is (1, 1) is 1, an index of the RO group whose RO group position is (1, 5) is 2, an index of the RO group whose RO group position is (5, 1) is 3, an index of the RO group whose RO group position is (5, 5) is 4, an index of the RO group whose RO group position is (9, 1) is 5, and an index of the RO group whose RO group position is (9, 5) is 6.

In another implementation, an example in which a position of each RO group is a position of a last RO in the RO group in time domain is used, as shown in FIG. 14:
A position of a last RO in the RO group 1 is (4, 1).
A position of a last RO in the RO group 2 is (4, 5).
A position of a last RO in the RO group 3 is (8, 1).
A position of a last RO in the RO group 4 is (8, 5).
A position of a last RO in the RO group 5 is (12, 1).
A position of a last RO in the RO group 6 is (12, 5).

Therefore, the following may be determined: A position of the RO group 1 is (4, 1), a position of the RO group 2 is (4, 5), a position of the RO group 3 is (8, 1), a position of the RO group 4 is (8, 5), a position of the RO group 5 is (12, 1), and a position of the RO group 6 is (12, 5).

When the index of the RO group is determined in the order of frequency domain first and then time domain in the positions of the M RO groups based on the position of the RO group, the following may be determined: An index of the RO group whose RO group position is (4, 1) is 1, an index of the RO group whose RO group position is (4, 5) is 2, an index of the RO group whose RO group position is (8, 1) is 3, an index of the RO group whose RO group position is (8, 5) is 4, an index of the RO group whose RO group position is (12, 1) is 5, and an index of the RO group whose RO group position is (12, 5) is 6.

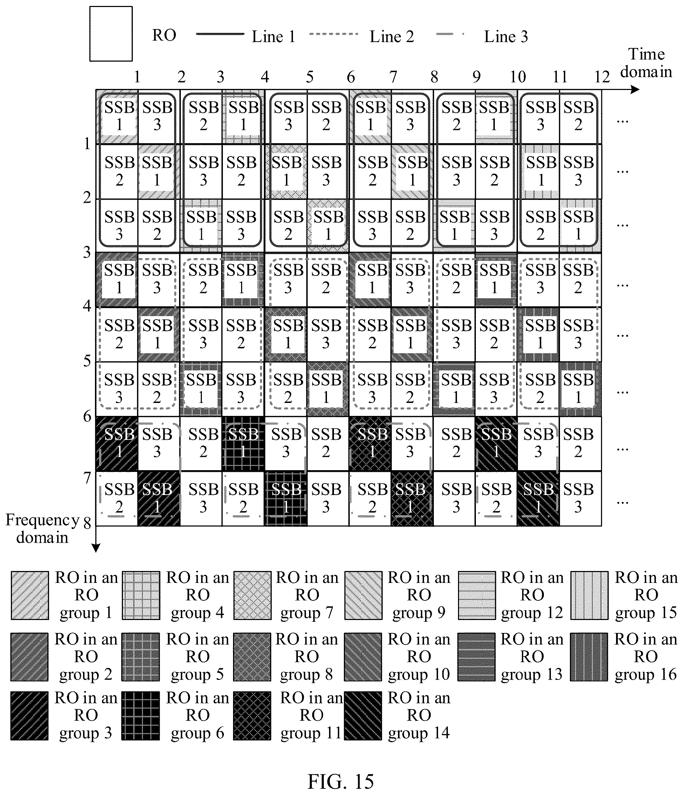

For still another example, FIG. 15 is still another diagram of an RO group according to an embodiment of this application. As shown in FIG. 15, a quantity N of configured SSBs is equal to 3, the SSBs are an SSB 1, an SSB 2, and an SSB 3, a quantity of times of repetition sending (which is also referred to as a repetition level) is 2 (that is, each RO group includes two ROs), and an RO quantity configured in frequency domain is equal to 8 (that is, msg1-FDM=8). FIG. 15 shows a case in which one RO is associated with one SSB. An SSB index in each grid in FIG. 15 represents the SSB mapped to the RO. An RO-SSB mapping rule in FIG. 15 is frequency domain first and then time domain. An RO position is defined as (t, f), where t represents a coordinate position in time domain, and f represents a coordinate position in frequency domain. ROs corresponding to the SSB 1 are used as an example.

Two ROs included in an RO group 1 are ROs whose RO positions are (1, 1) and (2, 2).

Two ROs included in an RO group 2 are ROs whose RO positions are (1, 4) and (2, 5).

Two ROs included in an RO group 3 are ROs whose RO positions are (1, 7) and (2, 8).

Two ROs included in an RO group 4 are ROs whose RO positions are (3, 3) and (4, 1).

Two ROs included in an RO group 5 are ROs whose RO positions are (3, 6) and (4, 4).

Two ROs included in an RO group 6 are ROs whose RO positions are (4, 7) and (5, 8).

Two ROs included in an RO group 7 are ROs whose RO positions are (5, 2) and (6, 3).

Two ROs included in an RO group 8 are ROs whose RO positions are (5, 5) and (6, 6).

Two ROs included in an RO group 9 are ROs whose RO positions are (7, 1) and (8, 2).

Two ROs included in an RO group 10 are ROs whose RO positions are (7, 4) and (8, 5).

Two ROs included in an RO group 11 are ROs whose RO positions are (7, 7) and (8, 8).

Two ROs included in an RO group 12 are ROs whose RO positions are (9, 3) and (10, 1).

Two ROs included in an RO group 13 are ROs whose RO positions are (9, 6) and (10, 4).

Two ROs included in an RO group 14 are ROs whose RO positions are (10, 7) and (11, 8).

Two ROs included in an RO group 15 are ROs whose RO positions are (11, 2) and (12, 3).

Two ROs included in an RO group 16 are ROs whose RO positions are (11, 5) and (12, 6).

As shown in FIG. 15, a time domain distance between ROs in each RO group (namely, the RO group 1, the RO group 4, the RO group 7, the RO group 9, the RO group 12, and the RO group 15) framed by a line 1 is the shortest, and frequency domain rankings are the same (all are 1). A time domain distance between ROs in each RO group (namely, the RO group 2, the RO group 5, the RO group 8, the RO group 10, the RO group 13, and the RO group 16) framed by a line 2 is the shortest, and frequency domain rankings are the same (all are 2). A time domain distance between ROs in each RO group (namely, the RO group 3, the RO group 6, the RO group 11, and the RO group 14) framed by a line 3 is the shortest, and frequency domain rankings are the same (all are 3).

In an implementation, an example in which a position of each RO group is a position of a 1^{st} RO in the RO group in time domain is used, as shown in FIG. 15:
A position of a 1^{st} RO in the RO group 1 is (1, 1).
A position of a 1^{st} RO in the RO group 2 is (1, 4).
A position of a 1^{st} RO in the RO group 3 is (1, 7).
A position of a 1^{st} RO in the RO group 4 is (3, 3).
A position of a 1^{st} RO in the RO group 5 is (3, 6).
A position of a 1^{st} RO in the RO group 6 is (4, 7).
A position of a 1^{st} RO in the RO group 7 is (5, 2).
A position of a 1^{st} RO in the RO group 8 is (5, 5).
A position of a 1^{st} RO in the RO group 9 is (7, 1).
A position of a 1^{st} RO in the RO group 10 is (7, 4).
A position of a 1^{st} RO in the RO group 11 is (7, 7).
A position of a 1^{st} RO in the RO group 12 is (9, 3).
A position of a 1^{st} RO in the RO group 13 is (9, 6).
A position of a 1^{st} RO in the RO group 14 is (10, 7).
A position of a 1^{st} RO in the RO group 15 is (11, 2).
A position of a 1^{st} RO in the RO group 16 is (11, 5).

Therefore, the following may be determined: A position of the RO group 1 is (1, 1), a position of the RO group 2 is (1, 4), a position of the RO group 3 is (1, 7), the position of the 1^{st} RO in the RO group 4 is (3, 3), a position of the RO group 5 is (3, 6), a position of the RO group 6 is (4, 7), a position of the RO group 7 is (5, 2), a position of the RO group 8 is (5, 5), a position of the RO group 9 is (7, 1), a position of the RO group 10 is (7, 4), a position of the RO group 11 is (7, 7), a position of the RO group 12 is (9, 3), a position of the RO group 13 is (9, 6), a position of the RO group 14 is (10, 7), a position of the RO group 15 is (11, 2), and a position of the RO group 16 is (11, 5).

When the index of the RO group is determined in the order of frequency domain first and then time domain in the positions of the M RO groups based on the position of the RO group, the following may be determined: An index of the RO group whose RO group position is (1, 1) is 1, an index of the RO group whose RO group position is (1, 4) is 2, an index of the RO group whose RO group position is (1, 7) is 3, an index of the RO group in which the position of the 1^{st} RO in the RO group is (3, 3) is 4, an index of the RO group whose RO group position is (3, 6) is 5, an index of the RO group whose RO group position is (4, 7) is 6, an index of the RO group whose RO group position is (5, 2) is 7, an index of the RO group whose RO group position is (5, 5) is 8, an index of the RO group whose RO group position is (7, 1) is 9, an index of the RO group whose RO group position is (7, 4) is 10, an index of the RO group whose RO group position is (7, 7) is 11, an index of the RO group whose RO group position is (9, 3) is 12, an index of the RO group whose RO group position is (9, 6) is 13, an index of the RO group whose RO group position is (10, 7) is 14, an index of the RO group whose RO group position is (11, 2) is 15, and an index of the RO group whose RO group position is (11, 5) is 16.

In another implementation, an example in which a position of each RO group is a position of a last RO in the RO group in time domain is used, as shown in FIG. 15:
A position of a last RO in the RO group 1 is (2, 2).
A position of a last RO in the RO group 2 is (2, 5).
A position of a last RO in the RO group 3 is (2, 8).
A position of a last RO in the RO group 4 is (4, 1).
A position of a last RO in the RO group 5 is (4, 4).
A position of a last RO in the RO group 6 is (5, 8).
A position of a last RO in the RO group 7 is (6, 3).
A position of a last RO in the RO group 8 is (6, 6).
A position of a last RO in the RO group 9 is (8, 2).
A position of a last RO in the RO group 10 is (8, 5).
A position of a last RO in the RO group 11 is (8, 8).
A position of a last RO in the RO group 12 is (10, 1).
A position of a last RO in the RO group 13 is (10, 4).
A position of a last RO in the RO group 14 is (11, 8).
A position of a last RO in the RO group 15 is (12, 3).
A position of a last RO in the RO group 16 is (12, 6).

Therefore, the following may be determined: A position of the RO group 1 is (2, 2), a position of the RO group 2 is (2, 5), a position of the RO group 3 is (2, 8), a position of the RO group 4 is (4, 1), a position of the RO group 5 is (4, 4), a position of the RO group 6 is (5, 8), a position of the RO group 7 is (6, 3), a position of the RO group 8 is (6, 6), a position of the RO group 9 is (8, 2), a position of the RO group 10 is (8, 5), a position of the RO group 11 is (8, 8), a position of the RO group 12 is (10, 1), a position of the RO group 13 is (10, 4), a position of the RO group 14 is (11, 8), a position of the RO group 15 is (12, 3), and a position of the RO group 16 is (12, 6).

When the index of the RO group is determined in the order of frequency domain first and then time domain in the positions of the M RO groups based on the position of the RO group, the following may be determined: An index of the RO group whose RO group position is (2, 2) is 1, an index of the RO group whose RO group position is (2, 5) is 2, an index of the RO group whose RO group position is (2, 8) is 3, an index of the RO group whose RO group position is (4, 1) is 4, an index of the RO group whose RO group position is (4, 4) is 5, an index of the RO group whose RO group position is (5, 8) is 6, an index of the RO group whose RO group position is (6, 3) is 7, an index of the RO group whose RO group position is (6, 6) is 8, an index of the RO group whose RO group position is (8, 2) is 9, an index of the RO group whose RO group position is (8, 5) is 10, an index of the RO group whose RO group position is (8, 8) is 11, an index of the RO group whose RO group position is (10, 1) is 12, an index of the RO group whose RO group position is (10, 4) is 13, an index of the RO group whose RO group position is (11, 8) is 14, an index of the RO group whose RO group position is (12, 3) is 15, and an index of the RO group whose RO group position is (12, 6) is 16.

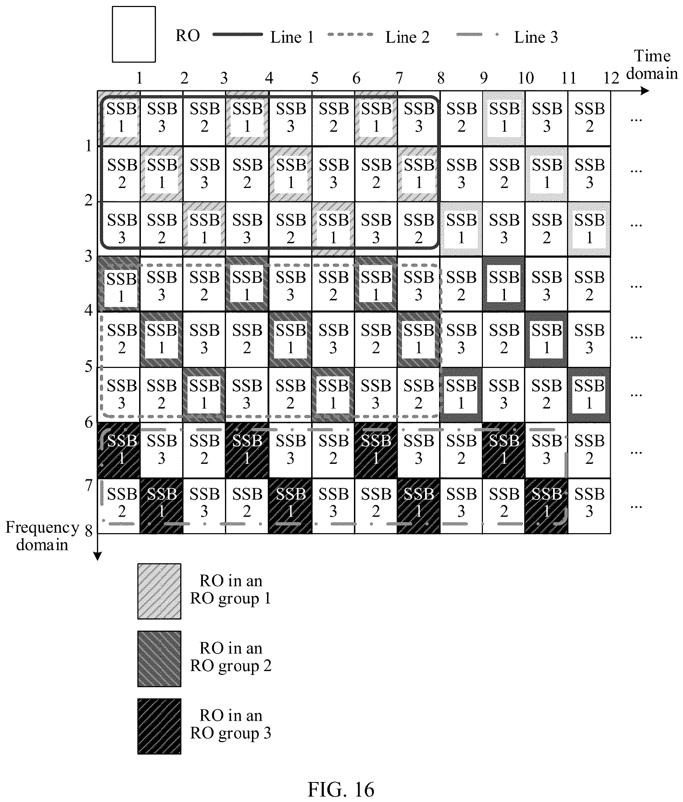

For still another example, FIG. 16 is still another diagram of an RO group according to an embodiment of this application. As shown in FIG. 16, a quantity N of configured SSBs is equal to 3, the SSBs are an SSB 1, an SSB 2, and an SSB 3, a quantity of times of repetition sending (which is also referred to as a repetition level) is 8 (that is, each RO group includes eight ROs), and an RO quantity configured in frequency domain is equal to 8 (that is, msg1-FDM=8). FIG. 16 shows a case in which one RO is associated with one SSB. An SSB index in each grid in FIG. 16 represents the SSB mapped to the RO. An RO-SSB mapping rule in FIG. 16 is frequency domain first and then time domain. An RO position is defined as (t, f), where t represents a coordinate position in time domain, and f represents a coordinate position in frequency domain. ROs corresponding to the SSB 1 are used as an example.

Eight ROs included in an RO group 1 are ROs whose RO positions are (1, 1), (2, 2), (3, 3), (4, 1), (5, 2), (6, 3), (7, 1), and (8, 2).

Eight ROs included in an RO group 2 are ROs whose RO positions are (1, 4), (2, 5) (3, 6), (4, 4) (5, 5), (6, 6), (7, 4), and (8, 5).

Eight ROs included in an RO group 3 are ROs whose RO positions are (1, 7), (2, 8) (4, 7), (5, 8) (7, 7), (8, 8), (10, 7), and (11, 8).

As shown in FIG. 16, a time domain distance between ROs in each RO group (namely, the RO group 1) framed by a line 1 is the shortest, and frequency domain rankings are the same (all are 1). A time domain distance between ROs in each RO group (namely, the RO group 2) framed by a line 2 is the shortest, and frequency domain rankings are the same (all are 2). A time domain distance between ROs in each RO group (namely, the RO group 3) framed by the line 2 is the shortest, and frequency domain rankings are the same (all are 3).

In an implementation, an example in which a position of each RO group is a position of a 1^{st} RO in the RO group in time domain is used, as shown in FIG. 16:
A position of a 1^{st} RO in the RO group 1 is (1, 1).
A position of a 1^{st} RO in the RO group 2 is (1, 4).
A position of a 1^{st} RO in the RO group 3 is (1, 7).

Therefore, the following may be determined: A position of the RO group 1 is (1, 1), a position of the RO group 2 is (1, 4), and a position of the RO group 3 is (1, 7).

When the index of the RO group is determined in the order of frequency domain first and then time domain in the positions of the M RO groups based on the position of the RO group, the following may be determined: An index of the RO group whose RO group position is (1, 1) is 1, an index of the RO group whose RO group position is (1, 4) is 2, and an index of the RO group whose RO group position is (1, 7) is 3.

In another implementation, an example in which a position of each RO group is a position of a last RO in the RO group in time domain is used, as shown in FIG. 16:
A position of a last RO in the RO group 1 is (8, 2).
A position of a last RO in the RO group 2 is (8, 5).
A position of a last RO in the RO group 3 is (11, 8).

Therefore, the following may be determined: A position of the RO group 1 is (8, 2), a position of the RO group 2 is (8, 5), and a position of the RO group 3 is (11, 8).

When the index of the RO group is determined in the order of frequency domain first and then time domain in the positions of the M RO groups based on the position of the RO group, the following may be determined: An index of the RO group whose RO group position is (8, 2) is 1, an index of the RO group whose RO group position is (8, 5) is 2, and an index of the RO group whose RO group position is (11, 8) is 3.

It should be noted that, in this application, the RO group whose RO group index is 1 is referred to as the RO group 1, the RO group whose RO group index is 2 is referred to as the RO group 2, the RO group whose RO group index is 3 is referred to as the RO group 3, and so on. Details are not listed one by one herein again.

For ease of understanding, the following mainly uses an example in which the position of the RO group is the position of the 1^{st} RO in the RO group in time domain for description. The index of the RO group is determined in the order of frequency domain first and then time domain in the positions of the M RO groups based on the position of the RO group.

### (2) Another definition of the RO group:

In some feasible implementations, when a frequency domain position of a third RO in a first RO set is the same as a frequency domain position of at least one fourth RO in the first RO set, a first RO group and a second RO group are determined, where the M RO groups include the first RO group and the second RO group. ROs in the first RO group are an RO in the first RO set other than the at least one fourth RO and at least one fifth RO in a second RO set, and ROs in the second RO group are an RO in the second RO set other than the at least one fifth RO and the at least one fourth RO in the first RO set. The at least one fifth RO has a same time domain position as the at least one fourth RO. The first RO set and the second RO set satisfy the following conditions: The first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In other words, when the frequency domain position of the third RO in the first RO set is the same as the frequency domain position of the fourth RO in the first RO set, and there is a second RO set that satisfies the following three conditions, frequency domain positions of the fourth RO in the first RO set and the fifth RO that is in the second RO set and that has the same time domain position as the fourth RO may be swapped. The three conditions that the second RO set satisfies are as follows: 1. The second RO set and the first RO set are associated with the at least one same SSB. 2. The quantity of ROs included in the second RO set is the same as the quantity of ROs included in the first RO set. 3. The duration occupied by the ROs in the second RO set is the same as the duration occupied by the ROs in the first RO set. Herein, swapping the frequency domain positions of the fourth RO in the first RO set and the fifth RO that is in the second RO set and that has the same time domain position as the fourth RO is also equivalent to performing a cyclic shift in frequency domain.

It may be understood that, that the duration occupied by the ROs in the first RO set is the same as the duration occupied by the ROs in the second RO set may be understood as that a quantity of ROs occupied by the ROs in the first RO set is the same as a quantity of ROs occupied by the ROs in the second RO set. For example, as shown in FIG. 13, all duration occupied by ROs in an RO set 1, an RO set 2, an RO set 4, an RO set 5, an RO set 7, and an RO set 8 is four ROs. All duration occupied by ROs in an RO set 3 and an RO set 6 is five ROs.

It may be understood that, in time domain, the first RO set or the second RO set further satisfies the following: An RO at an earliest time domain position in the first RO set or the second RO set is a sixth RO, an RO other than the sixth RO is a seventh RO, and a sum of distances between time domain positions of seventh ROs and the time domain position of the sixth RO is the smallest. In frequency domain, all ROs in the first RO set or the second RO set have a same frequency domain ranking, where a frequency domain ranking of any RO in the first RO set or the second RO set is an appearance ranking of the any RO in one or more ROs in frequency domain, the one or more ROs have a same time domain position as the any RO, and the one or more ROs are associated with a same SSB as the any RO. It is not difficult to understand that the RO set herein may be understood as the RO group defined in (1), and the RO group defined in (2) is an RO group obtained by performing frequency hopping processing on the RO group defined in (1). In other words, in (2), the RO set (namely, the RO group in (1)) may be understood as an initial RO group, and a final RO group (namely, the RO group in (2)) may be obtained by performing frequency hopping processing on the initial RO group. It should be noted that, because frequency hopping processing is performed on the RO group defined in (2), frequency hopping may cause ROs in the RO group to have different frequency domain rankings. It should be understood that, for a definition of an index of the RO set or the RO group in (2), refer to the definition of the index of the RO group in (1). Details are not described herein again.

Optionally, a time domain position of the third RO is earlier than the time domain position of the at least one fourth RO. In other words, when the frequency domain position of the third RO in the first RO set is the same as the frequency domain position of the at least one fourth RO in the first RO set, ROs whose positions are swapped are ROs at later time domain positions. Optionally, a time domain position of the third RO may alternatively be later than the time domain position of the at least one fourth RO. In other words, when the frequency domain position of the third RO in the first RO set is the same as the frequency domain position of the at least one fourth RO in the first RO set, ROs whose positions are swapped may alternatively be ROs at earlier time domain positions. For ease of description, the following mainly uses an example in which the ROs at the later time domain positions are swapped for description.

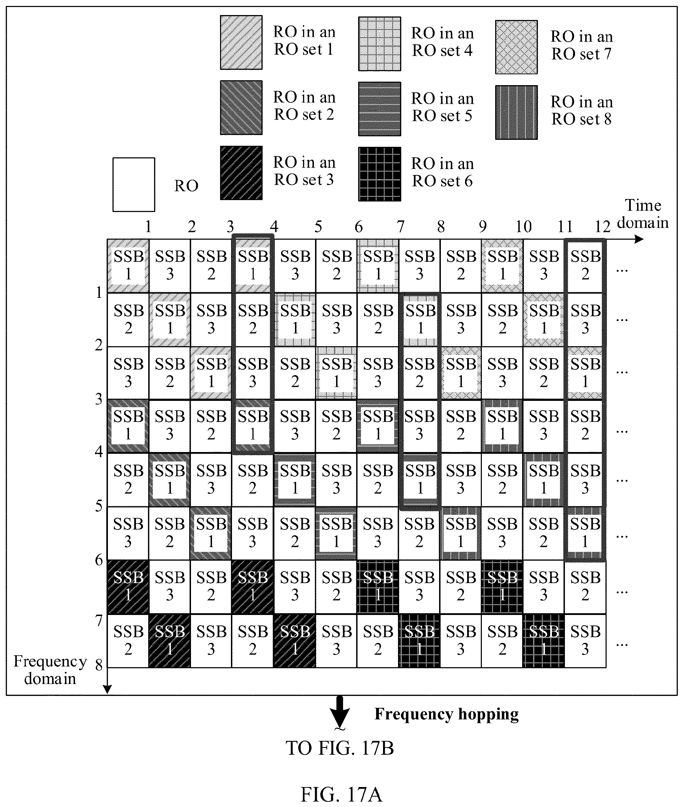

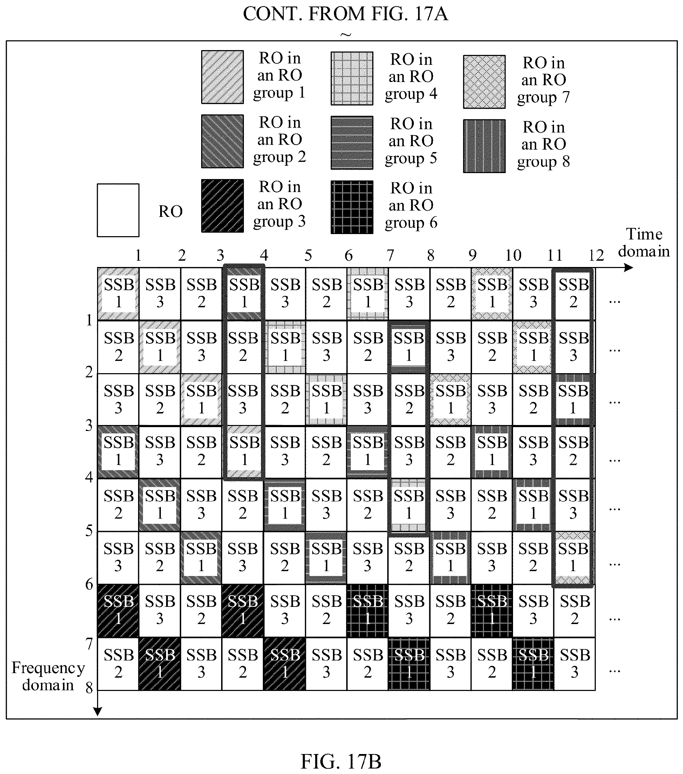

For example, FIG. 17A and FIG. 17B are still another diagram of an RO group according to an embodiment of this application. As shown in FIG. 17A and FIG. 17B, a quantity N of configured SSBs is equal to 3, the SSBs are an SSB 1, an SSB 2, and an SSB 3, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 17A and FIG. 17B show a case in which one RO is associated with one SSB. An SSB index in each grid in FIG. 17A and FIG. 17B represents the SSB mapped to the RO. An RO-SSB mapping rule in FIG. 17A and FIG. 17B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 2), (3, 3), and (4, 1).

Four ROs included in an RO set 2 are ROs whose RO positions are (1, 4), (2, 5), (3, 6), and (4, 4).

Four ROs included in an RO set 3 are ROs whose RO positions are (1, 7), (2, 8), (4, 7), and (5, 8).

Four ROs included in an RO set 4 are ROs whose RO positions are (5, 2), (6, 3), (7, 1), and (8, 2).

Four ROs included in an RO set 5 are ROs whose RO positions are (5, 5), (6, 6), (7, 4), and (8, 5).

Four ROs included in an RO set 6 are ROs whose RO positions are (7, 7), (8, 8), (10, 7), and (11, 8).

Four ROs included in an RO set 7 are ROs whose RO positions are (9, 3), (10, 1), (11, 2), and (12, 3).

Four ROs included in an RO set 8 are ROs whose RO positions are (9, 6), (10, 4), (11, 5), and (12, 6).

The RO set 1 is used as an example. The ROs whose RO positions are (1, 1) and (4, 1) in the RO set 1 have a same frequency domain position, and there is an RO set 2 that is associated with a same SSB (namely, the SSB 1) as the RO set 1, has a same repetition level (namely, 4) as the RO set 1, and occupies same duration (namely, four ROs) as the RO set 1. Therefore, the RO whose RO position is (4, 1) in the RO set 1 and an RO that is in the RO set 2 and that has a same time domain position as the RO whose RO position is (4, 1) may be swapped. That is, the RO whose RO position is (4, 1) in the RO set 1 and the RO whose RO position is (4, 4) in the RO set 2 are swapped, to generate an RO group 1 and an RO group 2. The RO set 4 is used as another example. The ROs whose RO positions are (5, 2) and (8, 2) in the RO set 4 have a same frequency domain position, and there is an RO set 5 that is associated with a same SSB (namely, the SSB 1) as the RO set 4, has a same repetition level (namely, 4) as the RO set 4, and occupies same duration (namely, four ROs) as the RO set 4. Therefore, the RO whose RO position is (8, 2) in the RO set 4 and the RO whose RO position is (8, 5) in the RO set 5 may be swapped, to generate an RO group 4 and an RO group 5. The RO set 7 is used as still another example. The ROs whose RO positions are (9, 3) and (12, 3) in the RO set 7 have a same frequency domain position, and there is an RO set 8 that is associated with a same SSB (namely, the SSB 1) as the RO set 7, has a same repetition level (namely, 4) as the RO set 7, and occupies same duration (namely, four ROs) as the RO set 7. Therefore, the RO whose RO position is (12, 3) in the RO set 7 and the RO whose RO position is (12, 6) in the RO set 8 may be swapped, to generate an RO group 4 and an RO group 5. Optionally, because the RO set 3 and the RO set 6 in FIG. 17A and FIG. 17B do not satisfy a frequency hopping processing condition, the RO set 3 may be directly determined as an RO group 3, and the RO set 6 may be directly determined as an RO group 6. As shown in FIG. 17A and FIG. 17B:

Four ROs included in the RO group 1 are ROs whose RO positions are (1, 1), (2, 2), (3, 3), and (4, 4).

Four ROs included in the RO group 2 are ROs whose RO positions are (1, 4), (2, 5), (3, 6), and (4, 1).

Four ROs included in the RO group 3 are the ROs whose RO positions are (1, 7), (2, 8), (4, 7), and (5, 8).

Four ROs included in the RO group 4 are ROs whose RO positions are (5, 2), (6, 3), (7, 1), and (8, 5).

Four ROs included in the RO group 5 are ROs whose RO positions are (5, 5), (6, 6), (7, 4), and (8, 2).

Four ROs included in the RO group 6 are the ROs whose RO positions are (7, 7), (8, 8), (10, 7), and (11, 8).

Four ROs included in the RO group 7 are ROs whose RO positions are (9, 3), (10, 1), (11, 2), and (12, 6).

Four ROs included in the RO group 8 are ROs whose RO positions are (9, 6), (10, 4), (11, 5), and (12, 3).

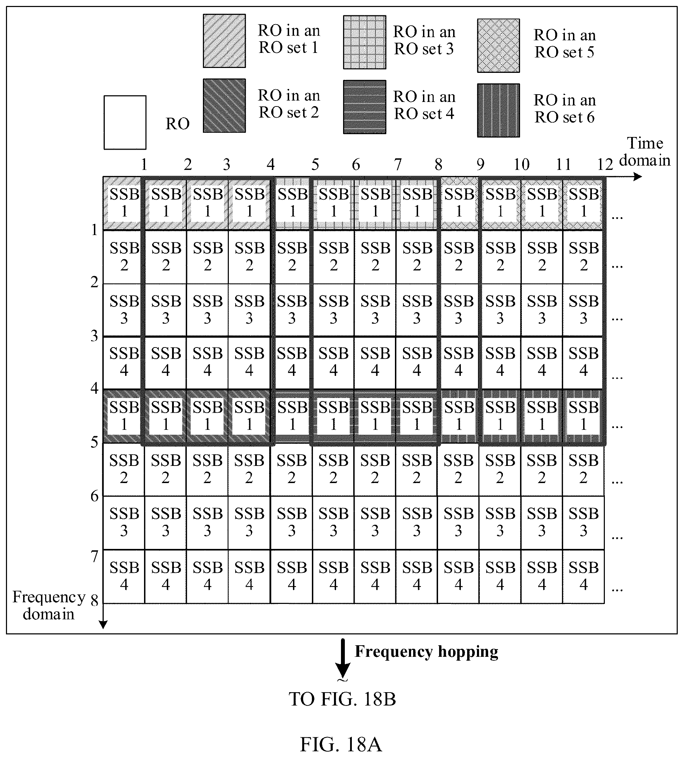

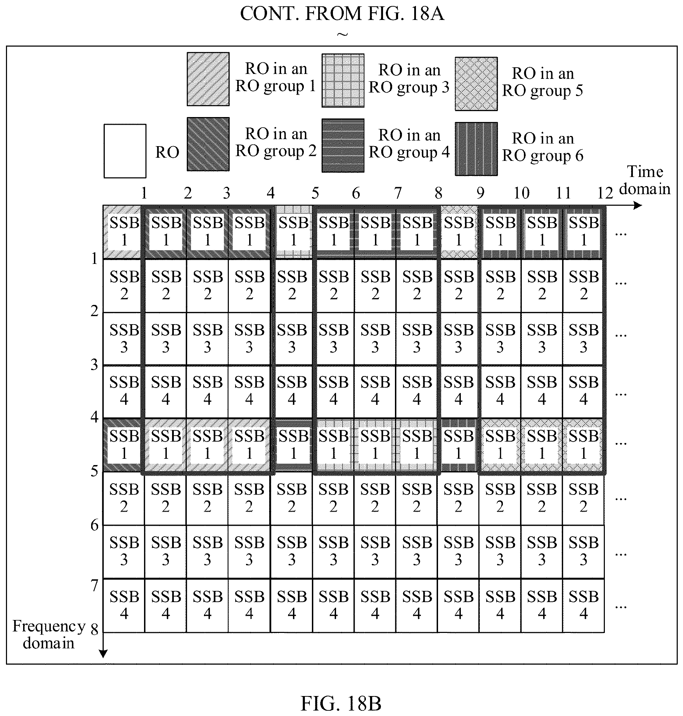

For another example, FIG. 18A and FIG. 18B are still another diagram of an RO group according to an embodiment of this application. As shown in FIG. 18A and FIG. 18B, a quantity N of configured SSBs is equal to 4, the SSBs are an SSB 1, an SSB 2, an SSB 3, and an SSB 4, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 18A and FIG. 18B show a case in which one RO is associated with one SSB. An SSB index in each grid in FIG. 18A and FIG. 18B represents the SSB mapped to the RO. An RO-SSB mapping rule in FIG. 18A and FIG. 18B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 5), (2, 5), (3, 5), and (4, 5).

Four ROs included in an RO set 3 are ROs whose RO positions are (5, 1), (6, 1), (7, 1), and (8, 1).

Four ROs included in an RO set 4 are ROs whose RO positions are (5, 5), (6, 5), (7, 5), and (8, 5).

Four ROs included in an RO set 5 are ROs whose RO positions are (9, 1), (10, 1), (11, 1), and (12, 1).

Four ROs included in an RO set 6 are ROs whose RO positions are (9, 5), (10, 5), (11, 5), and (12, 5).

The RO set 1 is used as an example. The ROs whose RO positions are (1, 1), (2, 1), (3, 1), and (4, 1) in the RO set 1 have a same frequency domain position, and there is an RO set 2 that is associated with a same SSB (namely, the SSB 1) as the RO set 1, has a same repetition level (namely, 4) as the RO set 1, and occupies same duration (namely, four ROs) as the RO set 1. Therefore, the ROs whose RO positions are (2, 1), (3, 1), and (4, 1) in the RO set 1 and ROs that are in the RO set 2 and that have same time domain positions as the ROs whose RO positions are (2, 1), (3, 1), and (4, 1) may be swapped. That is, the RO whose RO position is (2, 1) in the RO set 1 and the RO whose RO position is (2, 5) in the RO set 2 are swapped, the RO whose RO position is (3, 1) in the RO set 1 and the RO whose RO position is (3, 5) in the RO set 2 are swapped, and the RO whose RO position is (4, 1) in the RO set 1 and the RO whose RO position is (4, 5) in the RO set 2, to generate an RO group 1 and an RO group 2.

The RO set 3 is used as another example. The ROs whose RO positions are (5, 1), (6, 1), (7, 1), and (8, 1) in the RO set 3 have a same frequency domain position, and there is an RO set 4 that is associated with a same SSB (namely, the SSB 1) as the RO set 3, has a same repetition level (namely, 4) as the RO set 3, and occupies same duration (namely, four ROs) as the RO set 3. Therefore, the RO whose RO position is (6, 1) in the RO set 3 and the RO whose RO position is (6, 5) in the RO set 4 may be swapped, the RO whose RO position is (7, 1) in the RO set 3 and the RO whose RO position is (7, 5) in the RO set 4 may be swapped, and the RO whose RO position is (8, 1) in the RO set 3 and the RO whose RO position is (8, 5) in the RO set 4 may be swapped, to generate an RO group 4 and an RO group 5.

The RO set 5 is used as still another example. The ROs whose RO positions are (9, 1), (10, 1), (11, 1), and (12, 1) in the RO set 5 have a same frequency domain position, and there is an RO set 6 that is associated with a same SSB (namely, the SSB 1) as the RO set 5, has a same repetition level (namely, 4) as the RO set 5, and occupies same duration (namely, four ROs) as the RO set 5. Therefore, the RO whose RO position is (10, 1) in the RO set 5 and the RO whose RO position is (10, 5) in the RO set 6 may be swapped, the RO whose RO position is (11, 1) in the RO set 5 and the RO whose RO position is (11, 5) in the RO set 6 may be swapped, and the RO whose RO position is (12, 1) in the RO set 5 and the RO whose RO position is (12, 5) in the RO set 6 may be swapped, to generate an RO group 4 and an RO group 5. As shown in FIG. 18A and FIG. 18B:

Four ROs included in the RO group 1 are ROs whose RO positions are (1, 1), (2, 5), (3, 5), and (4, 5).

Four ROs included in the RO group 2 are ROs whose RO positions are (1, 5), (2, 1), (3, 1), and (4, 1).

Four ROs included in the RO group 3 are ROs whose RO positions are (5, 1), (6, 5), (7, 5), and (8, 5).

Four ROs included in the RO group 4 are ROs whose RO positions are (5, 5), (6, 1), (7, 1), and (8, 1).

Four ROs included in the RO group 5 are ROs whose RO positions are (9, 1), (10, 5), (11, 5), and (12, 5).

Four ROs included in the RO group 6 are ROs whose RO positions are (9, 5), (10, 1), (11, 1), and (12, 1).

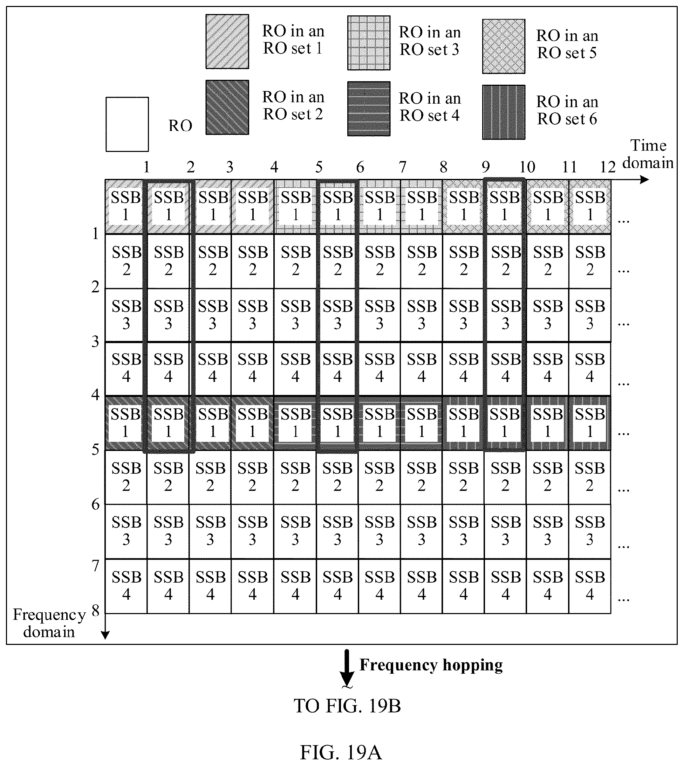

Optionally, in some feasible implementations, a quantity of the at least one fourth RO is less than or equal to Q, and Q is a natural number less than the quantity of ROs in the first RO set. When the quantity of the at least one fourth RO is 0 (that is, Q=0), it indicates that frequency hopping is not performed. For ease of understanding, the following uses FIG. 19A to FIG. 24B as examples to describe frequency hopping processing in this implementation.

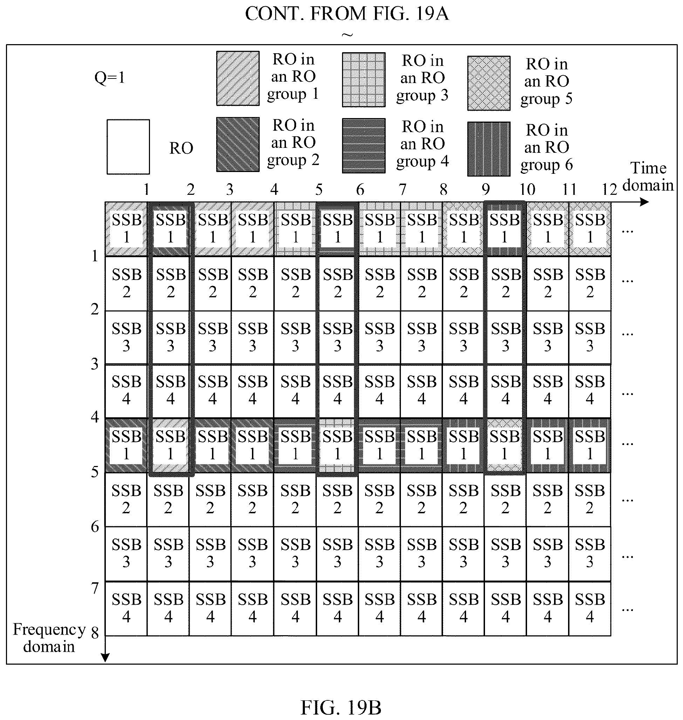

For example, FIG. 19A and FIG. 19B are still another diagram of an RO group according to an embodiment of this application. As shown in FIG. 19A and FIG. 19B, a quantity N of configured SSBs is equal to 4, the SSBs are an SSB 1, an SSB 2, an SSB 3, and an SSB 4, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 19A and FIG. 19B show a case in which one RO is associated with one SSB. An SSB index in each grid in FIG. 19A and FIG. 19B represents the SSB mapped to the RO. An RO-SSB mapping rule in FIG. 19A and FIG. 19B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 5), (2, 5), (3, 5), and (4, 5).

Four ROs included in an RO set 3 are ROs whose RO positions are (5, 1), (6, 1), (7, 1), and (8, 1).

Four ROs included in an RO set 4 are ROs whose RO positions are (5, 5), (6, 5), (7, 5), and (8, 5).

Four ROs included in an RO set 5 are ROs whose RO positions are (9, 1), (10, 1), (11, 1), and (12, 1).

Four ROs included in an RO set 6 are ROs whose RO positions are (9, 5), (10, 5), (11, 5), and (12, 5).

Assuming that Q=1, the quantity of the at least one fourth RO is less than or equal to 1. The RO set 1 is used as an example. The ROs whose RO positions are (1, 1), (2, 1), (3, 1), and (4, 1) in the RO set 1 have a same frequency domain position, and there is an RO set 2 that is associated with a same SSB (namely, the SSB 1) as the RO set 1, has a same repetition level (namely, 4) as the RO set 1, and occupies same duration (namely, four ROs) as the RO set 1. Therefore, the ROs whose RO positions are (2, 1), (3, 1), and (4, 1) in the RO set 1 and ROs that are in the RO set 2 and that have same time domain positions as the ROs whose RO positions are (2, 1), (3, 1), and (4, 1) may be swapped. That is, the RO whose RO position is (2, 1) in the RO set 1 and the RO whose RO position is (2, 5) in the RO set 2 are swapped, the RO whose RO position is (3, 1) in the RO set 1 and the RO whose RO position is (3, 5) in the RO set 2 are swapped, and the RO whose RO position is (4, 1) in the RO set 1 and the RO whose RO position is (4, 5) in the RO set 2. After the RO whose RO position is (3, 1) in the RO set 1 and the RO whose RO position is (3, 5) in the RO set 2 are swapped or the RO whose RO position is (4, 1) in the RO set 1 and the RO whose RO position is (4, 5) in the RO set 2 are swapped, a frequency domain position of the RO is the same as a frequency domain position obtained by previously swapping the RO whose RO position is (2, 1) in the RO set 1 and the RO whose RO position is (2, 5) in the RO set 2. Therefore, the RO whose RO position is (3, 1) in the RO set 1 and the RO whose RO position is (3, 5) in the RO set 2 are not swapped, and the RO whose RO position is (4, 1) in the RO set 1 and the RO whose RO position is (4, 5) in the RO set 2 are not swapped. Based on this, four ROs included in a generated RO group 1 are ROs whose RO positions are (1, 1), (2, 5), (3, 1), and (4, 1), and four ROs included in an RO group 2 are ROs whose RO positions are (1, 5), (2, 1), (3, 5), and (4, 5).

Likewise, for the RO set 3 and the RO set 4, four ROs included in a generated RO group 3 are ROs whose RO positions are (5, 1), (6, 5), (7, 1), and (8, 1), and four ROs included in an RO group 4 are ROs whose RO positions are (5, 5), (6, 1), (7, 5), and (8, 5). For the RO set 5 and the RO set 6, four ROs included in a generated RO group 5 are ROs whose RO positions are (9, 1), (10, 5), (11, 1), and (12, 1), and four ROs included in an RO group 6 are ROs whose RO positions are (9, 5), (10, 1), (11, 5), and (12, 5).

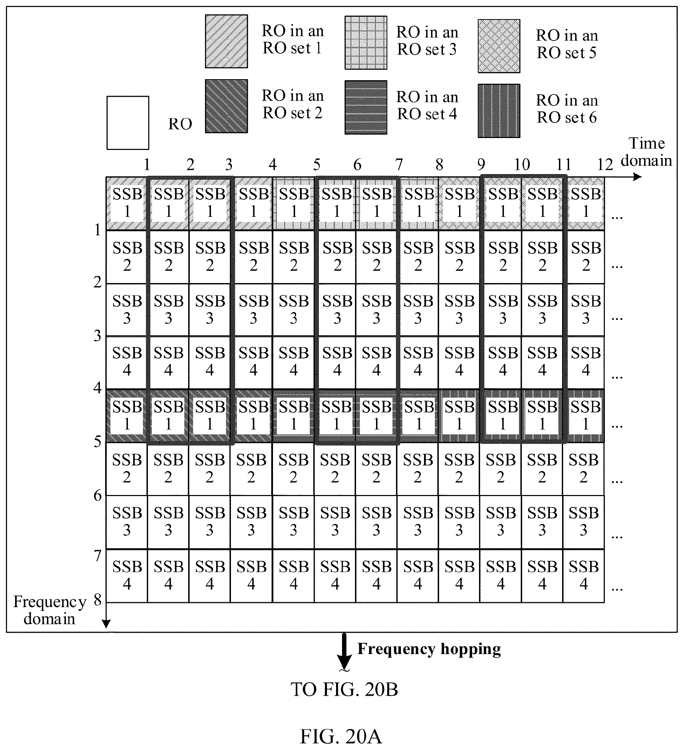

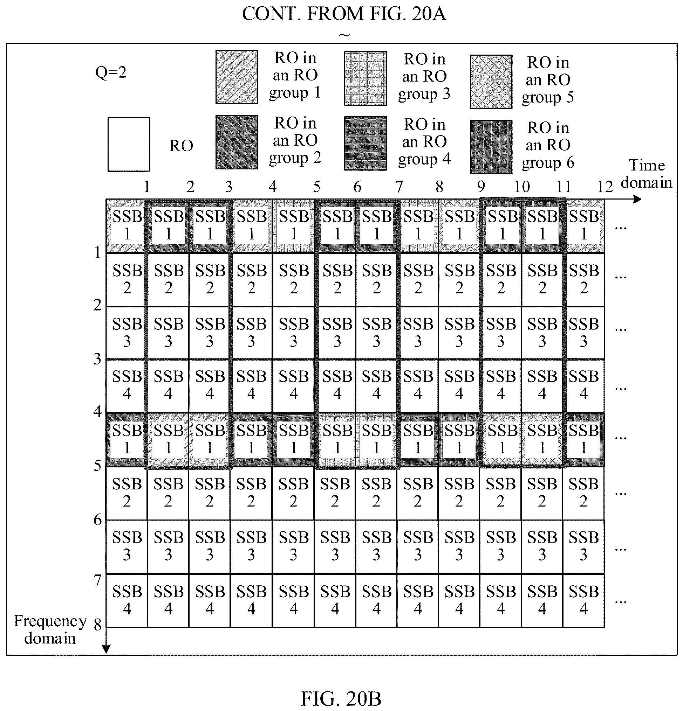

For another example, FIG. 20A and FIG. 20B are still another diagram of an RO group according to an embodiment of this application. As shown in FIG. 20A and FIG. 20B, a quantity N of configured SSBs is equal to 4, the SSBs are an SSB 1, an SSB 2, an SSB 3, and an SSB 4, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 20A and FIG. 20B show a case in which one RO is associated with one SSB. An SSB index in each grid in FIG. 20A and FIG. 20B represents the SSB mapped to the RO. An RO-SSB mapping rule in FIG. 20A and FIG. 20B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 5), (2, 5), (3, 5), and (4, 5).

Four ROs included in an RO set 3 are ROs whose RO positions are (5, 1), (6, 1), (7, 1), and (8, 1).

Four ROs included in an RO set 4 are ROs whose RO positions are (5, 5), (6, 5), (7, 5), and (8, 5).

Four ROs included in an RO set 5 are ROs whose RO positions are (9, 1), (10, 1), (11, 1), and (12, 1).

Four ROs included in an RO set 6 are ROs whose RO positions are (9, 5), (10, 5), (11, 5), and (12, 5).

Assuming that Q=2, the quantity of the at least one fourth RO is less than or equal to 2. The RO set 1 is used as an example. The ROs whose RO positions are (1, 1), (2, 1), (3, 1), and (4, 1) in the RO set 1 have a same frequency domain position, and there is an RO set 2 that is associated with a same SSB (namely, the SSB 1) as the RO set 1, has a same repetition level (namely, 4) as the RO set 1, and occupies same duration (namely, four ROs) as the RO set 1. Therefore, the ROs whose RO positions are (2, 1), (3, 1), and (4, 1) in the RO set 1 and ROs that are in the RO set 2 and that have same time domain positions as the ROs whose RO positions are (2, 1), (3, 1), and (4, 1) may be swapped. That is, the RO whose RO position is (2, 1) in the RO set 1 and the RO whose RO position is (2, 5) in the RO set 2 are swapped, the RO whose RO position is (3, 1) in the RO set 1 and the RO whose RO position is (3, 5) in the RO set 2 are swapped, and the RO whose RO position is (4, 1) in the RO set 1 and the RO whose RO position is (4, 5) in the RO set 2. After the RO whose RO position is (4, 1) in the RO set 1 and the RO whose RO position is (4, 5) in the RO set 2 are swapped, a frequency domain position of the RO and frequency domain positions that are of the ROs and that are obtained through the two times of position swapping performed before the swapping overlap. Therefore, the RO whose RO position is (4, 1) in the RO set 1 and the RO whose RO position is (4, 5) in the RO set 2 are not swapped. Based on this, four ROs included in a generated RO group 1 are ROs whose RO positions are (1, 1), (2, 5), (3, 5), and (4, 1), and four ROs included in an RO group 2 are ROs whose RO positions are (1, 5), (2, 1), (3, 1), and (4, 5).

Likewise, for the RO set 3 and the RO set 4, four ROs included in a generated RO group 3 are ROs whose RO positions are (5, 1), (6, 5), (7, 5), and (8, 1), and four ROs included in an RO group 4 are ROs whose RO positions are (5, 5), (6, 1), (7, 1), and (8, 5). For the RO set 5 and the RO set 6, four ROs included in a generated RO group 5 are ROs whose RO positions are (9, 1), (10, 5), (11, 5), and (12, 1), and four ROs included in an RO group 6 are ROs whose RO positions are (9, 5), (10, 1), (11, 1), and (12, 5).

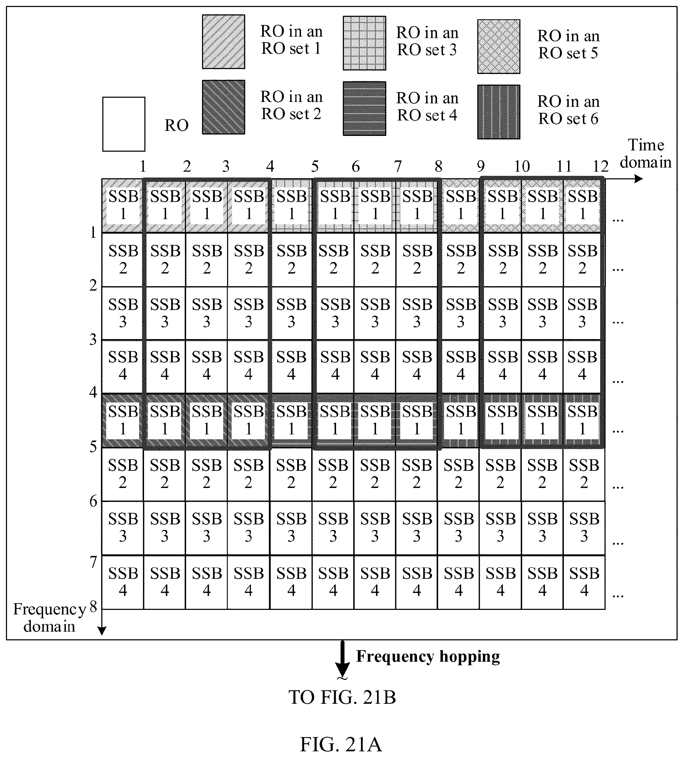

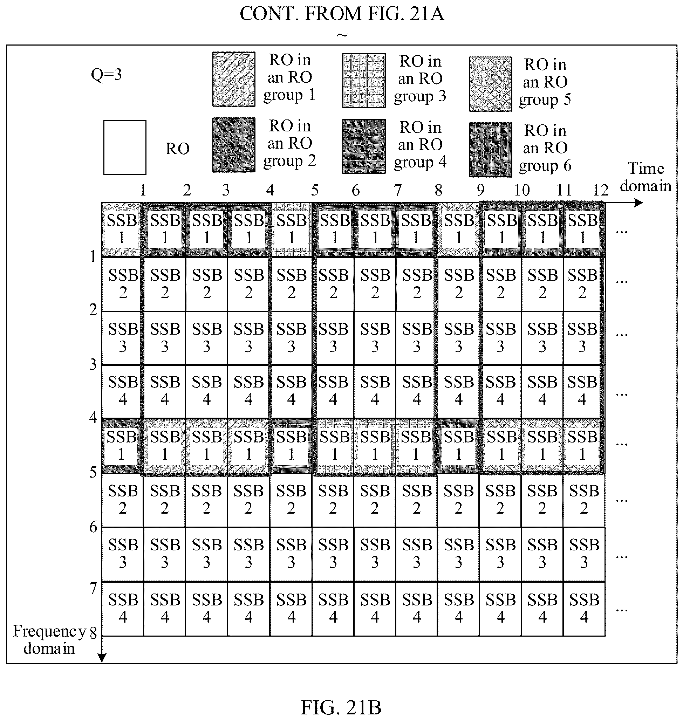

For another example, FIG. 21A and FIG. 21B are still another diagram of an RO group according to an embodiment of this application. As shown in FIG. 21A and FIG. 21B, a quantity N of configured SSBs is equal to 4, the SSBs are an SSB 1, an SSB 2, an SSB 3, and an SSB 4, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 21A and FIG. 21B show a case in which one RO is associated with one SSB. An SSB index in each grid in FIG. 21A and FIG. 21B represents the SSB mapped to the RO. An RO-SSB mapping rule in FIG. 21A and FIG. 21B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 5), (2, 5), (3, 5), and (4, 5).

Four ROs included in an RO set 3 are ROs whose RO positions are (5, 1), (6, 1), (7, 1), and (8, 1).

Four ROs included in an RO set 4 are ROs whose RO positions are (5, 5), (6, 5), (7, 5), and (8, 5).

Four ROs included in an RO set 5 are ROs whose RO positions are (9, 1), (10, 1), (11, 1), and (12, 1).

Four ROs included in an RO set 6 are ROs whose RO positions are (9, 5), (10, 5), (11, 5), and (12, 5).

Assuming that Q=3, the quantity of the at least one fourth RO is less than or equal to 3. ROs corresponding to the SSB 1 are used as an example. RO groups obtained through frequency hopping are as follows:
Four ROs included in an RO group 1 are ROs whose RO positions are (1, 1), (2, 5), (3, 5), and (4, 5).
Four ROs included in an RO group 2 are ROs whose RO positions are (1, 5), (2, 1), (3, 1), and (4, 1).
Four ROs included in an RO group 3 are ROs whose RO positions are (5, 1), (6, 5), (7, 5), and (8, 5).
Four ROs included in an RO group 4 are ROs whose RO positions are (5, 5), (6, 1), (7, 1), and (8, 1).
Four ROs included in an RO group 5 are ROs whose RO positions are (9, 1), (10, 5), (11, 5), and (12, 5).
Four ROs included in an RO group 6 are ROs whose RO positions are (9, 5), (10, 1), (11, 1), and (12, 1).

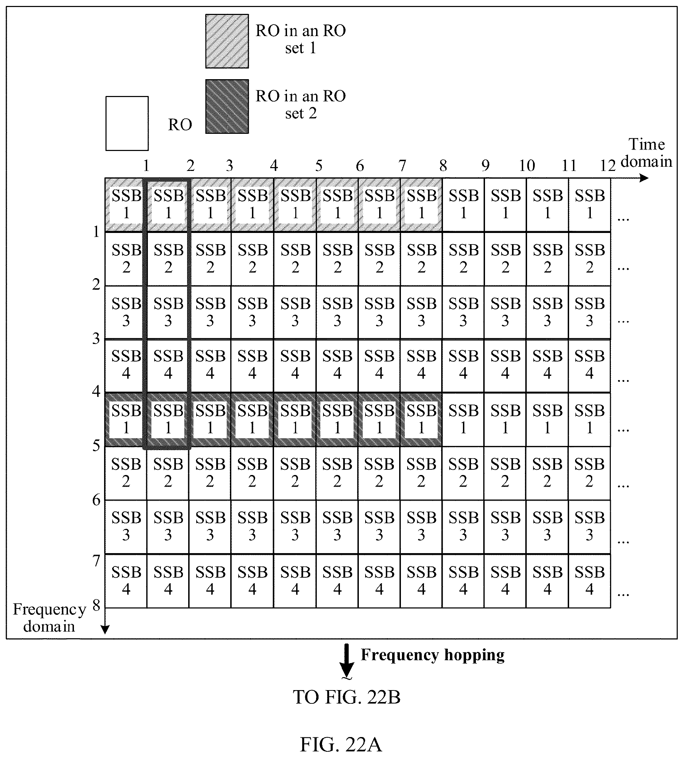

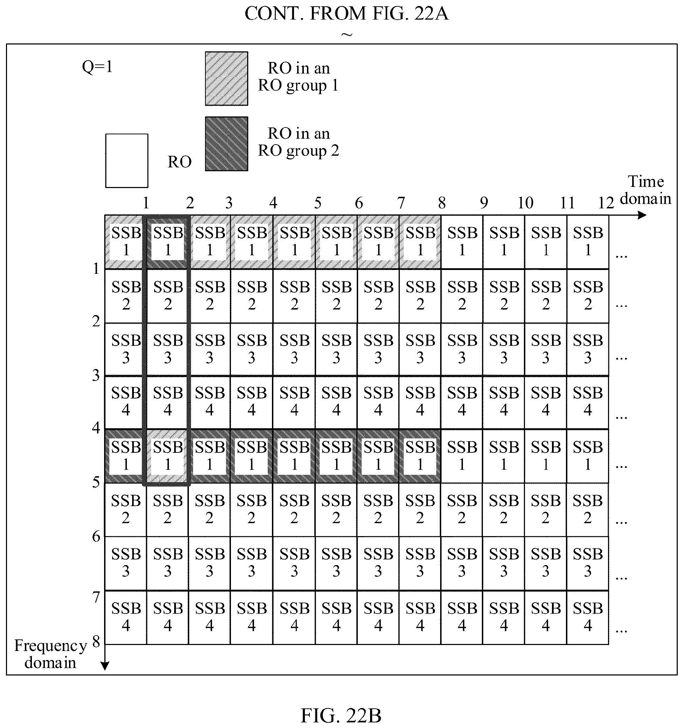

For another example, FIG. 22A and FIG. 22B are still another diagram of an RO group according to an embodiment of this application. As shown in FIG. 22A and FIG. 22B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 22A and FIG. 22B show a case in which one RO is associated with one SSB. An SSB index in each grid in FIG. 22A and FIG. 22B represents the SSB mapped to the RO. An RO-SSB mapping rule in FIG. 22A and FIG. 22B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=1, the quantity of the at least one fourth RO is less than or equal to 1. ROs corresponding to the SSB 1 are used as an example. RO groups obtained through frequency hopping are as follows:
Four ROs included in an RO group 1 are ROs whose RO positions are (1, 1), (2, 5), (3, 1), (4, 1), (5, 1), (6, 1), (7, 1), and (8, 1).
Four ROs included in an RO group 2 are ROs whose RO positions are (1, 5), (2, 1), (3, 5), (4, 5), (5, 5), (6, 5), (7, 5), and (8, 5).

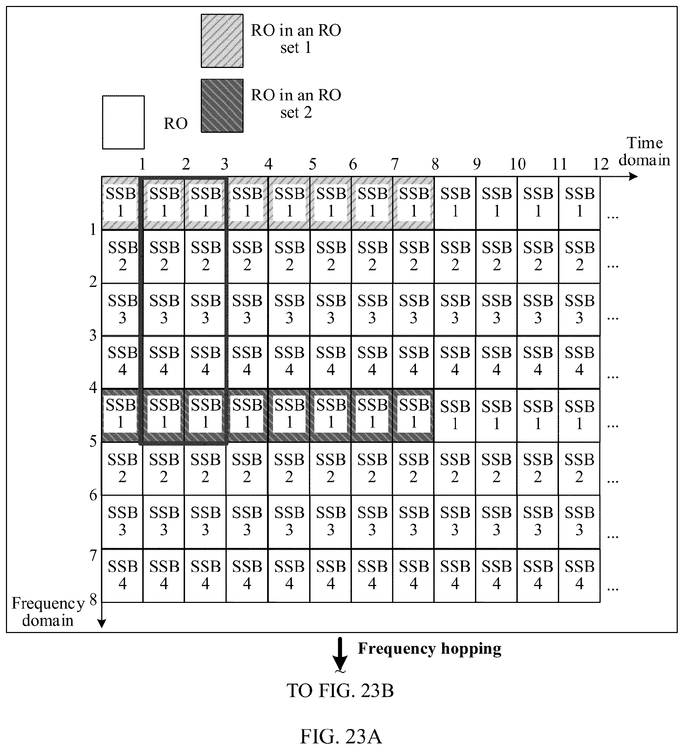

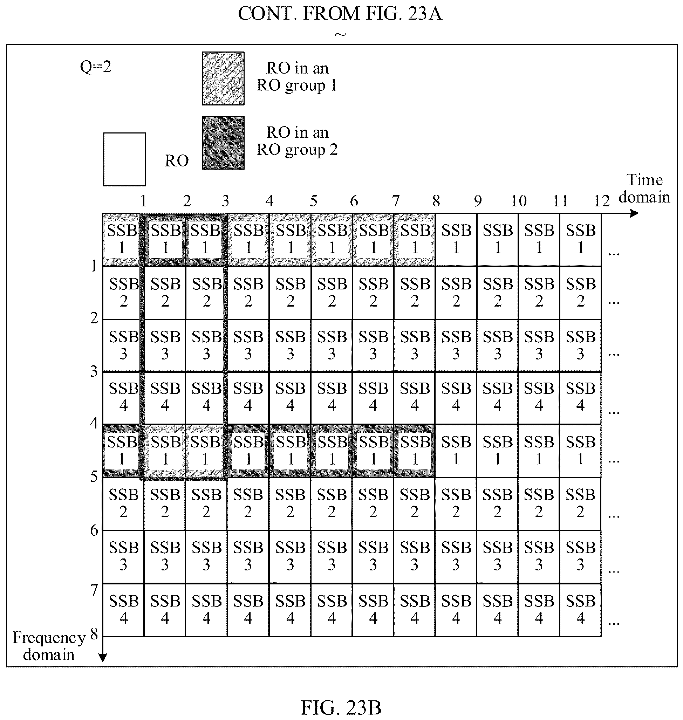

For another example, FIG. 23A and FIG. 23B are still another diagram of an RO group according to an embodiment of this application. As shown in FIG. 23A and FIG. 23B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 23A and FIG. 23B show a case in which one RO is associated with one SSB. An SSB index in each grid in FIG. 23A and FIG. 23B represents the SSB mapped to the RO. An RO-SSB mapping rule in FIG. 23A and FIG. 23B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=2, the quantity of the at least one fourth RO is less than or equal to 2. ROs corresponding to the SSB 1 are used as an example. RO groups obtained through frequency hopping are as follows:
Four ROs included in an RO group 1 are ROs whose RO positions are (1, 1), (2, 5), (3, 5), (4, 1), (5, 1), (6, 1), (7, 1), and (8, 1).
Four ROs included in an RO group 2 are ROs whose RO positions are (1, 5), (2, 1), (3, 1), (4, 5), (5, 5), (6, 5), (7, 5), and (8, 5).

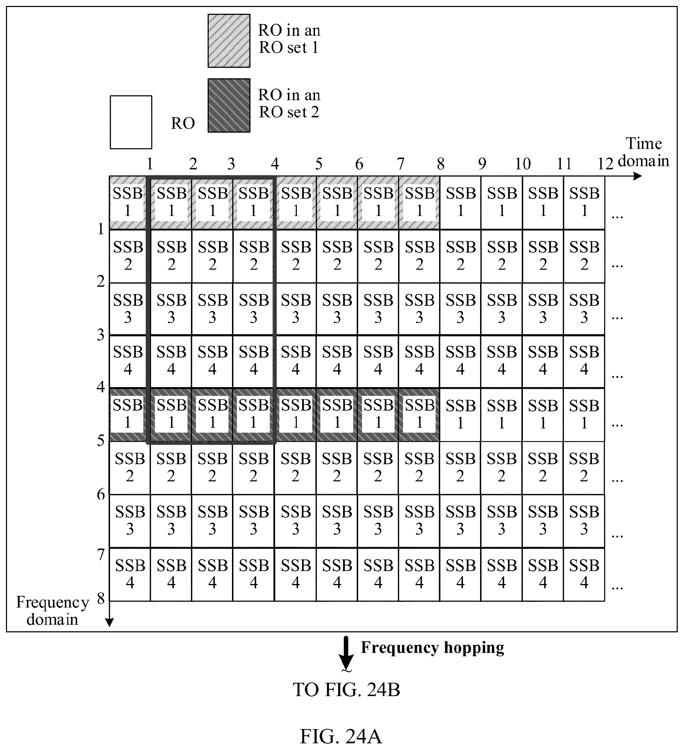

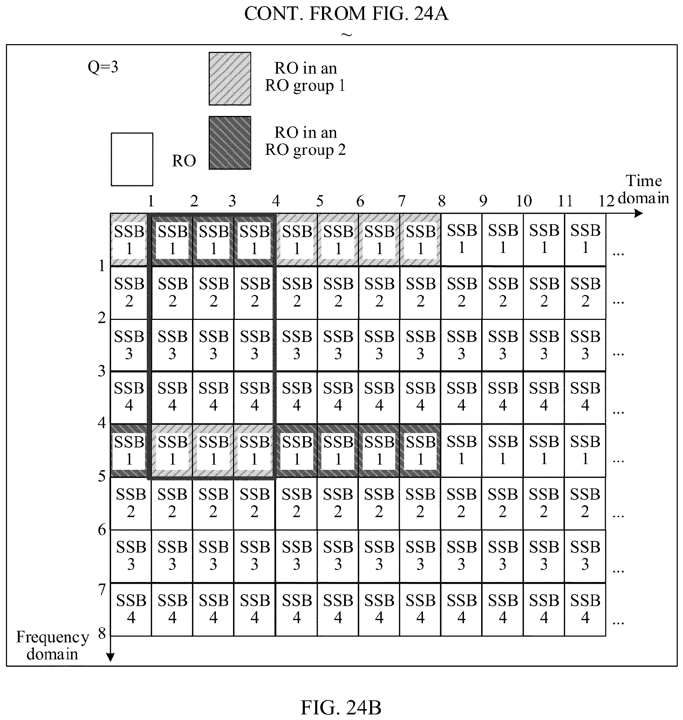

For another example, FIG. 24A and FIG. 24B are still another diagram of an RO group according to an embodiment of this application. As shown in FIG. 24A and FIG. 24B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 24A and FIG. 24B show a case in which one RO is associated with one SSB. An SSB index in each grid in FIG. 24A and FIG. 24B represents the SSB mapped to the RO. An RO-SSB mapping rule in FIG. 24A and FIG. 24B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=3, the quantity of the at least one fourth RO is less than or equal to 3. ROs corresponding to the SSB 1 are used as an example. RO groups obtained through frequency hopping are as follows:
Four ROs included in an RO group 1 are ROs whose RO positions are (1, 1), (2, 5), (3, 5), (4, 5), (5, 1), (6, 1), (7, 1), and (8, 1).
Four ROs included in an RO group 2 are ROs whose RO positions are (1, 5), (2, 1), (3, 1), (4, 1), (5, 5), (6, 5), (7, 5), and (8, 5).

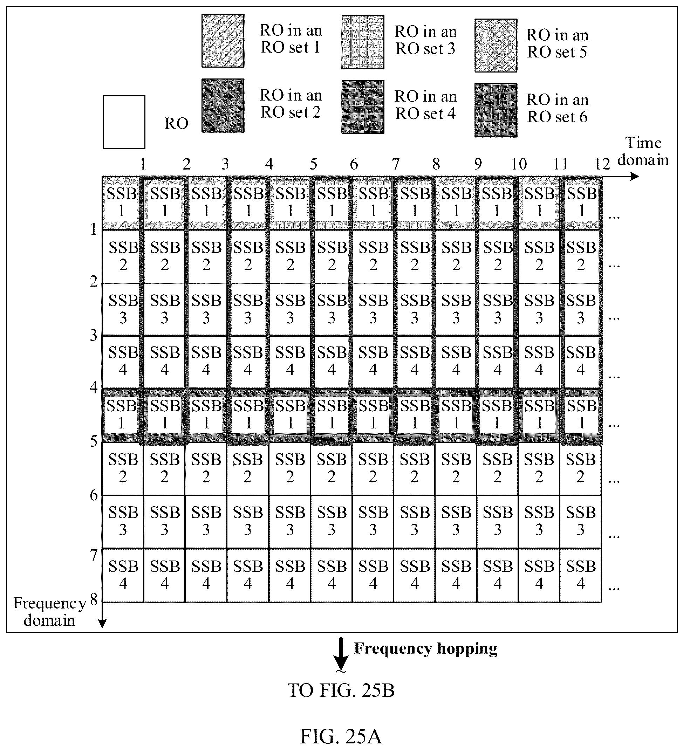

Optionally, in some feasible implementations, a quantity of ROs whose time domain rankings are consecutive in the at least one fourth RO is less than or equal to Q, and Q is a natural number less than the quantity of ROs in the first RO set. It may be understood that a time domain ranking of the any RO in the first RO set is an appearance ranking/position of the any RO in the ROs included in the first RO set in time domain. When a quantity of the at least one fourth RO is 0 (that is, Q=0), it indicates that frequency hopping is not performed. For ease of understanding, the following uses FIG. 25A to FIG. 28B as examples to describe frequency hopping processing in this implementation.

Herein, a time domain ranking of an RO in an RO set described in this application is first explained. For example, the RO set 1 in FIG. 17A and FIG. 17B is used as an example to explain the time domain ranking. As shown in FIG. 17A and FIG. 17B, in terms of a time domain, because the RO whose RO position is (1, 1) appears firstly in the four ROs included in the RO set 1, a time domain ranking of the RO whose RO position is (1, 1) is 1; because the RO whose RO position is (2, 2) appears secondly in the four ROs included in the RO set 1, a time domain ranking of the RO whose RO position is (2, 2) is 2; because the RO whose RO position is (3, 3) appears thirdly in the four ROs included in the RO set 1, a time domain ranking of the RO whose RO position is (3, 3) is 3; and because the RO whose RO position is (4, 1) appears fourthly in the four ROs included in the RO set 1, a time domain ranking of the RO whose RO position is (4, 1) is 4.

For another example, the RO set 3 in FIG. 17A and FIG. 17B is used as an example to explain the time domain ranking. As shown in FIG. 17A and FIG. 17B, in terms of a time domain, because the RO whose RO position is (1, 7) appears firstly in the four ROs included in the RO set 1, a time domain ranking of the RO whose RO position is (1, 7) is 1; because the RO whose RO position is (2, 8) appears secondly in the four ROs included in the RO set 1, a time domain ranking of the RO whose RO position is (2, 8) is 2; because the RO whose RO position is (4, 7) appears thirdly in the four ROs included in the RO set 1, a time domain ranking of the RO whose RO position is (4, 7) is 3; and because the RO whose RO position is (5, 8) appears fourthly in the four ROs included in the RO set 1, a time domain ranking of the RO whose RO position is (5, 8) is 4.

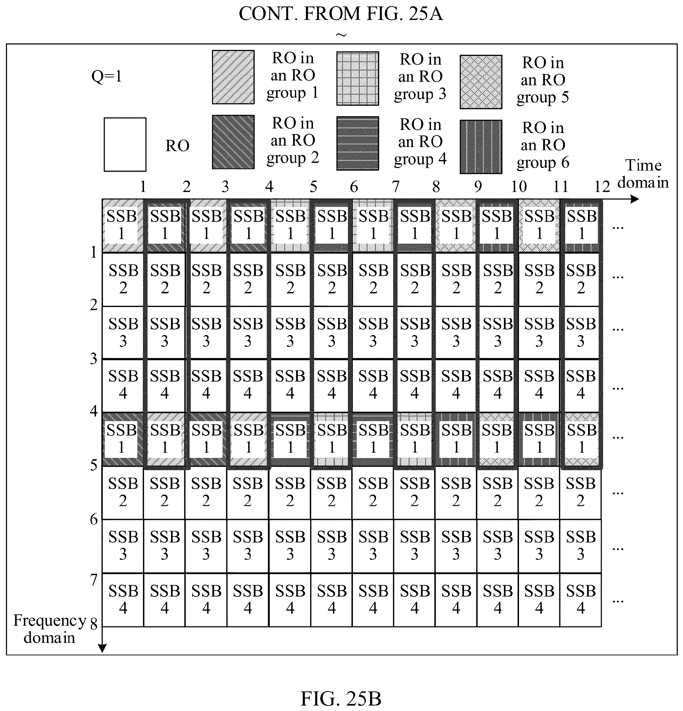

For example, FIG. 25A and FIG. 25B are still another diagram of an RO group according to an embodiment of this application. As shown in FIG. 25A and FIG. 25B, a quantity N of configured SSBs is equal to 4, the SSBs are an SSB 1, an SSB 2, an SSB 3, and an SSB 4, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 25A and FIG. 25B show a case in which one RO is associated with one SSB. An SSB index in each grid in FIG. 25A and FIG. 25B represents the SSB mapped to the RO. An RO-SSB mapping rule in FIG. 25A and FIG. 25B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 5), (2, 5), (3, 5), and (4, 5).

Four ROs included in an RO set 3 are ROs whose RO positions are (5, 1), (6, 1), (7, 1), and (8, 1).

Four ROs included in an RO set 4 are ROs whose RO positions are (5, 5), (6, 5), (7, 5), and (8, 5).

Four ROs included in an RO set 5 are ROs whose RO positions are (9, 1), (10, 1), (11, 1), and (12, 1).

Four ROs included in an RO set 6 are ROs whose RO positions are (9, 5), (10, 5), (11, 5), and (12, 5).

Assuming that Q=1, the quantity of ROs whose time domain rankings are consecutive in the at least one fourth RO is less than or equal to 1. ROs corresponding to the SSB 1 are used as an example. RO groups obtained through frequency hopping are as follows:
Four ROs included in an RO group 1 are ROs whose RO positions are (1, 1), (2, 5), (3, 1), and (4, 5).
Four ROs included in an RO group 2 are ROs whose RO positions are (1, 5), (2, 1), (3, 5), and (4, 1).
Four ROs included in an RO group 3 are ROs whose RO positions are (5, 1), (6, 5), (7, 1), and (8, 5).
Four ROs included in an RO group 4 are ROs whose RO positions are (5, 5), (6, 1), (7, 5), and (8, 1).
Four ROs included in an RO group 5 are ROs whose RO positions are (9, 1), (10, 5), (11, 1), and (12, 5).
Four ROs included in an RO group 6 are ROs whose RO positions are (9, 5), (10, 1), (11, 5), and (12, 1).

When Q=2, the quantity of ROs whose time domain rankings are consecutive in the at least one fourth RO is less than or equal to 2. ROs corresponding to the SSB 1 are used as an example. A frequency hopping result is shown in FIG. 20A and FIG. 20B.

When Q=3, the quantity of ROs whose time domain rankings are consecutive in the at least one fourth RO is less than or equal to 3. ROs corresponding to the SSB 1 are used as an example. A frequency hopping result is shown in FIG. 21A and FIG. 21B.

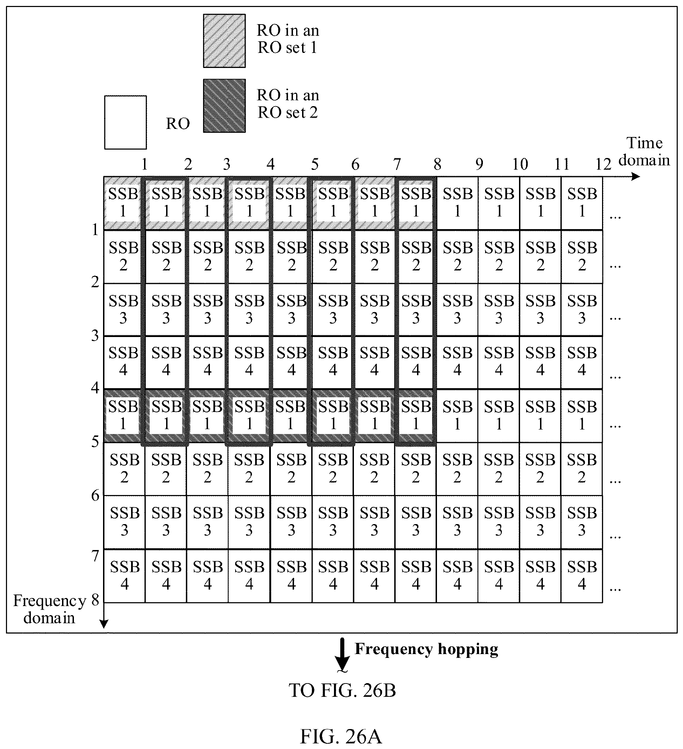

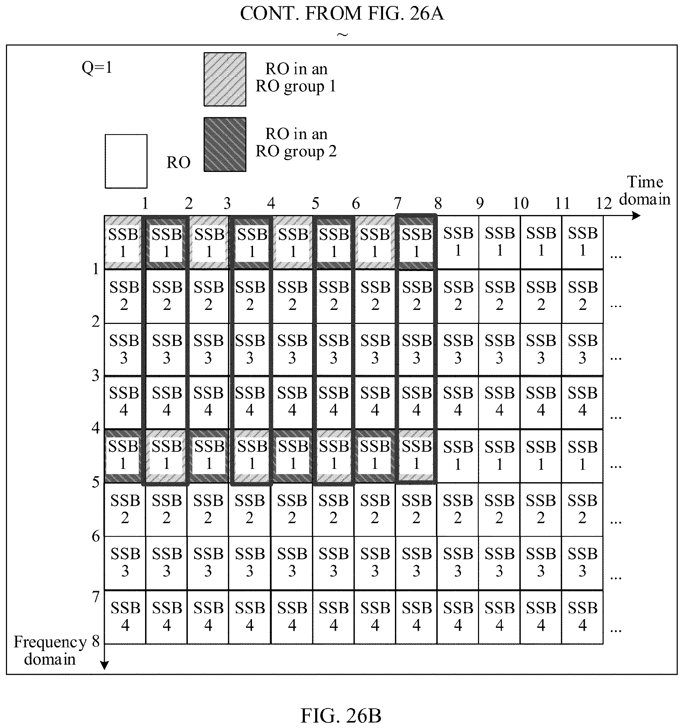

For another example, FIG. 26A and FIG. 26B are still another diagram of an RO group according to an embodiment of this application. As shown in FIG. 26A and FIG. 26B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 26A and FIG. 26B show a case in which one RO is associated with one SSB. An SSB index in each grid in FIG. 26A and FIG. 26B represents the SSB mapped to the RO. An RO-SSB mapping rule in FIG. 26A and FIG. 26B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=1, the quantity of ROs whose time domain rankings are consecutive in the at least one fourth RO is less than or equal to 1. ROs corresponding to the SSB 1 are used as an example. RO groups obtained through frequency hopping are as follows:
Four ROs included in an RO group 1 are ROs whose RO positions are (1, 1), (2, 5), (3, 1), (4, 5), (5, 1), (6, 5), (7, 1), and (8, 5).
Four ROs included in an RO group 2 are ROs whose RO positions are (1, 5), (2, 1), (3, 5), (4, 1), (5, 5), (6, 1), (7, 5), and (8, 1).

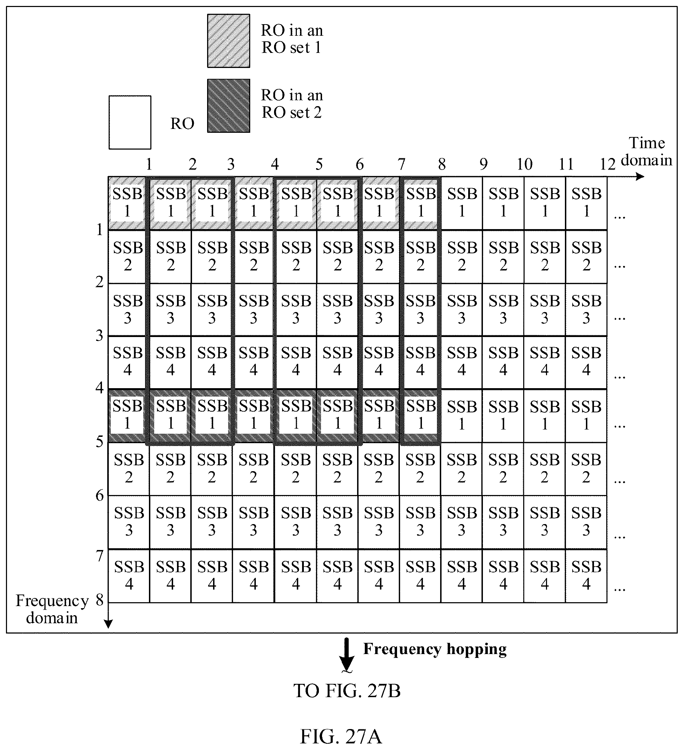

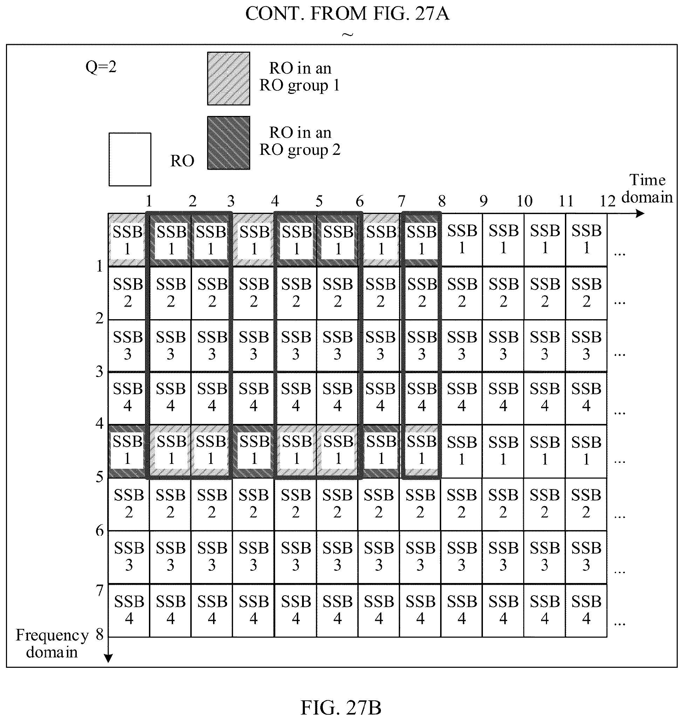

For another example, FIG. 27A and FIG. 27B are still another diagram of an RO group according to an embodiment of this application. As shown in FIG. 27A and FIG. 27B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 27A and FIG. 27B show a case in which one RO is associated with one SSB. An SSB index in each grid in FIG. 27A and FIG. 27B represents the SSB mapped to the RO. An RO-SSB mapping rule in FIG. 27A and FIG. 27B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=2, the quantity of ROs whose time domain rankings are consecutive in the at least one fourth RO is less than or equal to 2. ROs corresponding to the SSB 1 are used as an example. RO groups obtained through frequency hopping are as follows:
Four ROs included in an RO group 1 are ROs whose RO positions are (1, 1), (2, 5), (3, 5), (4, 1), (5, 5), (6, 5), (7, 1), and (8, 5).
Four ROs included in an RO group 2 are ROs whose RO positions are (1, 5), (2, 1), (3, 1), (4, 5), (5, 1), (6, 1), (7, 5), and (8, 1).

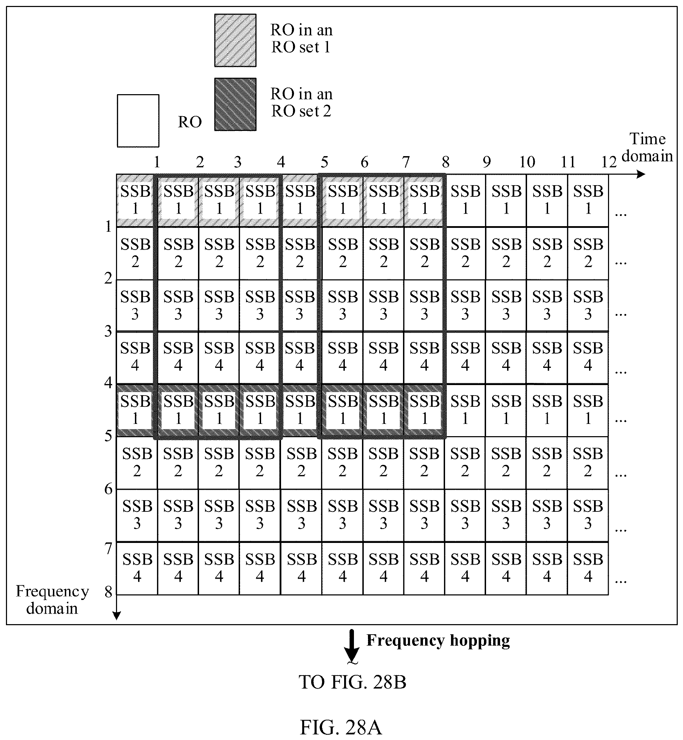

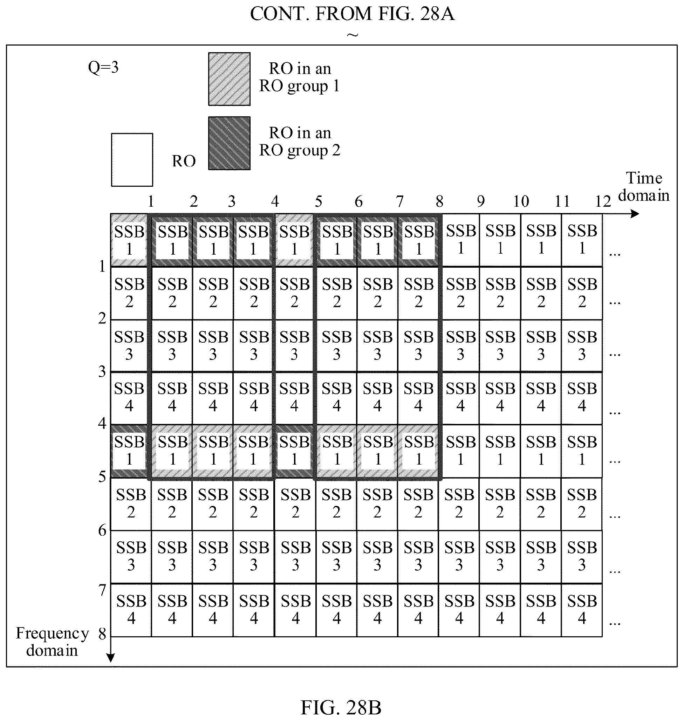

For another example, FIG. 28A and FIG. 28B are still another diagram of an RO group according to an embodiment of this application. As shown in FIG. 28A and FIG. 28B, a quantity N of configured SSBs is equal to 4, the SSBs are an SSB 1, an SSB 2, an SSB 3, and an SSB 4, a quantity of times of repetition sending (which is also referred to as a repetition level) is 8 (that is, an RO set or the RO group includes eight ROs), and an RO quantity configured in frequency domain is equal to 8 (that is, msg1-FDM=8). FIG. 28A and FIG. 28B show a case in which one RO is associated with one SSB. An SSB index in each grid in FIG. 28A and FIG. 28B represents the SSB mapped to the RO. An RO-SSB mapping rule in FIG. 28A and FIG. 28B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), (4, 1), (5, 1), (6, 1), (7, 1), and (8, 1).

Four ROs included in an RO set 2 are ROs whose RO positions are (1, 5), (2, 5), (3, 5), (4, 5), (5, 5), (6, 5), (7, 5), and (8, 5).

Assuming that Q=3, the quantity of ROs whose time domain rankings are consecutive in the at least one fourth RO is less than or equal to 3. ROs corresponding to the SSB 1 are used as an example. RO groups obtained through frequency hopping are as follows:
Four ROs included in an RO group 1 are ROs whose RO positions are (1, 1), (2, 5), (3, 5), (4, 5), (5, 1), (6, 5), (7, 5), and (8, 5).
Four ROs included in an RO group 2 are ROs whose RO positions are (1, 5), (2, 1), (3, 1), (4, 1), (5, 5), (6, 1), (7, 1), and (8, 1).

Optionally, in some feasible implementations, when the frequency domain position of the third RO in the first RO set is the same as the frequency domain position of the at least one fourth RO in the first RO set, S RO sets and the first RO set are associated with at least one same SSB, a quantity of ROs included in each of the S RO sets is the same as the quantity of ROs included in the first RO set, and duration occupied by the ROs in each of the S RO sets is the same as the duration occupied by the ROs in the first RO set, one RO set may be selected from the S RO sets as the second RO set, and the frequency domain positions of the fourth RO in the first RO set and the at least one fifth RO that is in the second RO set and that has the same time domain position as the at least one fourth RO are swapped, to generate RO groups. In addition, for (S-1) remaining RO sets in the S RO sets, two RO sets are randomly selected, and frequency domain positions of ROs that are in the two RO sets and that have a same time domain position as the at least one fourth RO are swapped, until frequency hopping processing on all (S+1) RO sets is completed, to generate (S+1) RO groups, where S is an odd number greater than 2.

For example, when every two RO sets are selected to swap frequency domain positions of ROs that satisfy the condition, a lowest-frequency RO set and a highest-frequency RO set in the (S+1) RO sets may be selected to swap frequency domain positions of ROs that satisfy the condition, then a lowest-frequency RO set and a highest-frequency RO set in the (S-1) remaining RO sets are selected to swap frequency domain positions of ROs that satisfy the condition, and so on, until the frequency hopping processing on the (S+1) RO sets is completed. Optionally, two RO sets whose RO set indexes are adjacent in the (S+1) RO sets may alternatively be selected to swap frequency domain positions of ROs that satisfy the condition. Optionally, an RO set whose RO set index is an odd number and an RO set whose RO set index is an even number in the (S+1) RO sets may alternatively be selected to swap frequency domain positions of ROs that satisfy the condition. Optionally, RO sets whose RO set indexes are odd numbers in the (S+1) RO sets may alternatively be selected to swap frequency domain positions of ROs that satisfy the condition. RO sets whose RO set indexes are even numbers are selected to swap frequency domain positions of ROs that satisfy the condition. This is not limited in this application.

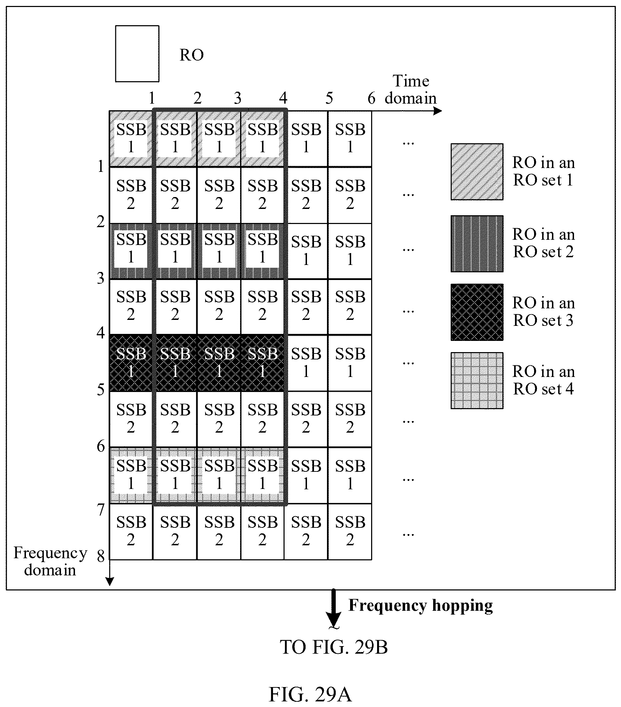

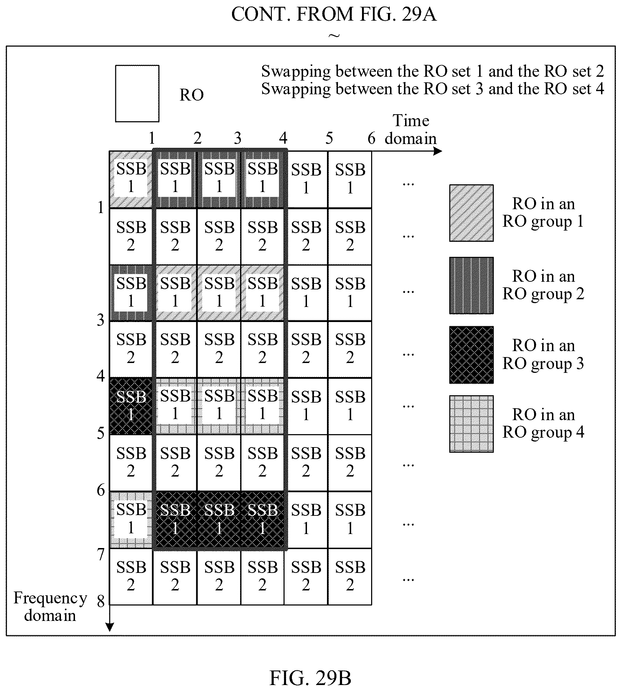

For example, FIG. 29A and FIG. 29B are still another diagram of an RO group according to an embodiment of this application. As shown in FIG. 29A and FIG. 29B, a quantity N of configured SSBs is equal to 2, the SSBs are an SSB 1 and an SSB 2, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 29A and FIG. 29B show a case in which one RO is associated with one SSB. An SSB index in each grid in FIG. 29A and FIG. 29B represents the SSB mapped to the RO. An RO-SSB mapping rule in FIG. 29A and FIG. 29B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 3), (2, 3), (3, 3), and (4, 3).

Four ROs included in an RO set 3 are ROs whose RO positions are (1, 5), (2, 5), (3, 5), and (4, 5).

Four ROs included in an RO set 4 are ROs whose RO positions are (1, 7), (2, 7), (3, 7), and (4, 7).

Assuming that ROs that are in the RO set 1 and the RO set 2 and that satisfy the requirement are swapped, and ROs that are in the RO set 3 and the RO set 4 and that satisfy the requirement are swapped, four RO groups are obtained, as shown in FIG. 29A and FIG. 29B:
Four ROs included in an RO group 1 are ROs whose RO positions are (1, 1), (2, 3), (3, 3), and (4, 3).
Four ROs included in an RO group 2 are ROs whose RO positions are (1, 3), (2, 1), (3, 1), and (4, 1).
Four ROs included in an RO group 3 are ROs whose RO positions are (1, 5), (2, 7), (3, 7), and (4, 7).
Four ROs included in an RO group 4 are ROs whose RO positions are (1, 7), (2, 5), (3, 5), and (4, 5).

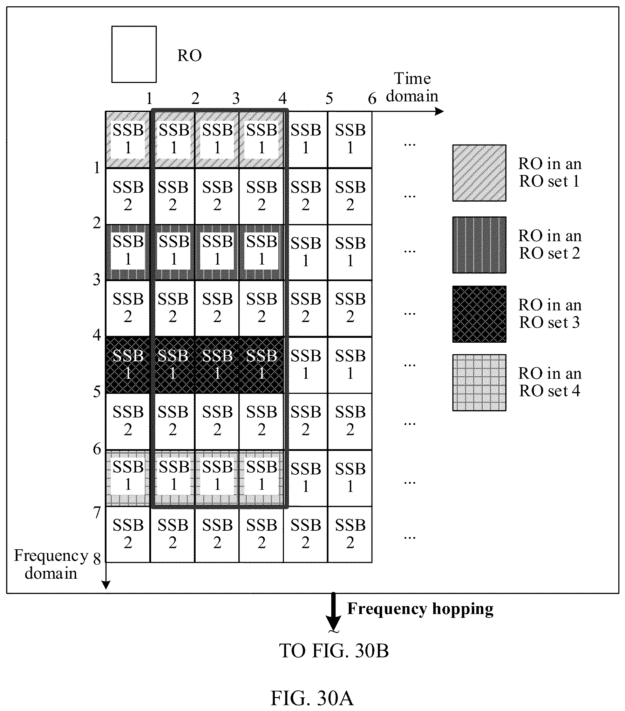

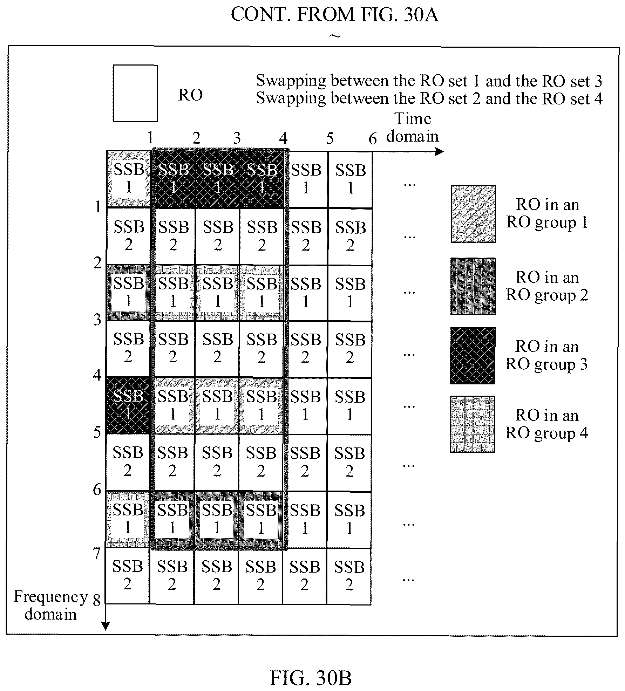

For another example, FIG. 30A and FIG. 30B are still another diagram of an RO group according to an embodiment of this application. As shown in FIG. 30A and FIG. 30B, a quantity N of configured SSBs is equal to 2, the SSBs are an SSB 1 and an SSB 2, a quantity of times of repetition sending (which is also referred to as a repetition level) is 4 (that is, an RO set or the RO group includes four ROs), and an RO quantity configured in frequency domain is equal to 8 (that is, msg1-FDM=8). FIG. 30A and FIG. 30B show a case in which one RO is associated with one SSB. An SSB index in each grid in FIG. 30A and FIG. 30B represents the SSB mapped to the RO. An RO-SSB mapping rule in FIG. 30A and FIG. 30B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 1), (3, 1), and (4, 1).

Four ROs included in an RO set 2 are ROs whose RO positions are (1, 3), (2, 3), (3, 3), and (4, 3).

Four ROs included in an RO set 3 are ROs whose RO positions are (1, 5), (2, 5), (3, 5), and (4, 5).

Four ROs included in an RO set 4 are ROs whose RO positions are (1, 7), (2, 7), (3, 7), and (4, 7).

Assuming that ROs that are in the RO set 1 and the RO set 3 and that satisfy the requirement are swapped, and ROs that are in the RO set 2 and the RO set 4 and that satisfy the requirement are swapped, four RO groups are obtained, as shown in FIG. 30A and FIG. 30B:
Four ROs included in an RO group 1 are ROs whose RO positions are (1, 1), (2, 5), (3, 5), and (4, 5).
Four ROs included in an RO group 2 are ROs whose RO positions are (1, 3), (2, 7), (3, 7), and (4, 7).
Four ROs included in an RO group 3 are ROs whose RO positions are (1, 5), (2, 1), (3, 1), and (4, 1).
Four ROs included in an RO group 4 are ROs whose RO positions are (1, 7), (2, 3), (3, 3), and (4, 3).

Optionally, in some feasible implementations, when the frequency domain position of the third RO in the first RO set is the same as the frequency domain position of the at least one fourth RO in the first RO set, a cyclic shift in frequency domain is performed on ROs that are in the first RO set and V RO sets and that have a same time domain position as the at least one fourth RO, to obtain (V+1) RO groups, where the M RO groups include the (V+1) RO groups; and the first RO set and the V RO sets satisfy the following conditions: the V RO sets and the first RO set are associated with at least one same SSB, a quantity of ROs included in each of the V RO sets is the same as the quantity of ROs included in the first RO set, and duration occupied by the ROs in each of the V RO sets is the same as the duration occupied by the ROs in the first RO set, where V is an integer greater than 1. In other words, when the frequency domain position of the third RO in the first RO set is the same as the frequency domain position of the at least one fourth RO in the first RO set, the V RO sets and the first RO set are associated with the at least one same SSB, the quantity of ROs included in each of the V RO sets is the same as the quantity of ROs included in the first RO set, and the duration occupied by the ROs in each of the V RO sets is the same as the duration occupied by the ROs in the first RO set, the cyclic shift in frequency domain may be performed on the ROs that are in the first RO set and the V RO sets and that have the same time domain position as the at least one fourth RO, to obtain the (V+1) RO groups, where V is the integer greater than 1. In other words, when the frequency domain position of the third RO in the first RO set is the same as the frequency domain position of the at least one fourth RO in the first RO set, the (V+1) RO groups are determined, where the M RO groups include the (V+1) RO groups, where there are V RO sets, where V is an integer greater than 1; and the first RO set and the V RO sets satisfy the following conditions: The V RO sets and the first RO set are associated with the at least one same SSB, the quantity of ROs included in each of the V RO sets is the same as the quantity of ROs included in the first RO set, and the duration occupied by the ROs in each of the V RO sets is the same as the duration occupied by the ROs in the first RO set; when i is a positive integer greater than or equal to 1 and less than or equal to V, an i^{th} RO set in (V+1) RO sets is an RO set whose appearance ranking in the V RO sets in frequency domain is i; when i is 0, the i^{th} RO set in the (V+1) RO sets is the first RO set, and the first RO set is an RO set whose appearance ranking is before or after the V RO sets in frequency domain; and ROs in an i^{th} RO group in the (V+1) RO groups include an RO in the i^{th} RO set in the (V+1) RO sets other than at least one sixth RO, and further include at least one fifth RO in an ((i+p) mod (V+1))^{th} RO set in the (V+1) RO sets, where p is a positive integer, the at least one fifth RO has the same time domain position as the at least one fourth RO, and the at least one sixth RO has the same time domain position as the at least one fourth RO. It should be noted that p may be understood as a step of a cyclic shift, and i may be understood as the frequency domain ranking.

It should be noted that, when V=1, it is equivalent to swapping the frequency domain positions of the fourth RO in the first RO set and the fifth RO that is in the second RO set and that has the same time domain position as the fourth RO. In other words, swapping the frequency domain positions of the fourth RO in the first RO set and the fifth RO that is in the second RO set and that has the same time domain position as the fourth RO is also equivalent to performing a cyclic shift in frequency domain.

For example, a plurality of RO sets are the second RO set and a third RO set. When the frequency domain position of the third RO in the first RO set is the same as the frequency domain position of the at least one fourth RO in the first RO set, and there is a second RO set and a third RO set that satisfy the following three conditions, a cyclic shift in frequency domain may be performed on the at least one fourth RO in the first RO set, the at least one fifth RO in the second RO set, and at least one eighth RO in the third RO set in frequency domain, to obtain three RO groups. The at least one fourth RO, the at least one fifth RO, and the at least one eighth RO have a same time domain position. The three conditions that the second RO set and the third RO set satisfy are as follows: 1. The second RO set and the third RO set are associated with a same SSB as the first RO set. 2. The quantity of ROs included in the second RO set and a quantity of ROs included in the third RO set are the same as the quantity of ROs included in the first RO set. 3. The duration occupied by the ROs in the second RO set and duration occupied by ROs in the third RO set are the same as the duration occupied by the ROs in the first RO set.

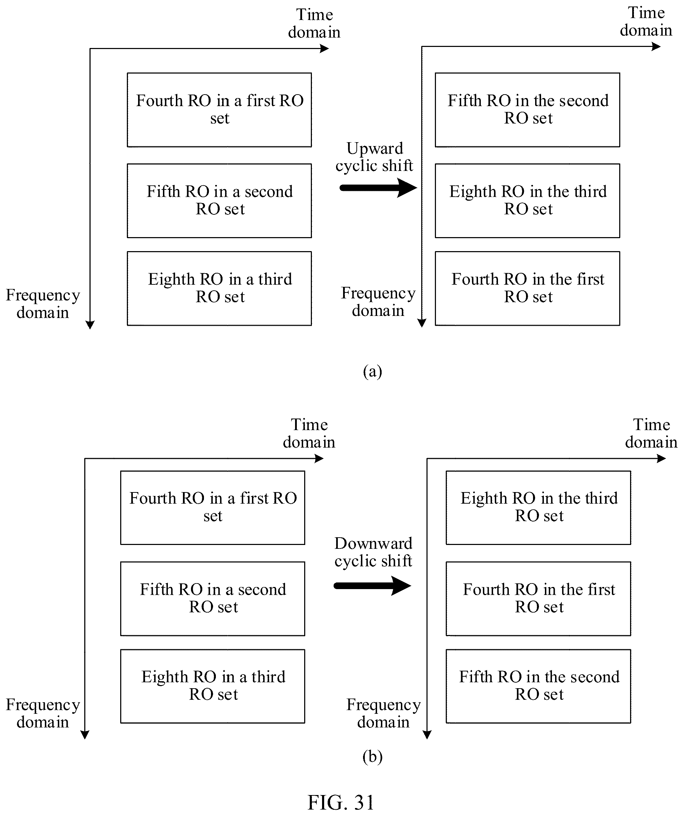

Optionally, assuming that a vertical direction represents a frequency domain, a cyclic shift manner in frequency domain may be an upward cyclic shift or a downward cyclic shift, namely, a cyclic shift from a high frequency to a low frequency or a cyclic shift from the low frequency to the high frequency. For example, FIG. 31 is a diagram of a cyclic shift manner according to an embodiment of this application. For example, (a) in FIG. 31 shows an upward cyclic shift manner. Specifically, a fourth RO in a first RO set is moved to a position of an eighth RO in a third RO set, a fifth RO in a second RO set is moved to a position of the fourth RO in the first RO set, and the eighth RO in the third RO set is moved to a position of the fifth RO in the second RO set, to obtain a first RO group corresponding to the first RO set, a second RO group corresponding to the second RO set, and a third RO group corresponding to the third RO set. In other words, ROs in the first RO group are an RO in the first RO set other than the fourth RO and the fifth RO in the second RO set, ROs in the second RO group are an RO in the second RO set other than the fifth RO and the eighth RO in the third RO set, and ROs in the third RO group are an RO in the third RO set other than the eighth RO and the fourth RO in the first RO set.

For another example, (b) in FIG. 31 shows a downward cyclic shift manner. Specifically, a fourth RO in a first RO set is moved to a position of a fifth RO in a second RO set, the fifth RO in the second RO set is moved to a position of an eighth RO in a third RO set, and the eighth RO in the third RO set is moved to a position of the fourth RO in the first RO set, to obtain a first RO group corresponding to the first RO set, a second RO group corresponding to the second RO set, and a third RO group corresponding to the third RO set. In other words, ROs in the first RO group are an RO in the first RO set other than the fourth RO and the eighth RO in the third RO set, ROs in the second RO group are an RO in the second RO set other than the fifth RO and the fourth RO in the first RO set, and ROs in the third RO group are an RO in the third RO set other than the eighth RO and the fifth RO in the second RO set.

Optionally, the step of the cyclic shift may be one group. Alternatively, the step of the cyclic shift may be another value greater than 1. For example, the step of the cyclic shift is two groups, three groups, or four groups. This is specifically determined based on an actual scenario, and is not limited herein.

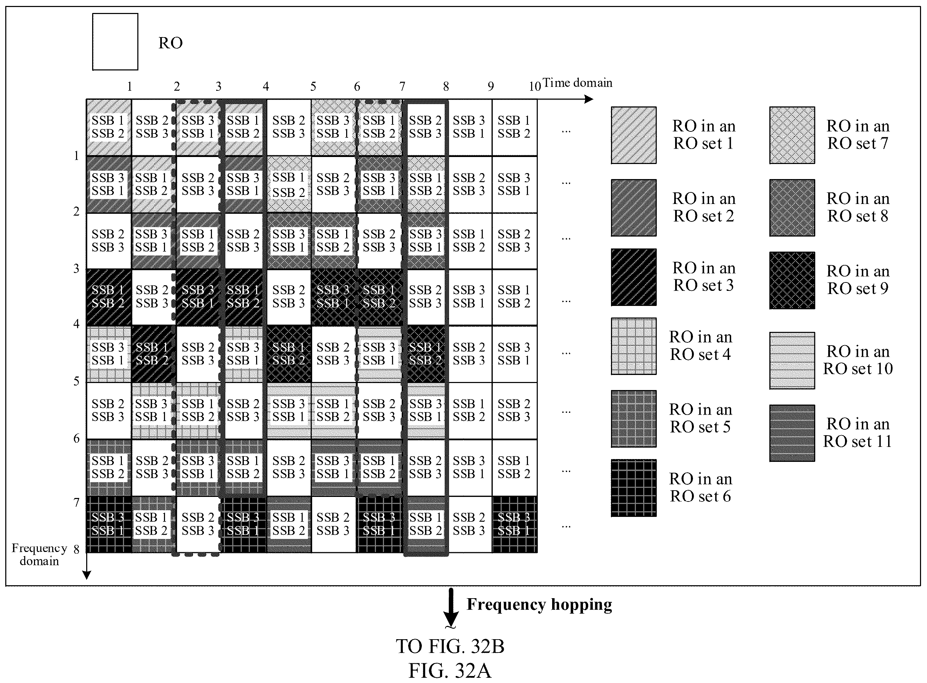

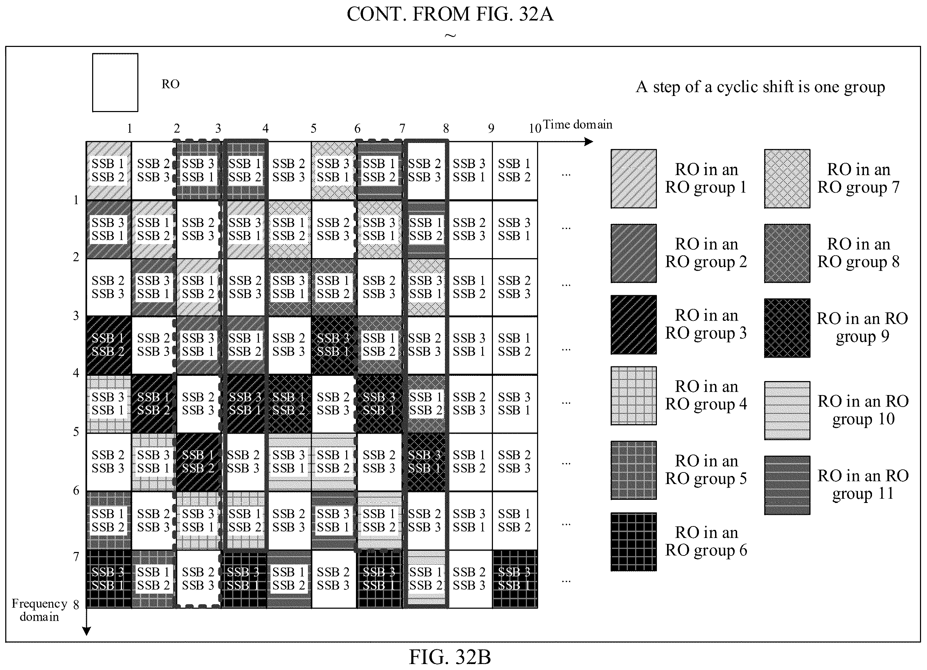

For example, FIG. 32A and FIG. 32B are still another diagram of an RO group according to an embodiment of this application. As shown in FIG. 32A and FIG. 32B, a quantity N of configured SSBs is equal to 3, the SSBs are an SSB 1, an SSB 2, and an SSB 3, a quantity of times of repetition sending (which is also referred to as a repetition level) is 4 (that is, an RO set or the RO group includes four ROs), and an RO quantity configured in frequency domain is equal to 8 (that is, msgl-FDM=8). FIG. 32A and FIG. 32B show a case in which one RO is associated with two SSBs. An SSB index in each grid in FIG. 32A and FIG. 32B represents the SSBs mapped to the RO (as shown in FIG. 32A and FIG. 32B, two SSBs are mapped to each RO). An RO-SSB mapping rule in FIG. 32A and FIG. 32B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 2), (3, 1), and (4, 1).

Four ROs included in an RO set 2 are ROs whose RO positions are (1, 2), (2, 3), (3, 3), and (4, 2).

Four ROs included in an RO set 3 are ROs whose RO positions are (1, 4), (2, 5), (3, 4), and (4, 4).

Four ROs included in an RO set 4 are ROs whose RO positions are (1, 5), (2, 6), (3, 6), and (4, 5).

Four ROs included in an RO set 5 are ROs whose RO positions are (1, 7), (2, 8), (3, 7), and (4, 7).

Four ROs included in an RO set 6 are ROs whose RO positions are (1, 8), (4, 8), (7, 8), and (10, 8).

Four ROs included in an RO set 7 are ROs whose RO positions are (5, 2), (6, 1), (7, 1), and (8, 2).

Four ROs included in an RO set 8 are ROs whose RO positions are (5, 3), (6, 3), (7, 2), and (8, 3).

Four ROs included in an RO set 9 are ROs whose RO positions are (5, 5), (6, 4), (7, 4), and (8, 5).

Four ROs included in an RO set 10 are ROs whose RO positions are (5, 6), (6, 6), (7, 5), and (8, 6).

Four ROs included in an RO set 11 are ROs whose RO positions are (5, 8), (6, 7), (7, 7), and (8, 8).

For example, the step of the cyclic shift is one group, where the RO set 1, the RO set 2, the RO set 3, the RO set 4, and the RO set 5 satisfy a cyclic shift condition. In this case:
An RO that is in the RO set 1 and that satisfies the condition may be cyclically shifted to the RO set 2.
An RO that is in the RO set 2 and that satisfies the condition may be cyclically shifted to the RO set 3.
An RO that is in the RO set 3 and that satisfies the condition may be cyclically shifted to the RO set 4.
An RO that is in the RO set 4 and that satisfies the condition may be cyclically shifted to the RO set 5.
An RO that is in the RO set 5 and that satisfies the condition may be cyclically shifted to the RO set 1.

Correspondingly, the RO set 7, the RO set 8, the RO set 9, the RO set 10, and the RO set 11 also satisfy the cyclic shift condition.

An RO that is in the RO set 7 and that satisfies the condition may be cyclically shifted to the RO set 8.

An RO that is in the RO set 8 and that satisfies the condition may be cyclically shifted to the RO set 9.

An RO that is in the RO set 9 and that satisfies the condition may be cyclically shifted to the RO set 10.

An RO that is in the RO set 10 and that satisfies the condition may be cyclically shifted to the RO set 11.

An RO that is in the RO set 11 and that satisfies the condition may be cyclically shifted to the RO set 7.

In addition, because the RO set 6 does not satisfy the cyclic shift condition in FIG. 32A and FIG. 32B, no cyclic shift is performed on the RO set 6. Based on this, 11 RO groups are obtained, as shown in FIG. 32A and FIG. 32B:
Four ROs included in an RO group 1 are ROs whose RO positions are (1, 1), (2, 2), (3, 3), and (4, 2).
Four ROs included in an RO group 2 are ROs whose RO positions are (1, 2), (2, 3), (3, 4), and (4, 4).
Four ROs included in an RO group 3 are ROs whose RO positions are (1, 4), (2, 5), (3, 6), and (4, 5).
Four ROs included in an RO group 4 are ROs whose RO positions are (1, 5), (2, 6), (3, 7), and (4, 7).
Four ROs included in an RO group 5 are ROs whose RO positions are (1, 7), (2, 8), (3, 1), and (4, 1).
Four ROs included in an RO group 6 are ROs whose RO positions are (1, 8), (4, 8), (7, 8), and (10, 8).
Four ROs included in an RO group 7 are ROs whose RO positions are (5, 2), (6, 1), (7, 2), and (8, 3).
Four ROs included in an RO group 8 are ROs whose RO positions are (5, 3), (6, 3), (7, 4), and (8, 5).
Four ROs included in an RO group 9 are ROs whose RO positions are (5, 5), (6, 4), (7, 5), and (8, 6).
Four ROs included in an RO group 10 are ROs whose RO positions are (5, 6), (6, 6), (7, 7), and (8, 8).
Four ROs included in an RO group 11 are ROs whose RO positions are (5, 8), (6, 7), (7, 1), and (8, 2).

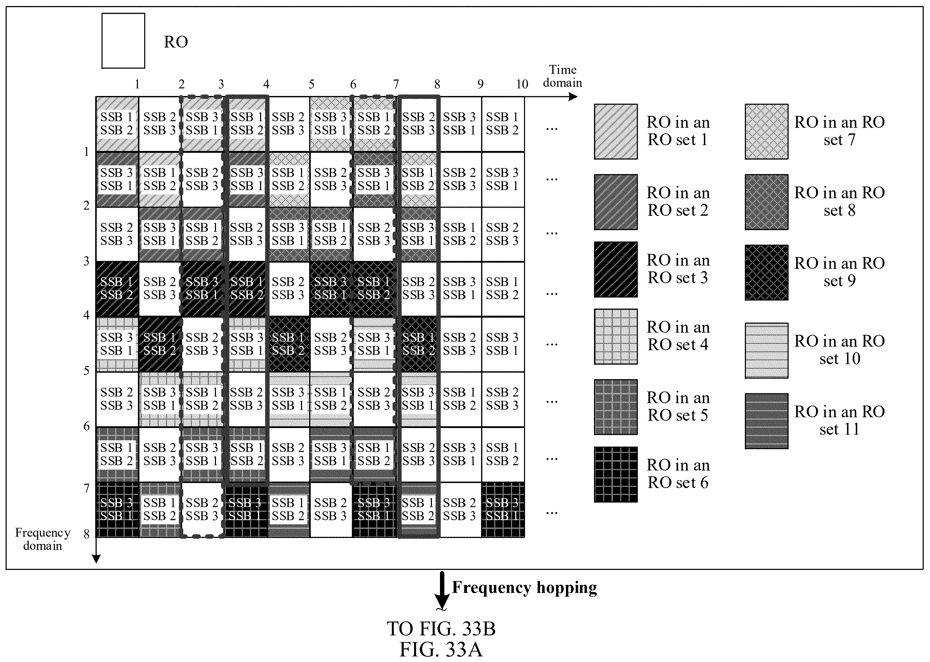

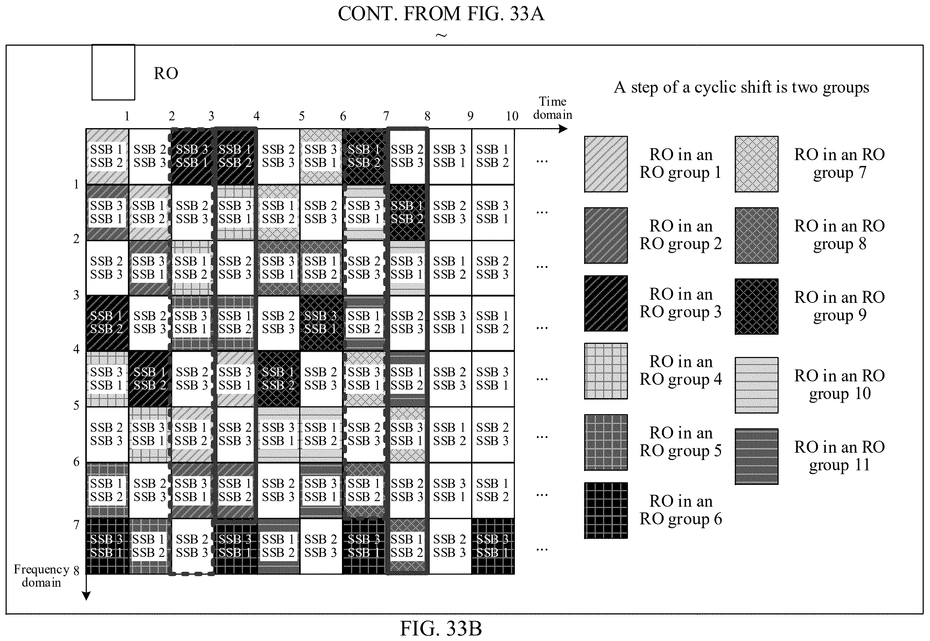

For another example, FIG. 33A and FIG. 33B are still another diagram of an RO group according to an embodiment of this application. As shown in FIG. 33A and FIG. 33B, a quantity N of configured SSBs is equal to 3, the SSBs are an SSB 1, an SSB 2, and an SSB 3, a quantity of times of repetition sending (which is also referred to as a repetition level) is 4 (that is, an RO set or the RO group includes four ROs), and an RO quantity configured in frequency domain is equal to 8 (that is, msgl-FDM=8). FIG. 33A and FIG. 33B show a case in which one RO is associated with two SSBs. An SSB index in each grid in FIG. 33A and FIG. 33B represents the SSBs mapped to the RO (as shown in FIG. 33A and FIG. 33B, two SSBs are mapped to each RO). An RO-SSB mapping rule in FIG. 33A and FIG. 33B is frequency domain first and then time domain. An RO position is defined as (t, f), where t represents a coordinate position in time domain, and f represents a coordinate position in frequency domain. ROs corresponding to the SSB 1 are used as an example.

Four ROs included in an RO set 1 are ROs whose RO positions are (1, 1), (2, 2), (3, 1), and (4, 1).

Four ROs included in an RO set 2 are ROs whose RO positions are (1, 2), (2, 3), (3, 3), and (4, 2).

Four ROs included in an RO set 3 are ROs whose RO positions are (1, 4), (2, 5), (3, 4), and (4, 4).

Four ROs included in an RO set 4 are ROs whose RO positions are (1, 5), (2, 6), (3, 6), and (4, 5).

Four ROs included in an RO set 5 are ROs whose RO positions are (1, 7), (2, 8), (3, 7), and (4, 7).

Four ROs included in an RO set 6 are ROs whose RO positions are (1, 8), (4, 8), (7, 8), and (10, 8).

Four ROs included in an RO set 7 are ROs whose RO positions are (5, 2), (6, 1), (7, 1), and (8, 2).

Four ROs included in an RO set 8 are ROs whose RO positions are (5, 3), (6, 3), (7, 2), and (8, 3).

Four ROs included in an RO set 9 are ROs whose RO positions are (5, 5), (6, 4), (7, 4), and (8, 5).

Four ROs included in an RO set 10 are ROs whose RO positions are (5, 6), (6, 6), (7, 5), and (8, 6).

Four ROs included in an RO set 11 are ROs whose RO positions are (5, 8), (6, 7), (7, 7), and (8, 8).

For example, the step of the cyclic shift is two groups, where the RO set 1, the RO set 2, the RO set 3, the RO set 4, and the RO set 5 satisfy a cyclic shift condition. In this case:
An RO that is in the RO set 1 and that satisfies the condition may be cyclically shifted to the RO set 3.
An RO that is in the RO set 2 and that satisfies the condition may be cyclically shifted to the RO set 4.
An RO that is in the RO set 3 and that satisfies the condition may be cyclically shifted to the RO set 5.
An RO that is in the RO set 4 and that satisfies the condition may be cyclically shifted to the RO set 1.
An RO that is in the RO set 5 and that satisfies the condition may be cyclically shifted to the RO set 2.

Correspondingly, the RO set 7, the RO set 8, the RO set 9, the RO set 10, and the RO set 11 also satisfy the cyclic shift condition.

An RO that is in the RO set 7 and that satisfies the condition may be cyclically shifted to the RO set 9.

An RO that is in the RO set 8 and that satisfies the condition may be cyclically shifted to the RO set 10.

An RO that is in the RO set 9 and that satisfies the condition may be cyclically shifted to the RO set 11.

An RO that is in the RO set 10 and that satisfies the condition may be cyclically shifted to the RO set 7.

An RO that is in the RO set 11 and that satisfies the condition may be cyclically shifted to the RO set 8.

Because the RO group 6 does not satisfy the cyclic shift condition in FIG. 33A and FIG. 33B, no cyclic shift is performed on the RO group 6.

Based on this, 11 RO groups are obtained, as shown in FIG. 33A and FIG. 33B:
Four ROs included in an RO group 1 are ROs whose RO positions are (1, 1), (2, 2), (3, 6), and (4, 5).
Four ROs included in an RO group 2 are ROs whose RO positions are (1, 2), (2, 3), (3, 7), and (4, 7).
Four ROs included in an RO group 3 are ROs whose RO positions are (1, 4), (2, 5), (3, 1), and (4, 1).
Four ROs included in an RO group 4 are ROs whose RO positions are (1, 5), (2, 6), (3, 3), and (4, 2).
Four ROs included in an RO group 5 are ROs whose RO positions are (1, 7), (2, 8), (3, 4), and (4, 4).
Four ROs included in an RO group 6 are ROs whose RO positions are (1, 8), (4, 8), (7, 8), and (10, 8).
Four ROs included in an RO group 7 are ROs whose RO positions are (5, 2), (6, 1), (7, 5), and (8, 6).
Four ROs included in an RO group 8 are ROs whose RO positions are (5, 3), (6, 3), (7, 7), and (8, 8).
Four ROs included in an RO group 9 are ROs whose RO positions are (5, 5), (6, 4), (7, 1), and (8, 2).
Four ROs included in an RO group 10 are ROs whose RO positions are (5, 6), (6, 6), (7, 2), and (8, 3).
Four ROs included in an RO group 11 are ROs whose RO positions are (5, 8), (6, 7), (7, 4), and (8, 5).

Optionally, in some feasible implementations, a quantity of ROs that are in the at least one fourth RO and whose time domain rankings are consecutive is less than or equal to Q, and a time domain ranking of the any RO in the first RO set is an appearance ranking, in time domain, of the any RO in the ROs included in the first RO set, where Q is a natural number less than the quantity of ROs in the first RO set.

Optionally, in some feasible implementations, a quantity of the at least one fourth RO is less than or equal to Q, and Q is a natural number less than the quantity of ROs in the first RO set.

It should be noted that the RO group in this application is determined by an SSB index and a repetition level. For example, the RO group shown in FIG. 13 is determined in a case of the SSB 1 and the repetition level, namely, 4.

For another example, the RO group shown in FIG. 15 is determined in a case of the SSB 1 and the repetition level, namely, 2.

For another example, the RO group shown in FIG. 16 is determined in a case of the SSB 1 and the repetition level, namely, 8.

Optionally, in this application, a definition may be that duration occupied by ROs in RO groups may be different. That is, RO quantities of ROs that are in the RO groups and that span the time domain may be different.

For example, as shown in FIG. 13, all duration occupied by the ROs in the RO group 1, the RO group 2, the RO group 4, the RO group 5, the RO group 7, and the RO group 8 is four ROs, and duration occupied by the ROs in the RO group 3 or the RO group 6 is five ROs.

For another example, as shown in FIG. 16, all duration occupied by the ROs in the RO group 1 and the RO group 2 is eight ROs, and duration occupied by the ROs in the RO group 3 is 11 ROs.

Optionally, in this application, a definition may alternatively be that duration occupied by ROs in RO groups needs to be the same. That is, RO quantities of ROs that are in the RO groups and that span the time domain need to be the same. For example, as shown in FIG. 14, if the duration occupied by the ROs in the RO groups is required to be the same, the RO group 3 and the RO group 6 need to be excluded. That is, if RO groups are defined by using the SSB 1, the repetition level, namely, 4, and the duration occupied by the ROs in the RO groups being the same, six RO groups (namely, the RO group 1, the RO group 2, the RO group 4, the RO group 5, the RO group 7, and the RO group 8 in FIG. 14) are included in FIG. 14. RO group indexes of the six RO groups are defined based on "an index of an RO group is determined in an order of frequency domain first and then time domain in position of M RO groups based on a position of the RO group". The RO group indexes of the six RO groups should be changed to an RO group 1, an RO group 2, an RO group 3, an RO group 4, an RO group 5, and an RO group 6.

For another example, as shown in FIG. 16, if the duration occupied by the ROs in the RO groups is required to be the same, the RO group 3 needs to be excluded. That is, if RO groups are defined by using the SSB 1, the repetition level, namely, 8, and the duration occupied by the ROs in the RO groups being the same, two RO groups (namely, the RO group 1 and the RO group 2 in FIG. 16) are included in FIG. 15. RO group indexes of the two RO groups are defined based on "an index of an RO group is determined in an order of frequency domain first and then time domain in position of M RO groups based on a position of the RO group". The RO group indexes of the two RO groups are still the RO group 1 and the RO group 2.

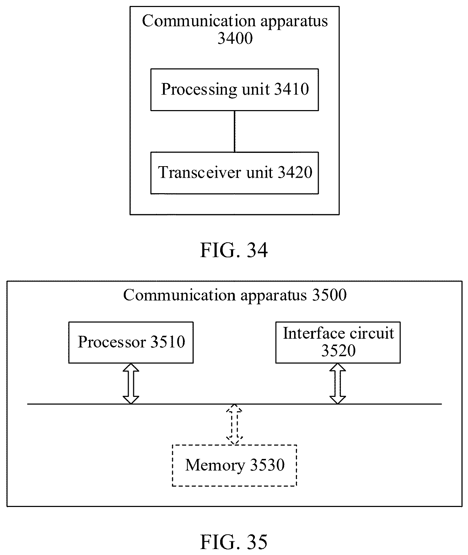

With reference to FIG. 34 and FIG. 35, the following describes in detail the communication apparatuses provided in this application.

It may be understood that, to implement functions in the foregoing embodiments, the communication apparatus includes corresponding hardware structures and/or software modules for performing the functions. A person skilled in the art should be easily aware that, with reference to the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 34 and FIG. 35 are diagrams of possible structures of communication apparatuses according to embodiments of this application. The communication apparatuses may be configured to implement functions of the terminal device or the access network device in the foregoing method embodiment. Therefore, the beneficial effects of the foregoing method embodiment can also be achieved. In embodiments of this application, the communication apparatus may be one of the terminal devices 120a to 120j shown in FIG. 1, may be the access network device 110a or 110b shown in FIG. 1, or may be a module (for example, a chip) used in the terminal device or the access network device.

As shown in FIG. 34, the communication apparatus 3400 includes a processing unit 3410 and a transceiver unit 3420. The communication apparatus 3400 is configured to implement the functions of the terminal device or the access network device in the method embodiment shown in FIG. 6.

When the communication apparatus 3400 is configured to implement the functions of the terminal device in the method embodiment shown in FIG. 6:
The transceiver unit 3420 is configured to receive a system information block SIB1 from an access network device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period; and
the processing unit 3410 is configured to determine a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In a possible implementation, when determining the first time period based on the SSB configuration period and/or the PRACH configuration period, the processing unit is configured to:
determine a second time period based on the SSB configuration period and/or the PRACH configuration period, where
the first time period includes one or more second time periods, and mapping between the N SSBs and the M RO groups is performed at least once in the second time period.

In a possible implementation, the first time period or the second time period is Z1 times the PRACH configuration period, Z1 is a value in a first value set, and steps between values included in the first value set are the same, where Z1 is a positive integer.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In a possible implementation, if a time domain resource for SSB transmission and a time domain resource for PRACH transmission overlap, and the SSB configuration period is less than or equal to the PRACH configuration period, Z1 is the value in the first value set.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In a possible implementation, the first time period is Z2 times a least common multiple of the SSB configuration period and the PRACH configuration period, where Z2 is a positive integer.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In a possible implementation, an RO at an earliest time domain position in the RO group is a first RO, an RO other than the first RO is a second RO, and a sum of distances between time domain positions of second ROs and the time domain position of the first RO is the smallest.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In a possible implementation, the M RO groups include a first RO group and a second RO group, and the processing unit is further configured to:
when a frequency domain position of a third RO in a first RO set is the same as a frequency domain position of at least one fourth RO in the first RO set, determine the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In a possible implementation, the processing unit 3410 is further configured to:
when a frequency domain position of a third RO in a first RO set is the same as a frequency domain position of at least one fourth RO in the first RO set, perform a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO.

When the communication apparatus 3400 is configured to implement the functions of the access network device in the method embodiment shown in FIG. 6:

The transceiver unit 3420 is configured to send a system information block SIB1 to a terminal device, where the SIB1 includes synchronization signal block SSB configuration information and physical random access channel PRACH configuration information, the SSB configuration information indicates a quantity N of configured SSBs and an SSB configuration period, and the PRACH configuration information indicates a PRACH configuration period; and
the processing unit 3410 is configured to determine a first time period based on the SSB configuration period and/or the PRACH configuration period.

Mapping is performed between the N SSBs and M random access occasion RO groups at least once in the first time period, and the mapping between the N SSBs and the M RO groups is the same in each of K consecutive first time periods; and one RO group includes at least two ROs, all ROs in the RO group are located at different time domain positions, and all the ROs in the RO group are associated with at least one same SSB, where N and M are integers greater than 0, and K is an integer greater than 1.

In a possible implementation, when determining the first time period based on the SSB configuration period and/or the PRACH configuration period, the processing unit is configured to:
determine a second time period based on the SSB configuration period and/or the PRACH configuration period, where
the first time period includes one or more second time periods, and mapping between the N SSBs and the M RO groups is performed at least once in the second time period.

In a possible implementation, the first time period or the second time period is Z1 times the PRACH configuration period, Z1 is a value in a first value set, and steps between values included in the first value set are the same, where Z1 is a positive integer.

In a possible implementation, the first time period or the second time period is Z1 times the PRACH configuration period, Z1 is a value in a first value set, and a value in the first value set is one or more of positive integers other than one or more numbers in 2^{y} and less than or equal to X, where X is an integer greater than or equal to 16, and y is an integer greater than or equal to 0 and less than or equal to 4.

In a possible implementation, if a time domain resource for SSB transmission and a time domain resource for PRACH transmission overlap, and the SSB configuration period is less than or equal to the PRACH configuration period, Z1 is the value in the first value set.

In a possible implementation, the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, where y is an integer greater than or equal to 0 and less than or equal to 4.

In a possible implementation, a time domain resource for SSB transmission and a time domain resource for PRACH transmission do not overlap.

In a possible implementation, a product of the PRACH configuration period and a largest value in the first value set is maximum duration of the first time period, the maximum duration of the first time period is greater than 160 ms, and the maximum duration of the first time period is an integer multiple of 80 ms or 160 ms.

In a possible implementation, the maximum duration of the first time period is 240 ms, 320 ms, 400 ms, 480 ms, 560 ms, 640 ms, 720 ms, 800 ms, or 960 ms.

In a possible implementation, a length of the second time period is shortest duration in all duration that satisfies that mapping between the N SSBs and the M RO groups is performed at least once.

In a possible implementation, the first time period is Z2 times a least common multiple of the SSB configuration period and the PRACH configuration period, where Z2 is a positive integer.

In a possible implementation, a time domain resource for SSB transmission and a time domain resource for PRACH transmission overlap.

In a possible implementation, a length of the first time period is shortest duration in all duration that satisfies that mapping between the N SSBs and the M RO groups is performed at least once and that the mapping between the N SSBs and the M RO groups is the same in each of the K consecutive first time periods.

In a possible implementation, an RO at an earliest time domain position in the RO group is a first RO, an RO other than the first RO is a second RO, and a sum of distances between time domain positions of second ROs and the time domain position of the first RO is the smallest.

In a possible implementation, all the ROs in the RO group have a same frequency domain ranking, where a frequency domain ranking of any RO is an appearance ranking of the any RO in one or more ROs in frequency domain, the one or more ROs have a same time domain position as the any RO, and the one or more ROs are associated with a same SSB as the any RO.

In a possible implementation, all the ROs in the RO group have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO group have a same mapping order of associated SSBs.

In a possible implementation, an index of one of the M RO groups is determined in an order of frequency domain first and then time domain in positions of the M RO groups based on a position of the RO group, and the position of the RO group is determined based on a position of at least one RO in the RO group.

In a possible implementation, the M RO groups include a first RO group and a second RO group, and the processing unit is further configured to:
when a frequency domain position of a third RO in a first RO set is the same as a frequency domain position of at least one fourth RO in the first RO set, determine the first RO group and the second RO group, where
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs included in the first RO set is the same as a quantity of ROs included in the second RO set, and duration occupied by the ROs in the first RO set is the same as duration occupied by the ROs in the second RO set.

In a possible implementation, the processing unit 3410 is further configured to:
when a frequency domain position of a third RO in a first RO set is the same as a frequency domain position of at least one fourth RO in the first RO set, perform a cyclic shift in frequency domain on ROs that are in the first RO set and V RO sets and that have a same time domain position as the at least one fourth RO, to obtain (V+1) RO groups, where
the M RO groups include the (V+1) RO groups; and the first RO set and the V RO sets satisfy the following conditions: the V RO sets and the first RO set are associated with at least one same SSB, a quantity of ROs included in each of the V RO sets is the same as a quantity of ROs included in the first RO set, and duration occupied by the ROs in each of the V RO sets is the same as duration occupied by the ROs in the first RO set, where V is an integer greater than 1.

In a possible implementation, a quantity of the at least one fourth RO is less than or equal to Q, and Q is a natural number less than the quantity of ROs in the first RO set.

In a possible implementation, a quantity of ROs that are in the at least one fourth RO and whose time domain rankings are consecutive is less than or equal to Q, and a time domain ranking of any RO in the first RO set is an appearance ranking, in time domain, of the any RO in the ROs included in the first RO set, where Q is a natural number less than the quantity of ROs in the first RO set.

In a possible implementation, an RO at an earliest time domain position in one RO set is a sixth RO, an RO other than the sixth RO is a seventh RO, and a sum of distances between time domain positions of seventh ROs and the time domain position of the sixth RO is the smallest.

In a possible implementation, all ROs in the RO set have a same frequency domain ranking, where a frequency domain ranking of any RO in the RO set is an appearance ranking of the any RO in one or more ROs in frequency domain, the one or more ROs have a same time domain position as the any RO, and the one or more ROs are associated with a same SSB as the any RO.

In a possible implementation, all the ROs in the RO set have the same frequency domain ranking, where the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

In a possible implementation, all the ROs in the RO set have a same mapping order of associated SSBs.

In a possible implementation, a time domain position of the third RO is earlier than the time domain position of the at least one fourth RO.

For more detailed descriptions of the processing unit 3410 and the transceiver unit 3420, refer to the related descriptions in the method embodiment shown in FIG. 6.

As shown in FIG. 35, the communication apparatus 3500 includes a processor 3510 and an interface circuit 3520. The processor 3510 is coupled to the interface circuit 3520. It may be understood that the interface circuit 3520 may be a transceiver or an input/output interface. Optionally, the communication apparatus 3500 may further include a memory 3530, configured to store instructions executed by the processor 3510, store input data needed by the processor 3510 to run the instructions, or store data generated after the processor 3510 runs the instructions.

When the communication apparatus 3500 is configured to implement the method shown in FIG. 6, the processor 3510 is configured to implement the functions of the processing unit 3410, and the interface circuit 3520 is configured to implement the functions of the transceiver unit 3420.

When the communication apparatus is the chip used in the terminal device, the chip in the terminal device implements the functions of the terminal device in the foregoing method embodiment. The chip in the terminal device receives, via another module (for example, a radio frequency module or an antenna) in the terminal device, information sent by an access network device to the terminal device. Alternatively, the chip in the terminal device sends information to another module (for example, a radio frequency module or an antenna) in the terminal device, where the information is sent by the terminal device to an access network device.

When the communication apparatus is the module used in the access network device, the module in the access network device implements the functions of the access network device in the foregoing method embodiment. The module in the access network device receives information from another module (for example, a radio frequency module or an antenna) in the access network device, where the information is sent by a terminal device to the access network device. Alternatively, the module in the access network device sends information to another module (for example, a radio frequency module or an antenna) in the access network device, where the information is sent by the access network device to a terminal device. The module in the access network device may be a baseband chip of the access network device, may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and write information to the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not for limiting the scope of embodiments of this application. Sequence numbers of the foregoing processes do not mean an execution order, and the execution order of the processes should be determined based on functions and internal logic of the processes.

## Claims

1. A communication method, comprising:
receiving a system information block SIB 1 from an access network device, wherein the SIB1 comprises synchronization signal block SSB configuration information and physical random access channel PRACH configuration information, the SSB configuration information indicates a quantity N of configured SSBs and an SSB configuration period, and the PRACH configuration information indicates a PRACH configuration period; and
determining a first time period based on the SSB configuration period and/or the PRACH configuration period, wherein
there is a mapping relationship between the N SSBs and M random access occasion RO groups in the first time period, the M RO groups appear at least once, the M RO groups comprise an RO group corresponding to each of the N SSBs and each of L PRACH repetition quantities, and mapping between the N SSBs and the M RO groups is the same in each of K consecutive first time periods; and one RO group comprises at least two ROs, all ROs in the RO group are located at different time domain positions, and all the ROs in the RO group are associated with at least one same SSB, wherein L, N, and M are integers greater than 0, and K is an integer greater than 1.

2. A communication method, comprising:
sending a system information block SIB1 to a terminal device, wherein the SIB1 comprises synchronization signal block SSB configuration information and physical random access channel PRACH configuration information, the SSB configuration information indicates a quantity N of configured SSBs and an SSB configuration period, and the PRACH configuration information indicates a PRACH configuration period; and
determining a first time period based on the SSB configuration period and/or the PRACH configuration period, wherein
there is a mapping relationship between the N SSBs and M random access occasion RO groups in the first time period, the M RO groups appear at least once, the M RO groups comprise an RO group corresponding to each of the N SSBs and each of L PRACH repetition quantities, and mapping between the N SSBs and the M RO groups is the same in each of K consecutive first time periods; and one RO group comprises at least two ROs, all ROs in the RO group are located at different time domain positions, and all the ROs in the RO group are associated with at least one same SSB, wherein L, N, and M are integers greater than 0, and K is an integer greater than 1.

3. The method according to claim 1 or 2, wherein the determining the first time period based on the SSB configuration period and/or the PRACH configuration period comprises:
determining a second time period based on the SSB configuration period and/or the PRACH configuration period, wherein
the first time period comprises one or more second time periods, and mapping between the N SSBs and the M RO groups is performed at least once in the second time period.

4. The method according to claim 3, wherein the first time period or the second time period is Z1 times the PRACH configuration period, Z1 is a value in a first value set, and steps between values comprised in the first value set are the same, wherein Z1 is a positive integer.

5. The method according to claim 3, wherein the first time period or the second time period is Z1 times the PRACH configuration period, Z1 is a value in a first value set, and a value in the first value set is one or more of positive integers other than one or more numbers in 2^{y} and less than or equal to X, wherein X is an integer greater than or equal to 16, and y is an integer greater than or equal to 0 and less than or equal to 4.

6. The method according to claim 4 or 5, wherein if a time domain resource for SSB transmission and a time domain resource for PRACH transmission overlap, and the SSB configuration period is less than or equal to the PRACH configuration period, Z1 is the value in the first value set.

7. The method according to claim 3, wherein the second time period is Z1 times the PRACH configuration period; and if a time domain resource for SSB transmission and a time domain resource for PRACH transmission overlap, and the SSB configuration period is greater than the PRACH configuration period, Z1 is a value in a second value set, and a value in the second value set is one or more numbers in 2^{y}, wherein y is an integer greater than or equal to 0 and less than or equal to 4.

8. The method according to claim 4 or 5, wherein a time domain resource for SSB transmission and a time domain resource for PRACH transmission do not overlap.

9. The method according to any one of claims 4 to 6, wherein a product of the PRACH configuration period and a largest value in the first value set is maximum duration of the first time period, the maximum duration of the first time period is greater than 160 ms, and the maximum duration of the first time period is an integer multiple of 80 ms or 160 ms.

10. The method according to claim 9, wherein the maximum duration of the first time period is 240 ms, 320 ms, 400 ms, 480 ms, 560 ms, 640 ms, 720 ms, 800 ms, or 960 ms.

11. The method according to any one of claims 3 to 8, wherein a length of the second time period is shortest duration in all duration that satisfies that mapping between the N SSBs and the M RO groups is performed at least once.

12. The method according to claim 1 or 2, wherein the first time period is Z2 times a least common multiple of the SSB configuration period and the PRACH configuration period, wherein Z2 is a positive integer.

13. The method according to claim 12, wherein a time domain resource for SSB transmission and a time domain resource for PRACH transmission overlap.

14. The method according to any one of claims 1 to 13, wherein a length of the first time period is shortest duration in all duration that satisfies the following conditions:
there is a mapping relationship between the N SSBs and the M random access occasion RO groups, and the M RO groups appear at least once; and the mapping between the N SSBs and the M RO groups is the same in each of the K consecutive first time periods.

15. The method according to any one of claims 1 to 14, wherein an RO at an earliest time domain position in the RO group is a first RO, an RO other than the first RO is a second RO, and a sum of distances between time domain positions of second ROs and the time domain position of the first RO is the smallest.

16. The method according to any one of claims 1 to 15, wherein all the ROs in the RO group have a same frequency domain ranking, wherein a frequency domain ranking of any RO is an appearance ranking of the any RO in one or more ROs in frequency domain, the one or more ROs have a same time domain position as the any RO, and the one or more ROs are associated with a same SSB as the any RO.

17. The method according to any one of claims 1 to 16, wherein all the ROs in the RO group have the same frequency domain ranking, wherein the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

18. The method according to claim 17, wherein all the ROs in the RO group have a same mapping order of associated SSBs.

19. The method according to any one of claims 1 to 18, wherein an index of one of the M RO groups is determined in an order of frequency domain first and then time domain in positions of the M RO groups based on a position of the RO group, and the position of the RO group is determined based on a position of at least one RO in the RO group.

20. The method according to any one of claims 1 to 15, wherein the M RO groups comprise a first RO group and a second RO group, and the method further comprises:
when a frequency domain position of a third RO in a first RO set is the same as a frequency domain position of at least one fourth RO in the first RO set, determining the first RO group and the second RO group, wherein
ROs in the first RO group is an RO in the first RO set other than the at least one fourth RO and at least one fifth RO in a second RO set, and ROs in the second RO group is an RO in the second RO set other than the at least one fifth RO and the at least one fourth RO in the first RO set; the at least one fifth RO has a same time domain position as the at least one fourth RO; and the first RO set and the second RO set satisfy the following conditions: the first RO set and the second RO set are associated with at least one same SSB, a quantity of ROs comprised in the first RO set is the same as a quantity of ROs comprised in the second RO set, and duration occupied by the ROs in the first RO set is the same as duration occupied by the ROs in the second RO set.

21. The method according to any one of claims 1 to 15, wherein the method further comprises:
when a frequency domain position of a third RO in a first RO set is the same as a frequency domain position of at least one fourth RO in the first RO set, performing a cyclic shift in frequency domain on ROs that are in the first RO set and V RO sets and that have a same time domain position as the at least one fourth RO, to obtain (V+1) RO groups, wherein
the M RO groups comprise the (V+1) RO groups; and the first RO set and the V RO sets satisfy the following conditions: the V RO sets and the first RO set are associated with at least one same SSB, a quantity of ROs comprised in each of the V RO sets is the same as a quantity of ROs comprised in the first RO set, and duration occupied by the ROs in each of the V RO sets is the same as duration occupied by the ROs in the first RO set, wherein V is an integer greater than 1.

22. The method according to claim 20 or 21, wherein a quantity of the at least one fourth RO is less than or equal to Q, and Q is a natural number less than the quantity of ROs in the first RO set.

23. The method according to claim 20 or 21, wherein a quantity of ROs that are in the at least one fourth RO and whose time domain rankings are consecutive is less than or equal to Q, and a time domain ranking of any RO in the first RO set is an appearance ranking, in time domain, of the any RO in the ROs comprised in the first RO set, wherein Q is a natural number less than the quantity of ROs in the first RO set.

24. The method according to any one of claims 20 to 23, wherein an RO at an earliest time domain position in one RO set is a sixth RO, an RO other than the sixth RO is a seventh RO, and a sum of distances between time domain positions of seventh ROs and the time domain position of the sixth RO is the smallest.

25. The method according to any one of claims 20 to 24, wherein all ROs in the RO set have a same frequency domain ranking, wherein a frequency domain ranking of any RO in the RO set is an appearance ranking of the any RO in one or more ROs in frequency domain, the one or more ROs have a same time domain position as the any RO, and the one or more ROs are associated with a same SSB as the any RO.

26. The method according to any one of claims 20 to 25, wherein all the ROs in the RO set have the same frequency domain ranking, wherein the frequency domain ranking of the any RO is the appearance ranking of the any RO in the one or more ROs in frequency domain, the one or more ROs have the same time domain position as the any RO, and all SSBs associated with the one or more ROs are the same as all SSBs associated with the any RO.

27. The method according to claim 26, wherein all the ROs in the RO set have a same mapping order of associated SSBs.

28. The method according to any one of claims 20 to 27, wherein a time domain position of the third RO is earlier than the time domain position of the at least one fourth RO.

29. A communication apparatus, comprising a unit or module configured to perform the method according to any one of claims 1 to 28.

30. A communication apparatus, comprising a processor and an interface circuit, wherein the interface circuit is configured to: receive a signal from a communication apparatus other than the communication apparatus and transmit the signal to the processor, or send a signal from the processor to the communication apparatus other than the communication apparatus; and the processor is configured to implement the method according to any one of claims 1 to 28 by using a logic circuit or by executing code instructions.

31. A computer-readable storage medium, wherein the storage medium stores a computer program or instructions; and when the computer program or the instructions are executed by a communication apparatus, the method according to any one of claims 1 to 28 is implemented.

32. A computer program product, comprising computer program code, wherein when the computer program code is run on a computer, the method according to any one of claims 1 to 28 is implemented.

33. A communication system, comprising a terminal device and an access network device, wherein the terminal device is configured to implement the method according to any one of claims 1 and 3 to 28, and the access network device is configured to implement the method according to any one of claims 2 to 28.
